# EUROPEAN PATENT APPLICATION

(11) **EP 4 557 723 A1**
(43) Date of publication of application: **21.05.2025**
(21) Application number: 23915515.3
(22) Date of filing: 01.06.2023
(51) Int. Cl.: H04N 13/161, G06T 15/00, H04N 19/597

(54) **SCENE DESCRIPTION FILE GENERATION METHOD AND DEVICE**

(30) Priority: 10.01.2023 CN 202310036790; 27.04.2023 CN 202310474240
(71) Applicant: Hisense Visual Technology Co., Ltd., Economic and Technical Development Zone Qingdao, Shandong 266555 (CN)
(72) Inventor: ZHANG, Wei, Qingdao, Shandong 266555 (CN); YANG, Fuzheng, Qingdao, Shandong 266555 (CN); YANG, Hejie, Qingdao, Shandong 266555 (CN); WANG, Zhikui, Qingdao, Shandong 266555 (CN); LI, Bin, Qingdao, Shandong 266555 (CN); ZHANG, Wen, Qingdao, Shandong 266555 (CN)
(74) Representative: Winter, Brandl - Partnerschaft mbB
(86) International application number: PCT/CN2023/097873
(87) International publication number: WO 2024/148751

(57) **Abstract**

Embodiments of the present disclosure provide a method for generating a scene description document and device, which relates to the technical field of video processing. The method comprises determining a type of a media file in a three-dimensional scene to be rendered; when a type of a target media file in the three-dimensional scene to be rendered is a Geometry-based Point Cloud Compression (G-PCC) encoded point cloud, generating a target media description module corresponding to the target media file based on description information of the target media file; and adding the target media description module into a media list of MPEG media of the scene description document in the three-dimensional scene to be rendered.

## Description

### CROSS-REFERENCE TO RELATED APPLICATION

The preset disclosure claims the priority of the Chinese application No. 202310036790.8 filed on January 10, 2023 and the priority of the Chinese application No. 202310474240.4 filed on April 27, 2023, the entire contents are incorporated herein by reference.

### TECHNICAL FIELD

Some embodiments of the present disclosure relates to the technical field of video processing, in particular to a method and apparatus for generating a scene description document.

### BACKGROUND

A point cloud is a set of massive three-dimensional points. The compression standards for the point cloud mainly include Geometry-based Point Cloud Compression (G-PCC) and video-based point cloud compression (V-PCC).

With the development of immersive media and applications, there are more and more types of immersive media. Currently, the mainstream immersive media primarily includes a point cloud, a three-dimensional Mesh, 6 DoF panoramic video, MPEG Immersive Video (MIV) and so on. In a three-dimensional scene, multiple types of immersive media always exist simultaneously. It requires that a render engine supports encoding and decoding of the various types of immersive media, and different types of render engines are generated according to different types and numbers of codecs supported. The render engines designed by different vendors support different types of media. In order to realize the cross-platform description of three-dimensional scenes including different types of media, Moving Picture Experts Group (MPEG) has initiated the development of an MPEG scene description standard with the standard number ISO/IEC 23090.14. The standard mainly addresses the cross-platform description of the MPEG media (including a codec developed by the MPEG, MPEG file formats, and MPEG transport mechanisms) in the three-dimensional scene. The extension made by the first version of ISO/IEC 23090-14 MPEG-I scene description standard has satisfied the critical requirements of the solution of the immersive scene description. However, the current scene description standard does not support the media file with a type of G-PCC encoded point cloud. The point cloud is an important form of three-dimensional media, and the G-PCC is one of the current mainstream point cloud compression algorithms. So there is great significance and value to support the media file with the type of G-PCC encoded point cloud in a scene description framework.

### SUMMARY

In a first aspect, some embodiments of the present disclosure provide a method for generating a scene description document, comprising: determining a type of a media file in a three-dimensional scene to be rendered; when a type of a target media file in the three-dimensional scene to be rendered is a Geometry-based Point Cloud Compression (G-PCC) encoded point cloud, generating a target media description module corresponding to the target media file based on description information of the target media file; and adding the target media description module into a media list of MPEG media of the scene description document in the three-dimensional scene to be rendered.

In a second aspect, some embodiments of the present disclosure provide an apparatus for generating a scene description document, comprising: a memory, configured to store a computer program; and a processor, configured to enable the apparatus for generating the scene description document to achieve the method for generating the scene description document as described in the first aspect when the computer program is called.

### DESCRIPTION OF DRAWINGS

FIG. 1 illustrates a schematic structural diagram of a description framework of immersive media according to some embodiments of the present disclosure;
FIG. 2 illustrates a schematic structural diagram of a scene description document according to some embodiments of the present disclosure;
FIG. 3 illustrates a schematic structural diagram of a scene description document according to another embodiments of the present disclosure;
FIG. 4 illustrates a schematic structural diagram of a G-PCC encoder according to some embodiments of the present disclosure;
FIG. 5 illustrates a schematic diagram of an LOD division process according to some embodiments of the present disclosure;
FIG. 6 illustrates a schematic diagram of a boost transformation process according to some embodiments of the present disclosure;
FIG. 7 illustrates a schematic diagram of an RAHT transformation process according to some embodiments of the present disclosure;
FIG. 8 illustrates a schematic structural diagram of a G-PCC decoder according to some embodiments of the present disclosure;
FIG. 9 illustrates a schematic structural diagram of a scene description document according to another embodiments of the present disclosure;
FIG. 10 illustrates a schematic structural diagram of a scene description document according to another embodiments; of the present disclosure
FIG. 11 illustrates a schematic diagram of a pipeline corresponding to a media file with a type of G-PCC encoded point cloud according to some embodiments of the present disclosure;
FIG. 12 illustrates a flowchart of a method for generating a scene description document according to some embodiments of the present disclosure;
FIG. 13 illustrates a flowchart of a method for parsing a scene description document according to some embodiments of the present disclosure;
FIG. 14 illustrates a flowchart of a method for processing a media file according to some embodiments of the present disclosure;
FIG. 15 illustrates a flowchart of a method for rendering a three-dimensional scene according to some embodiments of the present disclosure;
FIG. 16 illustrates a flowchart of a method for managing a buffer according to some embodiments of the present disclosure;
FIG. 17 illustrates an interaction flowchart of a method for rendering a three-dimensional scene according to some embodiments of the present disclosure.

### DETAILED DESCRIPTION

In order to make the purpose and embodiments of the present disclosure clearer, the exemplary embodiments of the present disclosure will be described clearly and completely in the following in conjunction with the accompanying drawings in the exemplary embodiments of the present disclosure, and it is clear that the exemplary embodiments described are only a portion of the embodiments of the present disclosure, and not all of the embodiments.

It should be noted that the brief descriptions of terms in this application are only for the purpose of facilitating the understanding of the embodiments described next, and are not intended to limit the embodiments of this application. Unless otherwise indicated, these terms should be understood in their ordinary and usual meaning.

The terms "comprising" and "having," and any variations thereof, are intended to cover, but are not exclusive of, inclusion, e.g., a product or apparatus comprising a series of components need not be limited to all of the components that are clearly listed, but may include components that are not clearly listed or that are inherent to those products or apparatus. other components that are not clearly listed or are inherent to those products or devices.

References in the specification to "some implementations", "some embodiments", etc. are intended to indicate that the described implementations or embodiments may include a particular feature, structure, or characteristic, but that not every embodiment may necessarily include that particular feature, structure, or characteristic. Furthermore, such phrases do not necessarily refer to the same implementation. Furthermore, when describing a particular feature, structure, or characteristic in connection with an embodiment, it is considered to be within the knowledge of those skilled in the art to implement such feature, structure, or characteristic in connection with other implementations (whether or not expressly described herein).

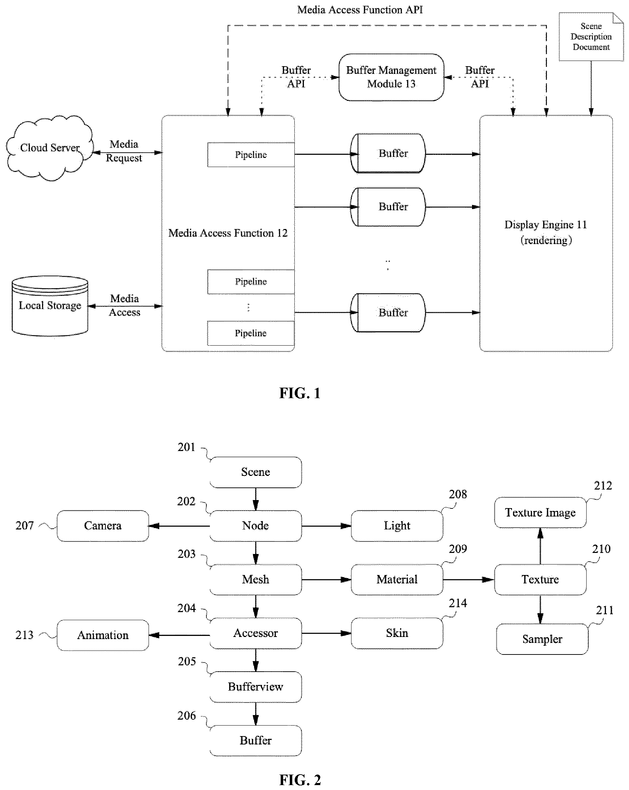

Some embodiments of the present disclosure relate to scene description of immersive media. Refferring to a scene description framework of the immersive media illustrated in FIG.1, in order to enable a display engine 11 to focus on media rendering, the scene description framework of the immersive media decouples the access and processing of a media file and rendering of the media file, and designs a media access function (MAF) 12 to be responsible for the access and processing function of the media file. At the same time, an Application Programming Interface (API) for the media access function is designed, and command interaction is performed between the display engine 11 and the media access function 12 through the media access function API. The display engine 11 may give commands to the media access function 12 through the media access function API, and the media access function may also request commands from the display engine 11 through the media access function API.

The general workflow of the scene description framework of the immersive media includes: 1). the display engine 11 obtains a scene description document provided by a service provider of the immersive media. 2). The display engine 11 parses the scene description document, obtains an access address of the media file, attribute information of the media file (a media type, codec parameters, etc.) and parameters or information such as a format requirement of the processed media file, and transmits all or part of information obtained by parsing the scene description document to the media access function 12 by calling the media access function API. 3). The media access function 12 requests to download a specified media file from a media resource server or obtains the specified media file locally based on the information transmitted by the display engine 11, establishes a corresponding pipeline for the media file, and then converts the media file from an encapsulated format to a format specified by the display engine 11 by processing the media file in the pipeline, such as decapsulating, decrypting, decoding, post-processing, etc. 4). The pipeline stores output data obtained by completing all the processing into a specified buffer. 5). Finally, the display engine 11 reads the fully processed data from the specified buffer., and renders the media file based on the data read from the buffer.

The document and functional module involved in the scene description framework of the immersive media are further described below.

### 1. Scene description document

In the workflow of the scene description framework of the immersive media, the scene description document is used to describe a structure (whose characteristics can be described by a three-dimensional Mesh), textures (for example, texture maps, etc.), animations (rotation and translation), the position of a camera's viewpoint (a rendering perspective), etc. of the three-dimensional scene.

In the related technical field, GL transport format 2.0 (glTF2.0) has been determined as a candidate format for the scene description document, which can satisfy the requirements of the MPEG-Immersive (MPEG-I) and 6Degrees of Freedom (6DoF) applications. For example, glTF 2.0 is described in the GL transport format (glTF) version 2.0 of Khronos Group available at github.com/KhronosGroup/glTF/tree/master/specification/2.0#specifying-extensions. Referring to FIG. 2, FIG. 2 is a schematic structural diagram of the scene description document in the glTF2.0 scene description standard (ISO/IEC 12113). As shown in FIG. 2, the scene description document in the glTF2.0 scene description standard includes, but is not limited to, a scene description module (scene) 201, a node description module (node) 202, a mesh description module (mesh) 203, an accessor description module (accessor) 204, a bufferview description module (bufferView) 205, a buffer description module (buffer) 206, a camera description module (camera) 207, a light description module (light) 208, a material description module (material) 209, a texture description module (texture) 210, a sampler description module (sampler) 211, and a texture image description module (image) 212, an animation description module (animation) 213, a skin description module (skin) 214.

The scene description module (scene) 201 in the scene description document shown in FIG. 2 is used to describe a three-dimensional scene contained in the scene description document. One scene description document may contain any number of three-dimensional scenes, and each three-dimensional scene is represented by one scene description module 201 respectively. The relationship between the scene description module 201 and the scene description module 201 is a parallel relationship, that is, the relationship between the three-dimensional scene and the three-dimensional scene is a parallel relationship.

The node description module 202 in the scene description document shown in FIG. 2 is a next level of description module of the scene description module 201, and is used to describe objects contained in the three-dimensional scene described by the scene description module 201. There may be many specific objects in each three-dimensional scene, such as virtual digital people, nearby three-dimensional objects, distant background pictures, etc. The scene description document may describe these specific objects through the node description module 202. Each node description module 202 may represent an object or a set of objects consisting of several objects. The relationship between the node description modules 202 reflects the relationship between various components in the three-dimensional scene described by the scene description module 201. The scene described by one scene description module 201 may include one or more nodes. The plurality of nodes may be in a parallel relationship or a hierarchical relationship, that is, there is a containing and contained relationship between the node description modules 202, which enables the plurality of specific objects to be described together, or enables the plurality of specific objects to be described separately. If a node is contained by another node, the contained node is called a children node (children), and for the children node, "children" is used instead of "node" for representation. By flexibly combining nodes with children nodes, it can form a hierarchical node structure to express rich scene content.

The mesh description module (mesh) 203 in scene description document shown in FIG. 2 is the next level of description module of the node description module 202, and is used to describe the characteristics of the objects represented by the node description module 202. The mesh description module 203 is a set consisting of one or more primitives, each of which may include an attribute, and the attributes of the primitives define the attributes that a graphics processing unit (GPU) needs to use during rendering. The attributes may include: position (three-dimensional coordinates), normal (normal vector), tangent (tangent vector), texcoord_n (texture coordinates), color_n (color: RGB or RGBA), joints_n (attributes associated with the skin description module 214), weights_n (attributes associated with the skin description module 214), and so on. Since the number of vertices contained in the mesh description module 203 is very large, and each vertex contains a variety of attribute information, it is not convenient to store a large amount of media data contained in the media file in the mesh description module 203 of the scene description document directly. Instead, the access address (Uniform Resource Identifier, URI) of the media file is indicated in the scene description document. When the data in the media file needs to be retrieved, it can be downloaded, so as to achieve the separation of the scene description document from the media file. Therefore, in general, the mesh description module 203 does not store the media data, but stores an index value of the accessor description module 204 corresponding to each attribute, and points to the corresponding data in a bufferView of the buffer through the accessor description module 204.

In some embodiments, the scene description document may also be fused with the media file to form a binary file, thus reducing the types and number of files.

In addition, there may be a mode syntax element in the primitives of the mesh description module 203. The mode syntax element is used to describe the topology of the graphics processing unit (GPU) when it draws a three-dimensional mesh, such as mode = 0 for scatter point, mode = 1 for line, mode = 4 for triangle, etc.

As an example, the following is a JSON example of the mesh description module 203:

```
    {
         "primitives": [
              {
                   "attributes": {
                    "position": 1, //points to the accessor description module with index 1,
                    describing the vertex coordinate data
                    "color _0": 2//points to
the accessor description module with index 2, describing
                    the vertex color data
                       },
                   "mode": 0//represents the topology of the mesh being a scatter point
     } ] }
```

In the above-described mesh description module 203, the value of "position" is 1, which points to the accessor description module 204 with index 1, and finally points to the vertex coordinate data stored in the buffer; the value of "color_0" is 2, which points to the accessor description module 204 with index 2, and finally points to the color data stored in the buffer.

The definition of syntax elements in the attributes (mash.primitives.attributes) of the primitives of the mesh description module 203 is as shown in Table 1 below:

**Table 1**

| Name of Syntax Element | Accessor Type | Data Type | Description |
|---|---|---|---|
| Position | VEC3 | 5126 | Unitless XYZ vertex position coordinates |
| Normal Vector (normal) | VEC3 | 5126 | Normalized XYZ vertex normal vector |
| Tangent Vector (tangent) | VEC4 | 5126 | XYZW: the tangent vector of the vertex, wherein XYZ is the normalized vertex coordinate, and the value of W is +1 or -1, indicating the direction of the tangent line. |
| Texture Coordinate (texcoord n) | VEC2 | 5126, 5121, 5123 | ST texture coordinates |
| Color Value (color_n) | VEC3 | 5126, 5121, 5123 | Vertex color in RGB or RGBA form. |
| | VEC4 | | |
| Joint (joints_n) | VEC4 | 5121, 5123 | Attributes related with Skin |
| Weights (weights_n) | VEC4 | 5121, 5123 | Attributes related with Skin |

The definition of types of accessors indexed in the attributes (mash.primitives.attributes) of the primitives of the mesh description module 203 is as shown in Table 2 below:

**Table 2**

| Type of Accessor | Number of Component Channel | Connotation |
|---|---|---|
| SCALAR | 1 | Scalar |
| VEC2 | 2 | Two-dimensional vector |
| VEC3 | 3 | Three-dimensional vector |
| VEC4 | 4 | Four-dimensional vector |
| MAT2 | 4 | Two-dimensional matrix |
| MAT3 | 9 | Three-dimensional matrix |
| MAT4 | 16 | Four-dimensional matrix |

The definition of the data types in the attributes (mash.primitives.attributes) of the primitives of the mesh description module 203 is as shown in Table 3 below:

**Table 3**

| Type Code | Data Type | Signed or Unsigned | Bit Number |
|---|---|---|---|
| 5120 | signed byte | signed | 8 |
| 5121 | unsigned byte | unsigned | 8 |
| 5122 | signed short | signed | 16 |
| 5123 | unsigned short | unsigned | 16 |
| 5125 | unsigned int | unsigned | 32 |
| 5126 | float | signed | 32 |

The accessor description module (accessor) 204, the bufferview description module (bufferView) 205 and the buffer description module (buffer) 206 in the scene description document shown in FIG. 2 jointly implement a layer-by-layer refined index of the data of the media file by the mesh description module 203. As described above, the mesh description module 203 does not store specific media data, but stores the index value of the corresponding accessor description module 204, and accesses the specific media data by the accessor described by the accessor description module 204 indexed by the index value. The indexing process of the media data by the mesh description module 203 includes: firstly, the index value declared by the syntax element in the mesh description module 203 points to the corresponding accessor description module 204; then, the accessor description module 204 points to the corresponding bufferview description module 205; and finally, the bufferview description module 205 points to the corresponding buffer description module 206. The buffer description module 206 in the scene description document shown in FIG. 2 is mainly responsible for pointing to the corresponding media file, includes the URI of the media file, the byte length of the media file, and other information, and is used to describe the buffer that caches the media data of the media file. One buffer can be divided into one or more bufferviews. The bufferview description module 205 is mainly responsible for partially accessing the media data in the buffer, includes the start byte offset of the access data, the byte length of the access data, etc. Through the bufferview description module 205 and the buffer description module 206, the partial access to the data of the media file may be achieved. The accessor description module 204 is mainly responsible for adding additional information to the partial data delimited in the bufferview description module 205, such as the data type, the number of data of the type, the numerical range of the data of the type, and so on. Such a three-layer structure can realize the function of extracting partial data from a media file, which may be conducive to the accurate access of the data and the reduction of the number of media files.

The camera description module (camera) 207 in the scene description document shown in FIG. 2 is the next level of description module of the node description module 202 and is used to describe a viewpoint, a viewing angle, and other infromation related to visual viewing when a user views an object described by the node description module 202. In order to enable the user to be in the three-dimensional scene and be able to view the three-dimensional scene, the node description module 202 may also point to the camera description module 207 and describe, through the camera description module 207, the viewpoint, the viewing angle, and other information related to visual viewing when the user views the object described by the node description module 202.

The light description module (light) 208 in the scene description document shown in FIG. 2 is the next level of description module of the node description module 202 and is used to describe the light intensity, ambient light color, light direction, light source position, and other information related to light of the object described by the node description module 202.

The material description module 209 in the scene description document shown in FIG. 2 is a next level of description module of the mesh description module 203, and is used to describe the material information of the three-dimensional object described by the mesh description module 203. When describing the three-dimensional object, it cannot improve the realism of the three-dimensional object by describing the geometric information of the three-dimensional object only by the mesh description module 203 or monotonously defining the color and/or position of the three-dimensional object. It requires attaching more information to the surface of the three-dimensional object. For three-dimensional model techniques, such as three-dimensional mesh models, the process can also be simply referred to as texture mapping or texture adding, etc. The scene description document in the glTF2.0 scene description standard also follows the description module. The material description module 209 defines the material using a set of common parameters to describe material information of geometric objects that appear in the three-dimensional scene. The material description module 209 generally uses a metallic-roughness model (metallic-roughness) to describe the material of a virtual object, and the material characteristic parameters based on the metallic-roughness model are represented by Physically Based-Rendering (PBR) materials used widely. Based on this, the metallic-roughness material attributes of the object are described in detail by the material description module 209, and the definition of the syntax elements in the material description module 209 is as shown in Table 4:

**Table 4**

| Name of Syntax Element | Data Type | Description |
|---|---|---|
| Name | String | Define the name of the material |
| Metallic-Roughness (PbrMetarial Roughness) | Array | A set containing many sub-syntax elements, and used to describe the metallic-roughness of a virtual object |

In some embodiments, the definition of the syntax elements in the metallic-roughness (material.PbrMetarialRoughness) of the material description module 209 is as shown in Table 5 below:

**Table 5**

| Name of Syntax Element | Data Type | Description |
|---|---|---|
| Basecolor | String | Define the basecolor of the material |
| Metalness | Array/Integer | Define the metalness of the material; and the range of the value is from 0.0 (non-metallic) to 1.0 (metallic) |
| Roughness | Array/Integer | Define the roughness of the material; the range of the value is from 0.0 (smooth) to 1.0 (rough) |

The values of each attribute in the metallic-roughness of the material description module 209 can be defined using factors and/or textures (such as baseColorTexture and baseColorFactor). If no texture is given, it can be determined that the values of all corresponding texture components in the material model are 1.0. If there are both factors and textures, the factor value acts as a linear multiplier for the corresponding texture value. Texture bindings are defined by the index of the texture object and the optional texture coordinate index.

As an example, the following is a JSON example of the material description module 209:

```
              {
              "name": "gold"//Material name is "gold"
              "PbrMetarialRoughness": {
                   "basecolorFactor": [1.000,0.766,0.336,1.0]// sRGB value of basecolor
                   "metalnessFactor": 1.0 //value of metalness
                   "roughnessFactor": 0.0// value of roughness
                       }, }
```

By parsing the above material description module 209, it is possible to determine the current material being named "gold" through the material name syntax element and its value ("name": "gold"); and then determine the basecolor of the current material with a value of [1.000,0.766,0.336,1.0]through the color syntax element and its value ("basecolorFactor": [1.000,0.766,0.336,1.0]) of the pbrMetallicRoughness array; and determine the metalness value of the current material with a value of "1.0" through the metalness syntax element and its value ("metalness Factor": 1.0) of the pbrMetallicRoughness array; and determine the roughness value of the current material with a value of "0.0" through the roughness syntax element and its value ("roughnessFactor": 0.0) of the pbrMetallicRoughness array.

The texture description module 210 in the scene description document shown in FIG. 2 is a next level of description module of the material description module 209 and is used to describe the colors of the three-dimensional objects described by the material description module 209 and other characteristics used in the material definition. Textures are an important aspect for giving an object a real appearance. The main color of the object and other characteristics used in the material definition may be defined through the textures so as to accurately describe the appearance of the rendered object. The material itself may define a plurality of texture objects, which can be used as textures of virtual objects during rendering and be used to encode different material attributes. The texture description module 210 references one sampler description module (sampler) 211 and one texture image description module (image) 212 by using the sampler syntax element and the texture image syntax element index. The texture image description module 212 containsa Uniform Resource Identifier (URI), which links to the texture image or binary package actually used by the texture description module 210. The sampler description module 211 is used to describe the filtering and packaging modes of the texture. The respective responsibilities and collaborations of the material description module 209, the texture description module 210, the sampler description module 211 and the texture image description module 212 include: the material description module 209 and the texture description module 210 jointly define the color and physical information of the surface of the object. The sampler description module 211 defines how to paste the texture image to the surface of the object. The texture description module 210 specifies the sampler description module 211 and the texture image description module 212. Textures are added through the texture image description module 212, while the texture image description module 212 identifies and indexes using URIs and accesses data using the accessor description module 204. The sampler description module 211 implements specific adjustments and packaging of the texture. The definition of the syntax elements in the texture description module 210 is as shown in Table 6 below:

**Table 6**

| Name of Syntax Element | Data Type | Description |
|---|---|---|
| Sampler (sample) | Integer | Index a certain sampler in a sampler array with defined attributes |
| Source (source) | Integer | Specify the source of image information of the material texture |
| Texture Coordinate (Texcoord) | Integer | The index of the set of texture coordinate attributes of the texture used for texture coordinate mapping, defaulting to 0 when Texcoord is undefined |

In some embodiments, the definition of the syntax elements in the sample (texture.sample) of the texture description module 210 is as shown in Table 7 below:

**Table 7**

| Name of Element | Data Type | Description |
|---|---|---|
| Magfilter | Integer | Define the filtering mode of a texture when a texture unit (texel) covers a plurality of pixel points. The filtering mode includes: |
| | | 1. Linear filtering (Linear): for each requested texture unit, the weighted sum of a plurality of neighboring texture units is calculated; and |
| | | 2. Nearest point filtering (Nearset): the texture unit with the smallest Manhattan distance is used. |
| Minfilter | Integer | Define the filtering mode of a texture when a texture unit is not enough to cover a single pixel point. The filtering mode includes: |
| | | 1. Linear filtering (Linear); |
| | | 2. Nearest point filtering (Nearset); |
| | | 3. Nearest-mipmap-nearest: the nearest multilevel asymptotic texture (Mipmap) is selected, and the nearest-point filtering is performed; |
| | | 4, Linear-mipmap-nearest: the nearest Mipmap is selected, and the linear filtering is performed; |
| | | 5, Nearest-mipmap-linear: linear interpolation is performed between Mipmap layers, and nearest-point filtering is performed; and |
| | | 6, Linear-mipmap-linear: linear interpolation is performed between Mipmap, and linear filtering is performed. |
| Wrap | Integer | Define how texture coordinates beyond the range [0,1] will be wrapped. |
| | | A texture coordinate value of (0.0,0.0) points to the beginning of the first (upper left) image pixel, while a texture coordinate value of (1.0,1.0) points to the end of the last (lower right) image pixel. Modes include: |
| | | 1. repeat mode (repeat): only the fractional part of the texture coordinates is used, 2.2 maps to 0.2, and -0.4 maps to 0.6; |
| | | 2. mirror repeat mode (mirrorrepeat): the same as the repeat mode, but when the integer part is an odd number, the direction is flipped, 2.2 maps to 0.2, and -0.4 is considered as 0.4; and |
| | | 3. clamp-to-edge mode (clamptoedge): if the texture coordinate is greater than 1, it will be intercepted to 1, and if the texture coordinate is less than 0, it will be intercepted to 0. |

For example, the following is a JSON example of the material description module 209, the texture description module 210, the sampler description module 211 and the texture image description module 212:

```
    "materials": [ {
         "PbrMetarialRoughness": {
    "basecolorTexture":{
    "index": 0//Describing the color attributes of three-dimensional objects using texture images
    },
                   "metalnessFactor": 0.0 //Metalness value, non-metallic
                   "roughnessFactor": 0.0//Roughness value, rough
    }
    } ],
    "texture": [ {
    "sampler": 0, //texture sampler index, selecting the first texture sampler
    "source": 0, //texture image resource index, selecting the first texture image resource
    } ],
    "images": [ {
    "uri": "test texture"//access address of the texture image
    } ],
    "samplers": [ {
    "magFilter": 9729//enlarging a texture image selects nearest point mode
    "minFilter": 9987//minifying a texture image selects a Linear-mipmap-linear mode
    "wrasP": 33648//horizontal texture wrapping
    "wrasPT": 33648//vertical texture wrapping
    } ],
```

The animation description module 213 in the scene description document shown in FIG. 2 is a next level of description module of the node description module 202, and is used to describe animation information added to objects described by the node description module 202. In order that the object represented by the node description module 202 is not limited to a static state, an animation may be added to the object described by the node description module 202. Thus the description level of the animation description module 213 in the scene description document is specified by the node description module 202. That is, the animation description module 213 is the next level of description module of the node description module 202, and the animation description module 213 also has a corresponding relationship with the mesh description module 203. The animation description module 213 can describe the animation in three ways: position movement, angle rotation, and size scaling, while may specify a start and end time of the animation and the implementation way of the animation. For example, when an animation is added to the mesh description module 203 representing a three-dimensional object, the three-dimensional object represented by the mesh description module 203 may complete the specified animation process through the fusion of position movement, angle rotation, and size scaling within a specified time window.

The skin description module 214 in the scene description document shown in FIG. 2 is a next level of description module of the node description module 202, and is used to describe a movement cooperation relationship between bones added to the nodes described by the node description module 202 and a mesh representing surface information of the objects. When the nodes described by the node description module 202 represent objects with large degrees of freedom of movement, such as people, animals, and machinery, in order to optimize the movement performance of these objects, the interiors of the objects may be filled with bones, and the three-dimensional mesh representing the surface information of the objects become a skin conceptually at this time. The description level of the skin description module 214 is specified by the node description module 202. That is, the skin description module 214 is the next level of description module of the node description module 202, and the skin description module 214 has a corresponding relationship with the mesh description module 203. A more realistic movement effect may be achieved by driving the mesh on the surfaces of the objects through the movement of the bones and combining the simulation and bionic design. For example, when a human hand makes a fist clenching action, the skin on the surface will change with the internal bones, such as stretching and covering. At this time, a realistic simulation of the action may be achieved by pre-filling a hand model with bones and then defining the collaborative relationship between the bones and the skin.

The various description modules of the scene description document in the above glTF2.0 scene description standard only have the most basic ability to describe three-dimensional objects. There are problems that it cannot support dynamic three-dimensional immersive media, audio files and scene updates. glTF also declares an optional extended object attribute (extensions) under each of the object attributes, and allows extensions to be used in any part for better functionality. The scene description module (scene), node description module (node), mesh description module (mesh), accessor description module (accessor), buffer description module (buffer), animation description module (animation), etc., and the internally defined syntax elements all have optional extended object attributes for supporting certain functional extensions on the basis of glTF2.0.

At present, the rendering engines designed by different vendors support different media types. In order to achieve cross-platform description of three-dimensional scenes including different types of media, the Moving Picture Experts Group (MPEG) has initiated the development of the MPEG scene description standard, the standard number is ISO/IEC 23090-14. The standard mainly solves the cross-platform description problem of MPEG media (including codecs developed by the MPEG, MPEG file formats, and MPEG transport mechanisms) in three-dimensional scenes.

The MPEG #128 meeting resolution develops the MPEG-I scene description standard based on glTF2.0 (ISO/IEC 12113). At present, the first version of the MPEG scene description standard has been developed and is in the FDIS voting stage. Based on the first version of the standard, the MPEG scene description standard adds corresponding extensions to address the unfulfilled requirements in the cross-platform description of three-dimensional scenes, including interactivity, AR anchoring, user and avatar representation, haptic support, and extended support for immersive media codecs.

The first version of the MPEG scene description standard has been developed, which mainly formulates the following contents:
1) the MPEG scene Description Standard defines a scene description document format for describing immersive three-dimensional scenes, and the format combines the content of the original glTF2.0 (ISO/IEC 12113) and makes a series of extensions on the basis.
2) MPEG scene description defines a scene description framework and an application program interface (API) for inter-module collaboration, which realizes the decoupling of the acquisition and processing process of immersive media from the media rendering process, and is beneficial to the optimization of the adaptation of immersive media to different network conditions, the partial acquisition of immersive media files, the access to different levels of detail for immersive media, the adjustment of content quality and other aspects. Decoupling the acquisition and processing process of immersive media from the immersive media rendering process is the key for achieving cross-platform description of three-dimensional scenes.
3) MPEG Scene Description proposes a series of extensions based on the International Standardization Organization Base Media File Format (ISOBMFF) (ISO/IEC 14496-12) for the transport of immersive media content.

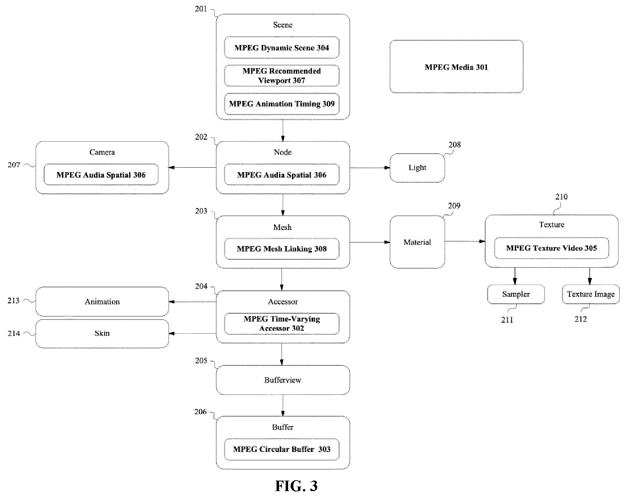

Referring to FIG.3, the scene description document is extended in the MPEG scene description standard based on the scene description document shown in FIG. 2. Compared with the scene description document in the glTF2.0 scene description standard (the scene description document shown in FIG. 2, the extensions of the scene description document in the MPEG scene description standard can be divided into two sets:
The first set of extensions includes: MPEG media (MPEG_media) 301, an MPEG time-varying accessor (MPEG_accessor_timed) 302 and an MPEG circular buffer (MPEG_buffer_circular) 303. The MPEG media 301 is a stand-alone extension for referring to an external media source; the MPEG time-varying accessor 302 is an extension of the accessor level and is used to access time-varying media; and the MPEG circular buffer is an extension of the buffer level and is used to support a circular buffer. The first set of extensions provides a basic description and format of the media in the scene, and satisfies the basic requirements for describing time-varying immersive media in the scene description framework. Wherein the MPEG time-varying accessor (MPEG_accessor_timed) 302 is used to access the time-varying media. Since the time-varying media is not supported in the scene description standard of glTF2.0, it is necessary to update the scene description document under the scene description standard of glTF2.0 when the media data is required to change over time. For example, in the scene description standard of glTF2.0, the texture image of the object surface needs to be updated so that the texture image of the object surface can change over time. Therefore, the scene description document under the scene description standard of glTF2.0 must be updated. Updating the scene description document frequently requires parsing, processing and transport of the scene description document frequently, which increases the performance overhead in the three-dimensional scene rendering process. Based on this point, MPEG designs the MPEG time-varysing accessor (MPEG_accessor_timed) 302 and the parameters in the MPEG time-varying accessor can change with time to change the access mode of the media data, which achieves the accessed data changing with time, thus avoiding frequent parsing, processing, and transport of the scene description document.

The second set of extensions includes: MPEG_scene_dynamic 304, MPEG_texture_video 305, MPEG_audio_spatial 306, MPEG_viewport_recommended 307, MPEG_mesh_linking 308 and MPEG_animation_timing 309. MPEG_scene_dynamic 304 is a scene-level extension for supporting dynamic scene updates; MPEG_texture_video 305 is a texture-level extension for supporting textures with a video form; MPEG_audio_spatial 306 is a node-level and camera-level extension for supporting spatial 3D audio; MPEG_viewport_recommended 307 is a scene-level extension for supporting description of a recommended viewport in two-dimensional display; MPEG_mesh_linking 308 is a mesh-level extension for supporting linking two meshes and providing mapping information; and MPEG_animation_timing 309 is a scene-level extension for supporting control of the animation timeline.

Each of the above extensions will be explained in more detail below:
MPEG media in the MPEG Scene Description document is used to describe the types of media files and to provide the necessary instructions for media files with the MPEG type, which is convenient to access these media files with the MPEG type subsequently. The definition of the first-level syntax elements of the MPEG media is shown in Table 8 below:

**Table 8**

| Name of Syntax Element | Data Type | Def ault | Usag e | Description |
|---|---|---|---|---|
| Media | Array | N/A | Mand atory | A set including many sub-syntax elements, and used to describe the external media referenced in the scene |
| | | | | |

The definition of the syntax elements in the Media List of MPEG Media (MPEG_media.media) is shown in Table 9 below:

**Table 9**

| Name of Syntax Element | Data Type | D efault | Usag e | Description |
|---|---|---|---|---|
| Media Name (name) | Strin g | N/ A | Optio nal | Customized media name |
| Start Time (startTime) | Num ber | 0 | Optio nal | Starting time; providing the time for starting rending the time-varying media to the display engine, in seconds. If the value is 0, it means to render the current scene. There should be at least one of startTime and autoplay in the scene description document |
| Offset of Start Time (startTimeOffset) | Num ber | 0 | Optio nal | Start Offset Time; indicating the offset of the start time of the media source, in seconds. A value of 0 indicates that the start time is the start time of the media source. |
| Offset of End Time (endTimeOffset) | Num ber | N/ A | Optio nal | End Offset Time; indicating the offset of the end time of the media source, in seconds. If the parameter is not present, the end time is the end time of the media source. |
| Autoplay (autoplay) | Bool ean | Tr ue | Optio nal | Whether or not to autoplay; used to indicate whether or not to start playback as soon as the media are ready. There should be at least one of startTime and autoplay in the scene description document. Setting the value of Autoplay to true, all media should be rendered at the same time. |
| Autoplay Group (autoplayGroup) | Integ er | N/ A | Optio nal | Autoplay Group; all media with the same autoplayGroup should start playing synchronously when all autoplayGroup media are ready. The autoplayGroup identifier is allowed only when the value of autoplay is set to true. |
| Play In a Loop (loop) | Bool ean | Fa lse | Optio nal | Whether or not to play in a loop; used to indicate whether or not to start playback again each time after the media finishes playing. When the media source is looping, the value of the timestamp in the buffer should increase continuously, i.e., the playback duration of the media is accumulating continuously as the media is played in a loop. |
| Control (controls) | Bool ean | Fa lse | Optio nal | Whether or not to display the media controls; used to indicate whether or not to display the media controls, such as play and stop buttons. |
| Alternatives (alternatives) | Arra y | N/ A | Mand atory | Alternatives; used to specify the set of sub-syntax elements of the alternatives of the media, the client can choose the syntax elements included in the alternatives according to ownrequirements. |

The definition of the syntax elements in alternative of the Media List of the MPEG Media (MPEG_media.media) is shown in Table 10 below:

**Table 10**

| Name of Syntax Element | Data Type | De fault | Usag e | Description |
|---|---|---|---|---|
| Media Type (mimeType) | Strin g | N/ A | Mand atory | Media type; used to specify the media file resource type. Configuration parameters defined in IETFRFC6381 may be part of the media resource type and are used to specify the configuration of a media container. |
| Uniform Resource Identifier (uri) | Strin g | N/ A | Mand atory | Uniform Resource Identifier; used to specify the uri of the media. A relative path is associated with the gltf file. If the media has tracks, the last part of the uri (i.e., the stream identifier) is provided by tracks. |
| Tracks Array (tracks) | Arra y | 0 | Optio nal | Tracks array; listing the set of components to be used that refer to the the media source. It can contain a track index of an ISOBMFF file, Dynamic Adaptive Streaming Over HTTP (DASH), a Common Media Application Format (CMAF) switch identifier, or a media identifier of a Real-time Transport Protocol (RTP) stream. |
| Extra Parameters (extraParams) | Obje ct | N/ A | Optio nal | An object that can contain any extra media-specific parameters |

The definition of the syntax elements in tracks of the alternative of the Media List of the MPEG Media (MPEG_media.media.alternatives.tracks) is shown in Table 11 below:

**Table 11**

| Name of Syntax Element | Dat a Type | Def ault | Usag e | Description |
|---|---|---|---|---|
| Track Index (track) | Stri ng | N/ A | Mand atory | Track index; for accessing a uri fragment of the tracks in media.alternatives |
| Codecs Parameter (codecs) | Stri ng | N/ A | Mand atory | Codec parameter; describing the type of a codec for the media contained in the track. When the track contains different types of codecs, the codec parameter can be represented by a comma-separated list of codec values. |

In addition, based on ISOBMFF (ISO/IEC 14496-12), ISO/IEC 23090-14 also defines a transport format for delivery of scenario description documents and data delivery related to glTF 2.0 extensions. To facilitate delivery of the scene description document to the client, ISO/IEC 23090-14 defines how to encapsulate the glTF file and associated data into the ISOBMFF file as non-time-varying and time-varying data (e.g., as track samples). MPEG_scene_dynamic, MPEG_mesh_linking, and MPEG_animation_timing provide time-varying data with a specific form to the display engine, and the display engine 11 should operate accordingly based on the varying information. ISO/IEC 23090-14 also defines the format of each piece of extended time-varying data and how it is encapsulated in the ISOBMFF file. The MPEF media (MPEG_media) allows referring to external media streams delivered through the protocols such as RTP/SRTP, MPEG-DASH, etc. In order to allow addressing of media streams without knowing the actual protocol scheme, hostname, or port value, ISO/IEC 23090-14 defines a new Uniform Resource Locator (URL) scheme. The scheme requires the presence of a stream identifier in a query section, but does not specify an identifier of a specific type, and allows the use of a Media Stream Identification scheme (RFC5888), a labeling scheme (RFC4575), or a 0-based indexing scheme.

### II. Display Engine

Referring to FIG.1, in the workflow of the scene description framework of the immersive media, the main role of the display engine 11 includes obtaining a scene description document and parsing the obtained scene description document to obtain a composition structure of the three-dimensional scene to be rendered and detailed information in the three-dimensional scene to be rendered, and rendering and displaying the three-dimensional scene to be rendered based on the information obtained by parsing the scene description document. In the embodiments of the present disclosure, the specific workflow and principle of the display engine 11 are not limited, so that the display engine 11 can parse the scene description document, give instructions to the media access function 12 through the media access function API, give instructions to the buffer management module 13 through the buffer API, access the processed data from the buffer and complete the rendering and presentation of the three-dimensional scene and the objects therein.

### III. Media Access Function

In the workflow of the scene description framework of the immersive media, the media access function 12 can receive instructions from the display engine 11 and complete the access and processing functions of the media files according to the instructions sent by the display engine 11. Specifically, after obtaining the media file, the media file is processed. There are large differences in the processing process of different types of media files. In order to achieve a wide range of media type support, taking into account the work efficiency of the media access function, a variety of pipelines are designed in the media access function, and the pipeline matching the media type can be enabled during the processing.

The input of the pipeline is the media files downloaded from the server or the media files read from the local storage control. These media files may often have a relatively complex structure and cannot be directly used by the display engine 11. Therefore, the main function of the pipeline is to process the data of the media file so that the data of the media file satisfies the requirements of the display engine 11.

In the workflow of the scene description framework of the immersive media, the media data processed by the pipeline needs to be delivered to the display engine 11 to be used in a standard arrangement structure, which requires the participation of the buffer API and the buffer management module 13. The buffer API and buffer management module realize the creation of the corresponding buffer according to the format of the processed media data, and are responsible for the subsequent management of the buffer, such as updating, releasing and other operations. The buffer management module 13 can communicate with the media access function 12 through the buffer API or communicate with the display engine 11, and the goal of communication with the display engine 11 and/or the media access function 12 is to achieve buffer management. When the buffer management module 13 communicates with the media access function 12, the display engine 11 needs to send the instructions related to buffer management to the media access function 12 through the media access function API firstly, and the media access function 12 then sends the instructions related to buffer management to the buffer management module 13 through the buffer API. When the buffer management module 13 communicates with the display engine 11, it just needs that the display engine 11 sends the buffer management description information parsed from the scene description document directly to the buffer management module 13 through the buffer API.

The above embodiments describe the basic process of rendering a three-dimensional scene including immersive media by the scene description framework, and the content and role of each functional module or file in the scene description framework. The immersive media in the three-dimensional scene can be point cloud based media files, three-dimensional mesh based media files, 6 DoF based media files, MIV media files, etc. Some embodiments of the present disclosure relate to rendering a three-dimensional scene including a point cloud based on the scene description framework, so the following will firstly explain the content related to the point cloud.

The point cloud refers to a set of massive three-dimensional points. After obtaining the spatial coordinates of each sampling point of the surface of the object, a set of points is obtained, which is called a point cloud. In addition to the geometric coordinates, the points in the point cloud can also include some other attribute information, such as color, normal vector, reflectivity, transparency, material type, etc. The point clouds can be obtained in a number of ways. In some embodiments, an implementation of obtaining the point cloud includes: observing an object using a camera array at a known fixed location in space, and obtaining a three-dimensional representation of the object using some relevant algorithm and a two-dimensional image captured in the camera array, thereby obtaining the point cloud corresponding to the object. In some other embodiments, an implementation of obtaining the point cloud includes: obtaining the point cloud corresponding to an object using a lidar scanning device. A sensor of the lidar scanning device may record electromagnetic waves obtained by reflecting, by the surface of the object, electromagnetic waves emitted from the radar, thus obtaining volume information of the object, and obtaining the point cloud corresponding to the object according to the volume information of the object. In some other embodiments, the implementation of obtaining the point cloud may further include: creating three-dimensional volume information based on a two-dimensional image by using artificial intelligence or a computer vision algorithm, thereby obtaining the point cloud corresponding to the object.

The point cloud provides a high-precision three-dimensional expression for the fine digitization of the physical world, and is widely used in three-dimensional modeling, smart cities, autonomous navigation systems, augmented reality, and other fields. However, due to massiveness, un-structuralization, uneven density and other characteristics of data, the storage and transmission of the point cloud face great challenges. Therefore, it is necessary to compress the point cloud efficiently. At present, the compression standards for the point cloud mainly include geometry-based point cloud compression (G-PCC) and video-based point cloud compression (V-PCC). The following further explains the principle of G-PCC and related algorithms.

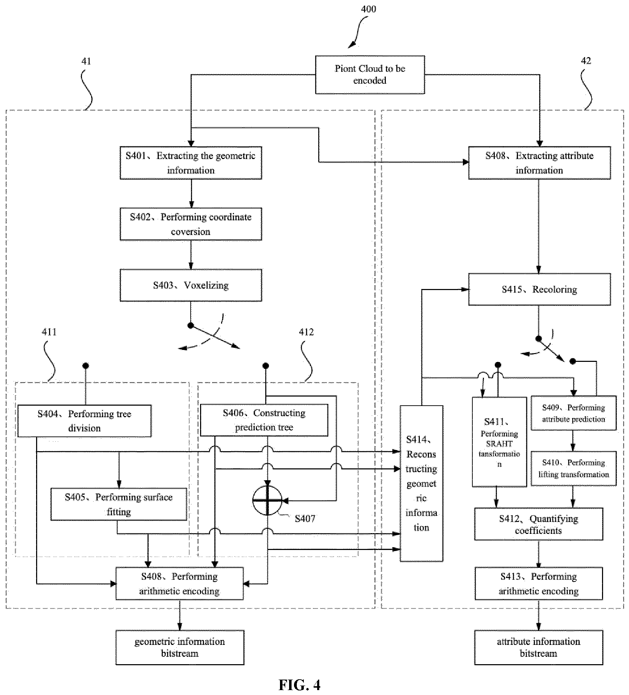

Referring to FIG. 4, the G-PCC encoder 400 can be divided into two parts, a geometric encoding module 41 and an attribute encoding module 42. The geometric encoding module 41 can be further divided into a octree-based geometric encoding unit 411 and a prediction tree-based geometric encoding unit 412.

As shown in FIG. 4, main encoding steps of the geometric encoding module 41 of the G-PCC encoder encoding the geometric information of the point cloud to be encoded include: S401, extracting the geometric information (positions) in the point cloud to be encoded; S402, performing coordinate conversion of the geometric information to enable the point cloud to be encoded being all contained in a bounding box; and S403, voxelizing the geometric information after the coordinate conversion. That is, the geometric information after the coordinate conversion is firstly quantified for scaling the point cloud to be encoded. Due to quantification rounding, the positions of some points in the point cloud to be encoded may be the same, so quantifying the geometric information after coordinate conversion also needs to decide whether to remove the repeated points according to parameters, and the process of quantifying and removing the repeated points is called a voxelization process. After completing the voxelization of the geometric information, a geometric information bitstream of the point cloud to be encoded is obtained by performing encoding by the octree-based geometric encoding unit 411 and the prediction tree-based geometric encoding unit 412 respectively.

The coding process of the octree-based geometric encoding unit 411 includes: S404, performing tree division; including: continuously performing tree division on the bounding box (octree/quadtree/binary tree) in the order of Breath First Search, and encoding a placeholder code of each node. That is, the bounding box is divided into subcubes sequentially, and subcubes that are not empty (including points in the point cloud) continue to be divided until a leaf node obtained through division is a unit cube of 1×1×1. Secondly, the number of points contained in the leaf node is encoded, and finally the encoding of the geometric octree is completed to generate a binary bitstream. S405, performing surface fitting on geometric information based on triangle soup (trisoup). During the surface fitting, it can also performing octree division firstly, but it is not necessary to divide the point cloud to be encoded into unit cubes with an edge length of 1×1×1 level by level, and instead, the division is stopped when the edge length of the sub-block (block) is a preset value. Then, based on the surface formed by the distribution of point clouds in each sub-block, up to twelve intersections (vertex) generated by the surface and twelve edges of the sub-block are obtained, and intersection coordinates of each sub-block are encoded sequentially to generate the binary bitstream.

The coding process of the geometric coding unit 412 based on the prediction tree includes: S406, constructing a prediction tree structure. It includes: sorting the points of the point cloud to be encoded, wherein the sorting order includes: disorder, Morton order, azimuth order radial distance order, etc., and constructing the prediction tree structure in two different ways (high delay slow way and low delay fast way). S407, Based on the prediction tree structure, traversing each node in the prediction tree, and obtaining prediction residuals by selecting different prediction modes to predict the geometric position information of the nodes, and quantizing the geometric prediction residuals by using quantification parameters. S408, performing arithmetic encoding, which includes: through continuous iteration, generating a binary geometric information bitstream by performing arithmetic encoding on prediction residuals, prediction tree structure, quantification parameters, etc. of the prediction tree node position information.

As shown in FIG 4, the process of encoding the attribute information of the point cloud by the G-PCC encoder attribute encoding module 42 mainly includes: S408, extracting the attribute information (attributes) of the point cloud to be encoded; S409, performing attribute prediction on the attribute information; S410, performing a lifting transformation on the attribute information; S411, performing a Region Adaptive Hierarchical Transform (RAHT) transformation on the attribute information; S412, quantizing the coefficients of the RAHT transformation and the coefficients of the lifting transformation; and S413, obtaining the attribute information bitstream by performing arithmetic encoding on the quantified coefficients of the RAHT transformation and the quantified coefficients of the lifting transformation. In addition, since the attribute encoding module 42 is processed based on the reconstructed geometric information, the following steps S414 and S415 need to be performed after the lossy geometric encoding is completed: S414, reconstructing the geometric information according to the geometric bitstream, and matching the original attribute information and the reconstructed geometric information. S415. recoloring the geometric information. The recoloring part in step S415 is to assign attribute information to the reconstructed point cloud by using the original point cloud. The goal is to make the attribute value of the reconstructed point cloud as similar as possible to the attribute value of the point cloud to be encoded and to minimize the error.

The attribute prediction algorithm is an algorithm that obtains the predicted attribute values of the current point to be predicted by using the weighted sum of the reconstructed attribute values of the reconstructed points in three-dimensional space. The attribute prediction algorithm can effectively remove attribute space redundancy, so as to achieve the purpose of compressing attribute information. In some embodiments, the implementation of attribute prediction may include: firstly, hierarchically dividing the point cloud to be encoded through a level of detail (LOD) algorithm, and establishing a hierarchical structure of the point cloud to be encoded. Secondly, encoding and decoding low-level points firstly, and predicting the high-level points by using low-level points and reconstructed points of the same level to achieve progressive encoding. The implementation of hierarchical partitioning of the point cloud to be encoded by the LOD algorithm may include: firstly, marking all points in the point cloud to be encoded as unvisited, and expressing the set of accessed points as V. In the initial state, the set V of accessed points is empty. Cycle tranversing all unvisited points in the point cloud to be encoded, and calculating the minimum distance D from the current point to the set of accessed points V, the current point is ignored if D is less than a threshold distance, and otherwise the current point is marked as visited, and added to the set V of accessed points and the current subspace. Finally, the hierarchy structure of the point cloud to be encoded is obtained by combining points in each subspace and all subspaces before each subspace.

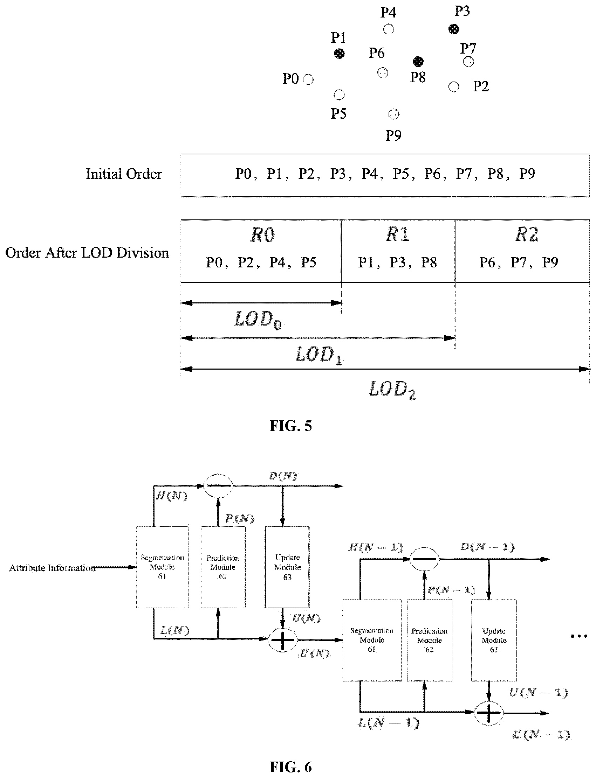

Exemplarily, as shown with reference to FIG. 5, FIG. 5 is illustrated with an example of a point cloud to be encoded including points P1~P9. In the distance-based LOD division process, during the first loop traversal, points P0, P2, P4 and P5 are added to the set V of accessed points and level R0 sequentially. During the second loop traversal, points P1, P3 and P8 are added to the set V of accessed points and level R1 sequentially. During the third loop traversal, all points are traversed, and points P6, P7 and P9 are added to the set V of accessed points and level R2 sequentially. Finally, points in each level and all levels before each level are merged to obtain the hierarchical structure of the point cloud to be encoded, which includes three levels. The first level is LOD₀, which includes points P0, P2, P4 and P5; the second level is LOD₁, which includes points P0, P2, P4, P5, P1, P3 and P8; and the third level is LOD₂, which includes points P0, P2, P4, P5, P1, P3, P8, P6, P7 and P9.

The lifting transformation is established based on the predictive transformation and includes three parts: segmentation, prediction and update. Referring to FIG. 6, the segmentation module 61 spatially segments the point cloud to be encoded into two parts, the high-level point cloud H(N) and the low-level point cloud L(N), and there is a certain correlation between the high-level point cloud H(N) and the low-level point cloud L(N). The prediction module 62 performs attribute prediction on the high-level point cloud H(N) by using the attributes of the low-level point cloud L(N), and obtains a prediction residual D(N) = H(N) - P(N), where P(N)is a characteristic output after the prediction of the prediction module 62 on the low-level point cloud L(N). During the process of the segmentation module 61 and the prediction module 62, since the prediction strategy of the LOD partitioning makes the points in the lower LOD layer more influential, the update module 63 defines and recursively updates the influence weights for each point based on the prediction residual D(N), the distance between the prediction point and its neighboring points. Wherein, recursive updating refers to performing the lifting transformation multiple times, and the output data of the last lifting transformation is the input data of the next lifting transformation; the defining and recursively updating the influence weight of each point based on the prediction residual D(N), the distance between the prediction point and its neighboring points includes defining and recursively updating the influence weight of each point based on the prediction residual D(N), the distance between the prediction point and its neighboring points, and the formula L'(N) = L(N) + U(N); wherein U(N) is the characteristic output by the update module 63 after predicting the prediction residual D(N).

RAHT transformation is a hierarchical region adaptive transformation algorithm based on Hal wavelet transformation. Based on the hierarchical tree structure, occupying child nodes are recursively transformed along each dimension in a bottom-up manner in the same parent node, the low-frequency coefficients obtained by the transformation are passed to the next level of the transformation process, and the high-frequency coefficients are subjected to quantification and entropy encoding.

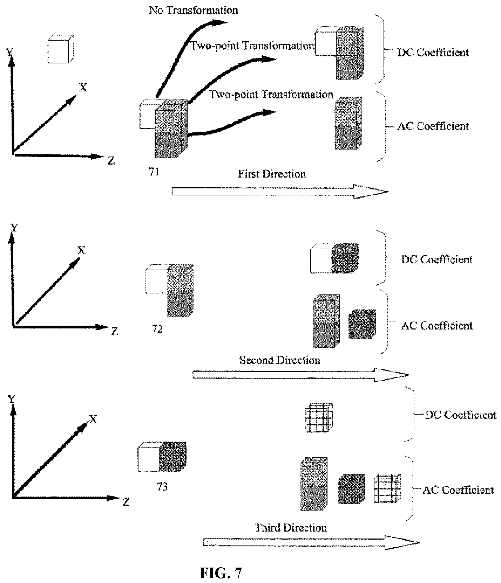

In some embodiments, the RAHT transformation described above may be implemented by a RAHT transformation based on the upsampling prediction. In the RAHT transformation based on the upsampling prediction, the overall tree structure of the RHAT transformation is changed from bottom-up to top-down, and the transformation is still carried out in a 2 × 2 × 2 block. Referring to FIG. 7, within a 2 × 2 × 2 block, the transformation process includes: firstly, performing an RAHT transformation on a voxel block 71 in a first direction. If there are adjacent voxel blocks in the first direction, the weighted average (DC coefficient) and residual (AC coefficient) of the adjacent two-point attribute values can be obtained by performing RAHT on the adjacent voxel blocks. Wherein, the obtained DC coefficient exists as the attribute information of the voxel block 122 of the parent node, and is used to perform the next layer of RAHT transformation; while the AC coefficient is retained for final encoding. If there are no adjacent points, the attribute value of the voxel block 71 is passed directly to the second level of parent node. In the second layer of RAHT transformation, it is carried out in the second direction. If there are adjacent voxel blocks in the second direction, the weighted average (DC coefficient) and residual (AC coefficient) of the attribute values of the adjacent two points can be obtained by performing the RAHT transformation on the adjacent voxel blocks. After that, the third layer of RAHT transformation is carried out in the third direction, the parent node voxel block 73 with three alternating color depths is obtained as a child node of the next layer in the octree, and then the RAHT transformation is looped along the first direction, the second direction, and the third direction until there is only one parent node in the entire point cloud to be encoded.

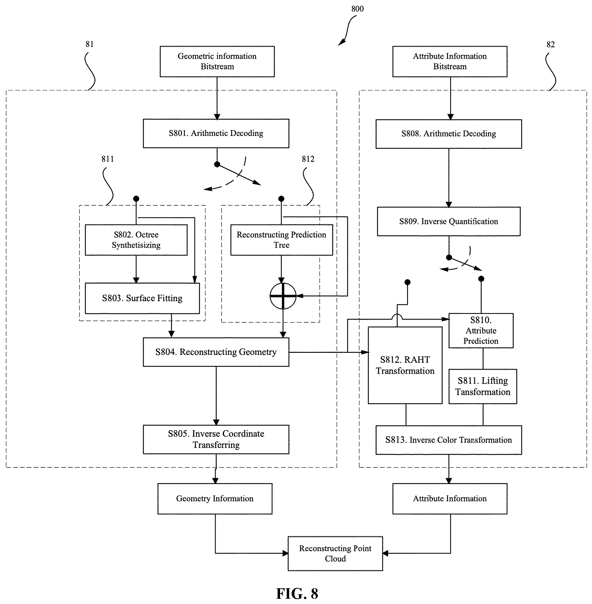

Referring to FIG. 8, the G-PCC decoder 800 can be divided into a geometric decoding module 81 and an attribute decoding module 82. The geometric decoding module 81 can be further divided into an octree-based geometric decoding unit 811 and a prediction tree-based geometric decoding unit 812.

As shown in FIG. 8, the main steps of the G-PCC decoder decoding the geometric information bitstream through the octree-based geometric decoding unit 811 of the geometric decoding module 81 include: S801, arithmetic decoding; S802, octree synthetizing; S803, surface fitting; S804, reconstructing geometry; and S805, inverse coordinate transferring, and obtaining the geometric information of the point cloud. Wherein, the geometric decoding of the octree-based geometric decoding unit 811 includes: in accordance with the order of breadth-first traversal, parsing continuously for obtaining the placeholder code of each node, dividing the nodes sequentially until the unit cube of 1×1×1 is obtained, stopping the division, parsing to obtain the point number contained in each leaf node, and finally restoring and obtaining the geometric reconstruction point cloud information. The main steps of the G-PCC decoder decoding the geometric information bitstream through the prediction tree-based geometric decoding unit 812 of the geometric decoding module 81 include: S801, arithmetic decoding; S806, reconstructing the prediction tree; S807, residual calculating; S804, reconstructing geometry; and S805, inverse coordinate transferring, and obtaining the geometric information of the point cloud. The main steps of the attribute decoding module 82 based on the G-PCC decoder 800 for attribute decoding include: S808, arithmetic decoding; S809, inverse quantizing; performing steps S810 and S811 or performing step S812; S810, performing attribute prediction; S811, lifting transformation; S812, inverse transferring based on RAHT; and S813, obtaining attribute information of the point cloud by inverse color transformation. Finally, the three-dimensional image model of the point cloud data to be encoded is restored based on the geometric information and the attribute information. The main steps of decoding the attribute information bitstream by the G-PCC decoder based on the attribute decoding module 82 and the main steps of encoding the attribute information by the G-PCC encoder based on the attribute encoding module 82 are reversed processes, which will not be repeated here.

At present, the extension of the first version of the ISO/IEC 23090-14 MPEG-I scene description standard has satisfied the key needs of immersive scene description solutions, and it currently commits to addressing the needs such as interaction with virtual scenes, AR anchoring, user virtual human representation, tactile support, and support for immersive codecs. The point cloud is an important immersive three-dimensional media form in the 3D environment. Therefore, supporting the representation of point cloud media in the scene description standard is an important content of the scene description. The geometry-based point cloud compression algorithm (G-PCC) is one of the mainstream point cloud compression algorithms at present. Supporting media files of the type G-PCC encoded point cloud in the scene description has great significance and value.

Some embodiments of the present disclosure provide a scene description framework that supports point cloud bitstreams obtained by the G-PCC compression standard, including: support of the scene description document for media files with a type of G-PCC encoded point clouds, support of the media access function API for media files with the type of G-PCC encoded point clouds, support of the media access function for media files with the type of G-PCC encoded point clouds, support of the buffer API for media files with the type of G-PCC encoded point clouds, support of the buffer managemen for media files with the type of G-PCC encoded point clouds, and the like.

The process of rendering a media file with the type of G-PCC encoded point cloud in a three-dimensional scene based on the scene description framework includes: firstly, the display engine obtains the scene description document by downloading or local reading and other ways. Wherein, the scene description document contains the description information of the entire three-dimensional scene and the media file with the type of G-PCC encoded point cloud contained in the scene. The description information of the media file with the type of G-PCC encoded point cloud may include the access address of the media file with the type of G-PCC encoded point cloud, the storage format of the decoded data of the processed media file with the type of G-PCC encoded point cloud, the playback time of the media file with the type of G-PCC encoded point cloud, the playback frame rate, etc. After the display engine parses the scene description document, the description information of the media file with the type of G-PCC encoded point cloud contained in the scene description is passed to the media access function through the media access function API. At the same time, the display engine allocates the buffer through the buffer management module called by the buffer API, and may also pass the buffer information to the media access function, which allocates the buffer through the buffer API calling the buffer management module. After receiving the description information delivered by the display engine, the media access function firstly requests to download the media file with the type of G-PCC encoded point cloud from the server, or reads the media file with the type of G-PCC encoded point cloud from the local file. After obtaining the media file with the type of G-PCC encoded point cloud, the media access function processes the media file with the type of G-PCC encoded point cloud by establishing and starting the corresponding pipeline. The input of the pipeline is the encapsulation file of the media file with the type of the G-PCC encoded point cloud. The pipeline stores the processed data in the specified buffer after decapsulating, G-PCC decoding, post-processing and other processes sequentially. Finally, the display engine obtains the decoded data of the media file with type of G-PCC encoded point cloud from the specified buffer, and renders and displays the three-dimensional scene according to the data obtained in the buffer.

The following respectively describes the scene description document, the media access function API, the media access function, the buffer API, and the buffer management that support the media file with the type of G-PCC encoded point cloud.

### I. The scene description document supporting the media file with the type of G-PCC encoded point cloud

In order to enable the scene description document to correctly describe the media file with the type of G-PCC encoded point cloud, some embodiments of the present disclosure extend the values of the syntax elements in the MPEG_media of the scene description document, and the specific extension includes at least one of the following:
Extension 1. The media type syntax element (MPEG_media.media.alternatives.mimeType) in the alternative (MPEG_media.media.alternatives) of the media list (media) of the MPEG media (MPEG _media) of the scene description document, which is used to declare the encapsulation format of the media file, is extended. The extension of the media type syntax element (mimeType) includes: extending the value "application/mp4" associated with the G-PCC encoded point cloud for the media type syntax element (mimeType). When the type of the media file is G-PCC encoded point cloud, the value of the media type syntax element (mimeType) is made to "application/mp4", for example: mimeType: application/mp4.
Extension 2. The value of the first track index syntax element (MPEG_media.media.alternatives.tracks.track) in the alternative track array (MPEG_media.media.alternatives.tracks) of the media list (media) of the MPEG media (MPEG_media)) of the scene description document is extended, which is used to declare the track information of the media file. The extension of the first track index syntax element (MPEG_media.media.alternatives.tracks.track) includes: when G-PCC data is referenced by the scene description document as one item of the alternative track arrays of the media list of MPEG media and the referenced item meets the provisions of the track in the International Standardization Organization Base Media File Format (ISOBMFF), for single-track encapsulated G-PCC data, the track referenced in MPEG media is the G-PCC bitstream track, and for multi-track encapsulated G-PCC data, the track referenced in MPEG media is the G-PCC geometric bitstream track.
Extension 3. The codec parameter syntax element (MPEG_media.media.alternatives.tracks.codecs) in the tracks (tracks) of the alternatives (alternatives) of the media list (media) of the MPEG media (MPEG _media) of the scene description document is extended, which is used to illustrate the codec parameters of the media data contained in the bitstream track. The specific extension includes: extending the codec parameters of the media file contained in the bitstream track, as defined in IETFRFC 6381. When the bitstream track includes a plurality of codec parameters with different types (for example, the AdaptationSet contains representations with different codecs when encapsulating the G-PCC encoded point cloud with DASH), codec parameter syntax elements (codecs) can be represented by a comma-separated codec value list, thus the extension of the value of the syntax elements codec parameter syntax element (codecs) includes: when the type of the media file is G-PCC encoded point cloud, the value of the codec parameter syntax element (codecs) should be set as specified in the ISO/IEC 23090-18 G-PCC Data Transfer (Carriage of Geometry-based Point Cloud Compression Data) standard. For example, when G-PCC data is encapsulated in DASH, and G-PCC preselected signaling is used in a Media Presentation Description (MPD) file, the "codecs" attribute of the preselected signaling should be set to 'gpc1', which indicates that the preselected media is a geometry-based point cloud; when there are a plurality of G-PCC Tile tracks in the G-PCC container, the "codecs" attribute of the Main G-PCC Adaptation Set should be set to 'gpcb' or 'gpeb', which indicates that the adaptation set contains G-PCC Tile basic track data. The "codecs" attribute of the Main G-PCC adaptivesset should be set to 'gpcb' when the Tile Component Adaptation Sets only send signals to a single G-PCC component data. The "codecs" attribute of the Main G-PCC Adaptation set should be set to 'gpeb' when the Tile Component Adaptation Sets send signals to all G-PCC component data. When G-PCC Tile preselected signaling is used in an MPD file, the "codecs" attribute of the preselected signaling should be set to 'gpt1', which indicates that the preselected media is geometry-based point cloud fragments.

In summary, in order to enable the scene description document to correctly describe a media file with the type of G-PCC encoded point cloud, some implementations of the present disclosure extend the values of syntax elements within MPEG media (MPEG _media) in the scene description document, and the specific extension includes one or more items shown in Table 12 below:

**Table 12**

| Name of Syntax Element | D ata Type | Def ault | Usage | Extended Value |
|---|---|---|---|---|
| Media Type (mimeType ) | St ring | N/ A | Mand atory | When the media resource is a media resource associated with GPCC data, the value of mimeType is 'application' and/or subtype 'mp4'. For example: |
| | | | | Content-Type: application/mp4 |
| Track Index (track) | St ring | N/ A | Mand atory | When the GPCC data is referenced by the scene description document as an item of MPEG_media.alternative.tracks and the referenced item conforms to the provisions in ISOBMFF for track: |
| | | | | For single-track encapsulated GPCC data, the track referenced in MPEG_media shall be a GPCC bitstream track; |
| | | | | For multi-track encapsulated GPCC data, the track referenced in MPEG_media shall be the GPCC geometric bitstream track. |
| Codec Parameter (codecs) | St ring | N/ A | Mand atory | When the media data is GPCC data, the value of 'codecs' should be set as specified in the ISO/IEC 23090-18 GPCC data transfer standard. |

At least one of the above extensions 1 to 3 is performed on the syntax elements in MPEG media (MPEG _media) in the scene description document, so that the MPEG media (MPEG_media) in the scene description document supports the media files with the type of G-PCC encoded point cloud.

In some embodiments, a method for describing scenes and nodes in a scene description document including a media file with the type of G-PCC encoded point cloud includes: when the three-dimensional scene includesa media file with the type of G-PCC encoded point cloud, describing the overall structure of the three-dimensional scene and the structural hierarchy and position of the media file with the type of G-PCC encoded point cloud in the three-dimensional scene using the method for describing the scenes and nodes. Wherein the describing the overall structure of the three-dimensional scene and the structural hierarchy and position of the media file with the type of G-PCC encoded point cloud in the three-dimensional scene using the method for describing the scenes and nodes includes: describing one three-dimensional scene using one scene description module. Each scene description document can describe one or more three-dimensional scenes, and the three-dimensional scenes may only be a parallel relationship, and not be a hierarchical relationship. Nodes can be a parallel relationship or a hierarchical relationship.

In some embodiments, a method for describing a three-dimensional mesh in a scene description document supporting a media file with the type of G-PCC encoded point cloud includes: describing various types of data of the media file with the type of G-PCC encoded point cloud by multiplexing syntax elements in attributes of primitives of a mesh description module (mesh.primitives.attributes). Specifically, because the point cloud is a scatter data structure, a plurality of scatter points collect to form the point cloud, so describing a media file with the type of G-PCC encoded point cloud is equivalent to describing the data of each point in the point cloud. In general, each point in the media file with the type of G-PCC encoded point cloud has two types of information: geometric information and attribute information. The geometric information represents the three-dimensional coordinates of the point in space, and the attribute information represents the color, reflectivity, normal direction and other information attached on the point. Since the data at a point of the media file with the type of G-PCC-encoded point cloud is similar to the attributes that the syntax elements contained in the attributes of primitives of a mesh description module can declare, when data at a point of the media file with the type of G-PCC encoded point cloud is described in the mesh description module (mesh), the syntax elements in the attributes (mesh.primitives.attribute) of the primitives of the mesh description module (mesh) can be multiplexed for describing data at a point in the media file with the type of G-PCC encoded point cloud.

For example, the value of the position syntax element (position, the first item in Table 1 above) in the attribute of the primitive of the mesh description module is a three-dimensional vector including floating point numbers. Such a data structure can also represent the geometric information of the G-PCC encoded point cloud, so the geometric information on the point in the media file with the type of G-PCC encoded point cloud is represented by multiplexing the position syntax element (position) in the attribute of the primitive of the mesh description module. For another example, the color value of a point in the media file with the type of G-PCC encoded point cloud can also be represented by multiplexing the color syntax element (color_n, the fifth item in Table 1 above) in the attributes (mesh.primitives.attribute) of the primitives of the mesh description module. For another example, a normal vector of a point in the media file with the type of G-PCC encoded point cloud can also be represented by multiplexing the normal vector syntax element (normal, the third itm in Table 1 above) in the attributes (mesh.primitives.attribute) of the primitives of the mesh description module.

A set including syntax elements supported in the attributes of the primitives of the mesh description module of the scene description document specified in the ISO/IEC 23090-14 MPEG-I scene description standard is defined as a first syntax element set. The method for describing the three-dimensional mesh supporting the media file with the type of the G-PCC encoded point cloud includes: adding the syntax elements corresponding to various types of data of the three-dimensional mesh into the attributes of the primitives of the mesh description module corresponding to the three-dimensional mesh based on the syntax elements in the first syntax element set. As shown in Table 13 below, Table 13 lists the method for describing partial data on the points in the media file with the type of G-PCC encoded point cloud by multiplexing the syntax elements in the attributes of the primitives of the mesh description module (mesh.primitives.attribute):

**Table 13**

| G-PCC Encoded Point Cloud Data | Multiplexed Syntax Element | Accessor Type | Data Type |
|---|---|---|---|
| Geometric Information | mesh.primitives.attribute.pos ition | VEC3 | Float |
| Color Data | mesh.primitives.attribute.col or_n | VEC3/V EC4 | Float |
| | | | Unsigned byte |
| | | | Unsigned short |
| Normal Vector | mesh.primitives.attribute.nor mal | VEC3 | Float |

It should be noted that the above embodiments and Table 13 only list the methods for describing partial data of G-PCC encoded point cloud by multiplexing the syntax elements in the attributes of the primitives of the mesh description module. The G-PCC encoded point cloud data may also include other data. The other data of the G-PCC encoded point cloud may also be described by multiplexing the syntax elements in the attributes of the primitives of the mesh description module, for example: texture coordinates (texcoord_n), joints (joints_n), weights (weights _n), etc.

In some other embodiments, a method for describing a three-dimensional mesh supporting a media file with the type of G-PCC encoded point cloud includes: adding a target extension array into the extension list of primitives of a mesh description module (mesh.primitives.extensions), adding syntax elements corresponding to various types of data contained in the three-dimensional mesh in the media file with the type of G-PCC encoded point cloud into the target extension array, and describing the data, such as geometric information, color data, and normal vectors, associated with each vertex of the three-dimensional mesh in the media file with the type of G-PCC encoded point cloud through syntax elements corresponding to various types of data respectively.

In some embodiments, the adding the syntax elements corresponding to various types of data contained in the corresponding three-dimensional mesh to the target extension array includes: adding the syntax elements corresponding to various types of data contained in the corresponding three-dimensional mesh into the target extension array based on the syntax elements in the first syntax element set. The first syntax element set is a set including syntax elements supported in the attributes of the primitives of the mesh description module of the scene description document specified in the ISO/IEC 23090-14 MPEG-I scene description standard.

In some embodiments, the adding the syntax elements corresponding to the various types of data contained in the corresponding three-dimensional mesh into the target extension array comprises: adding the syntax elements corresponding to the various types of data contained in the corresponding three-dimensional mesh into the target extension array based on a second syntax element set including preset syntax elements corresponding to G-PCC encoded point cloud.

The syntax element used to represent the geometric information associated with each vertex is defined as the first syntax element, the syntax element used to represent the color data associated with each vertex is defined as the second syntax element, and the syntax element used to represent the normal vector associated with each vertex is defined as the third syntax element. As shown in Table 14 below, the syntax elements added into the target extension array of an extension list of primitives (mesh.primitives.extensions) of some mesh description modules include:

**Table 14**

| Added Syntax Element | Described G-PCC Encoded Cloud Data | Accessor Type | Data Type |
|---|---|---|---|
| First Syntax Element | Geometric Information | VEC3 | Float |
| Second Syntax Element | Color Data | VEC3/ VEC4 | Float |
| | | | Unsigned byte |
| | | | Unsigned short |
| Third Syntax Element | Normal Vector | VEC3 | Float |

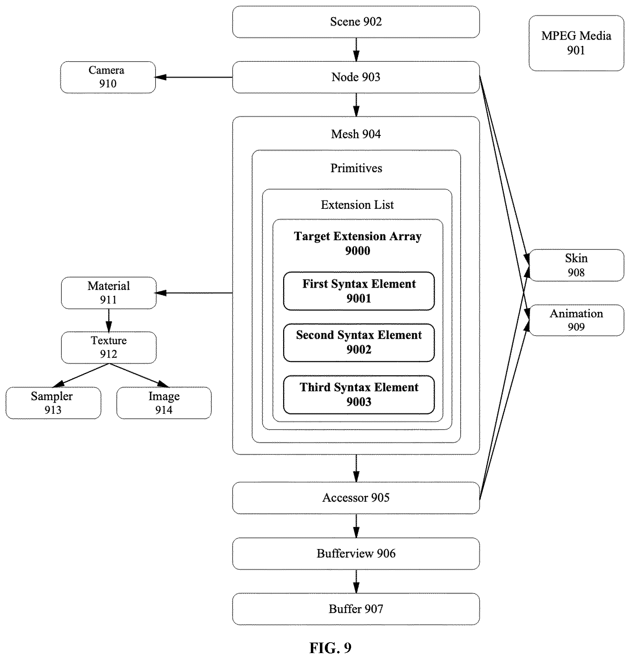

Referring to FIG. 9, FIG. 9 is a schematic structural diagram of the scene description document after adding a target extension array into an extension list of primitives of the mesh description module (mesh.primitives.extensions) and extending the first syntax element, the second syntax element, and the third syntax element in the target extension array accroding to above embodiments. The scene description document includes but is not limited to the following modules: MPEG media (MPEG _media) 901, a scene description module (scene) 902, a node description module (node) 903, a mesh description module (mesh) 904, an accessor description module (accessor) 905, a bufferView description module (bufferView) 906, a buffer description module (buffer) 907, a skin description module (skin) 908, an animation description module (animation) 909, a camera description module (camera) 910, a material description module (material) 911, a texture description module (texture) 912, a sampler description module (sampler) 913 and a texture image description module (image) 914. The extension list of attributes of primitives of the mesh description module 904 includes a target extension array 9000, and the extended syntax elements within the target extension array 9000 include a first syntax element 9001 for representing geometric information associated with each vertex, a second syntax element 9002 for representing color data associated with each vertex, and a third syntax element 9003 for representing a normal vector associated with each vertex. In addition to the above extensions, the functions of other elements, accessor type, data type, and other information in the scene description document shown in FIG. 9 are similar to those in the scene description document shown in FIG. 3 and will not be described further here.

In some embodiments, a method for describing a mesh supporting the media file with the type of G-PCC encoded point cloud includes: preconfiguring the syntax elements corresponding to various types of data of the G-PCC encoded point cloud, and adding the syntax elements corresponding to the various types of data into the attributes of the primitives of the mesh description module corresponding to the three-dimensional mesh in the G-PCC encoded point cloud based on the preconfigured syntax elements corresponding to the various types of data of the G-PCC encoded point cloud.

Exemplarily, the syntax elements corresponding to the various types of data of the preconfigured G-PCC encoded point cloud include: a fourth syntax element for representing geometric information associated with each vertex, a fifth syntax element for representing color data associated with each vertex, and a sixth syntax element for representing a normal vector associated with each vertex. The adding the syntax elements corresponding to the various types of data into the attributes of the primitives of the mesh description module corresponding to the three-dimensional mesh in the G-PCC encoded point cloud includes: adding at least one of the fourth syntax element, the fifth syntax element and the sixth syntax element into the attributes of the primitives of the mesh description module corresponding to the three-dimensional mesh in the G-PCC encoded point cloud.

The syntax elements corresponding to the G-PCC encoded point cloud and for representing the geometric information associated with each vertex are defined as the fourth syntax element, the syntax elements corresponding to the G-PCC encoded point cloud and for representing the color data associated with each vertex are defined as the fifth syntax element, and the syntax elements corresponding to the G-PCC encoded point cloud and for representing the normal vector associated with each vertex are defined as the sixth syntax element. As shown in Table 15 below, the method for describing the syntax elements in the attributes of the primitives of some mesh description modules includes:

**Table 15**

| Name of Syntax Element | Described G-PCC Encoded Point Cloud Data | Accesso r Type | Data Type |
|---|---|---|---|
| Fourth Syntax Element | Geometric Information | VEC3 | Float |
| Fifth Syntax Element | Color Data | VEC3/V EC4 | float |
| | | | unsigned byte |
| | | | unsigned short |
| Sixth Syntax Element | Normal Vector | VEC3 | Float |

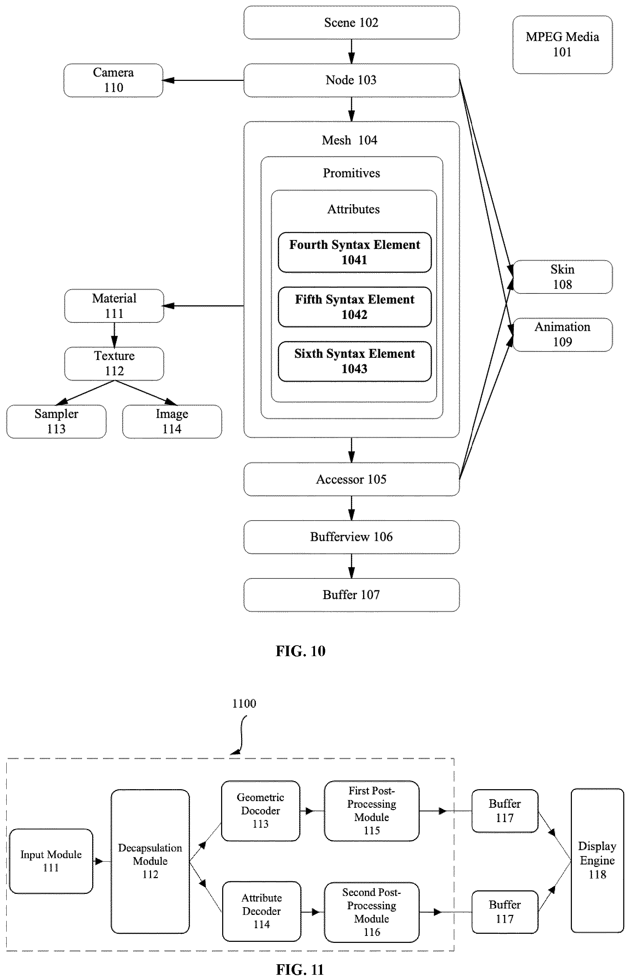

Referring to FIG. 10, FIG. 10 is a schematic structural diagram of the scene description document after extending the syntax elements in the attributes of the primitive of the mesh description module (mesh.primitives.attribute) according to the above-described embodiment. The scene description document includes but is not limited to the following modules: MPEG media (MPEG_media) 101, a scene description module (scene) 102, a node description module (node) 103, a mesh description module (mesh) 104, an accessor description module (accessor) 105, a bufferView description module (bufferView) 106, a buffer description module (buffer) 107, a skin description module (skin) 108, an animation description module (animation) 109, a camera description module (camera) 110, a material description module (material) 111, a texture description module (texture) 112, a sampler description module (sampler) 113 and a texture image description module (image) 114. The attributes of the primitives of the mesh description module 104 (mesh.primitives.attribute) include: a fourth syntax element 1041 extended for representing geometric information associated with each vertex, a fifth syntax element 1042 for representing color data associated with each vertex, and a sixth syntax element 1043 for representing a normal vector associated with each vertex. In addition to the above extensions, the functions of other elements, accessor type, data type, and other information in the scene description document shown in FIG. 10 are similar to those in the scene description document shown in FIG. 3 and will not be described further here.

It should also be noted that, when the scene description document describes a three-dimensional scene containing a media file with the type of G-PCC encoded point cloud, whether the G-PCC encoded point cloud data is described by multiplexing the syntax elements in the attribute of the primitive of the mesh description module, or the media file with the type of G-PCC encoded point cloud is described by adding the target extension array into the primitives of the mesh description module or extending new syntax elements in the primitive of the mesh description module, the mesh description module (mesh) will contain a large number of points in the G-PCC encoded point cloud, and each point at least contains geometric information and attribute information. Therefore, it is not convenient to store the data of the media file with the type of G-PCC encoded point cloud directly in the scene description framework. Instead, the link of the media file with the type of G-PCC encoded point cloud is pointed out in the scene description framework. The media file is downloaded when the data of the G-PCC encoded point cloud needs to be used.

In some embodiments, the scene description document may also be fused with a media file with the type of G-PCC encoded point cloud to form a binary file so as to reduce the type and number of files.

In some embodiments, a method for describing an accessor description module (accessor), a bufferView description module (bufferView), and a buffer description module (buffer) supporting the media file with the type of the G-PCC encoded point cloud includes: pointing to the media description module corresponding to the media file with the type of the G-PCC encoded point cloud in the MPEG media (MPEG _media) through an index value declared by a media index syntax element (media) of an MPEG circular buffer (MPEG_buffer_circular) of the buffer description module (buffer).

That is, the media file with the type of the G-PCC encoded point cloud needs to be specified in the buffer description module, but instead of directly adding the Uniform Resource Locator (URL) of the media file with the type of the G-PCC encoded point cloud in the buffer description module, the value of the media index syntax element (media) in the MPEG circular buffer (MPEG_buffer_circular) in the buffer description module (buffer) points to the media description module corresponding to the media file with the type of the G-PCC encoded point cloud in the MPEG media (MPEG_media).

Exemplarily, when the value of the uniform resource identifier syntax element (uri) in the alternatives of the media description module corresponding to the media file with the type of the G-PCC encoded point cloud in the media list (media) of MPEG media (MPEG_media) is "http://www.example.com/G-PCCexample.mp4" and the media description module is the first media description module in MPEG media, the value of the media index syntax element (media) of the MPEG circular buffer (MPEG_buffer_circular) may be set as "0" to index the link of the first media file in the MPEG media in the MPEG circular buffer of the buffer description module so as to index the media description module corresponding to the media file with the type of G-PCC encoded point cloud in the MPEG media (MPEG_media) through the media index syntax element (media) in the MPEG circular buffer (MPEG_buffer_circular.media) of the buffer description module (buffer).

In some embodiments, a method for describing the accessor (accessor), the bufferView (buffer), the buffer (buffer) supporting the media file with the type of the G-PCC encoded point cloud includes: buffering the track information of the buffered data by the value of a second track index syntax element (track) of the track array (tracks) of the MPEG circular buffer (MPEG_buffer_circular) of a buffer description module (buffer).

On the basis of glTF2.0, an extension named MPEG_buffer_circular (MPEG_buffer_circular) is proposed in the scene description technology proposed by MPEG. The MPEG circular buffer is used to reduce the number of required buffers while ensuring data buffering. The MPEG circular buffer can be seen as connecting the head and tail of the ordinary buffer and forming a circular, while writing the buffer to the circular buffer and reading the data in the circular buffer rely on the write pointer and the read pointer, which may achieve the work process of writing and reading at the same time. The syntax elements contained in the MPEG_buffer_circular are shown in Table 16:

**Table 16**

| Name | Data Type | D efault | Usage | Description |
|---|---|---|---|---|
| Link Count (count) | Integ er | 2 | Optio nal | Link count; indicating the number of storage links contained in the MPEG circular buffer. Media access functions may use the information and establish the corresponding circular buffer structure for the display engine. |
| Media Index (media) | Integ er | N/ A | Mand atory | Media index; indicating the index of media files in MPEG_media, these media files may be used as input media sources in the buffer. |
| Track Index (tracks) | Array | N/ A | Optio nal | Track index; indicating the index of the track of the media file in MPEG_media extension, these indexes can be used as the input media source of the buffer. |
| | | | | When tracks are undefined, the pipeline should perform the necessary processing on all tracks in MPEG_media, which in turn generates the data format requested by the buffer, i.e., instructs the buffer on how to correctly store the data in MPEG media. |
| | | | | When the tracks array contains a plurality of tracks, the pipeline should perform the necessary processing on all the referenced tracks to generate the data format requested by the buffer. |
| | | | | If the media source referenced in a track has a plurality of alternatives, then each alternative should record the selection of the track. |

That is, based on the setting rules of the value of the syntax element "media" in Table 16, the value of the media index syntax element (media) in Table 16 is the index value of the media description module corresponding to the media file with the type G-PCC encoded point cloud declared in MPEG media (MPEG_media). That is, the media file with the type G-PCC encoded point cloud can be indexed in the buffer description module (buffer). Based on the setting rules of the value of the track index syntax elements (tracks) in Table 16, the value of the track index syntax elements (tracks) in Table 16 is the index value of one or more bitstream tracks of the media file with the type G-PCC encoded point cloud. That means that the decoded data of the one or more bitstream tracks can be buffered in the corresponding buffer.

In some embodiments, a method for describing the material (material), the texture (texture), the sampler (sampler) and the texture image (image) supporting the media file with the type G-PCC encoded point cloud includes: when a scene description document is used to describe a three-dimensional scene of the G-PCC encoded point cloud, the three-dimensional scene is described without using the material (material), the texture (texture), the sampler (sampler) and the texture image (image).

Because the G-PCC encoded point cloud is a scattering topology, it does not actually have the concept of a surface. Various kinds of additional information is also directly expressed on the point, and material, texture, sampler, and image are all attachment information for the surface. Therefore,only the definitions of material, texture, sampler, and image are retained, but material, texture, sampler, and image are not used to describe the three-dimensional scene.

In some embodiments, a method for describing the camera description module (camera) that supports a media file with the type of the G-PCC encoded point cloud includes: defining visual information associated with viewing, such as viewpoint, a viewing angle, etc., of a node in a three-dimensional scene through the camera description module.

In some embodiments, a method for describing the animation description module (animation) that supports the media file with type G-PCC encoded point cloud includes adding an animation to the node description module (node) in the three-dimensional scene through the animation description module (animation).

In some embodiments, the animation description module may describe animations added to the node description module (node) by one or more of position movement, angle rotation, and size scaling.

In some embodiments, the animation description module may also indicate at least one of a start time, an end time, and an implementation of the animation added to the node description module (node).

That is, in a scene description document that supports media files with the type G-PCC encoded point clouds, it is also possible to add animations to nodes that represent objects in three-dimensional objects. The animation description module (animation) describes the animation added to the node in three ways: position movement, angle rotation, and size scaling. At the same time, it can also specify the start time, the end time and the implementation of the animation.

In some embodiments, a method for describing the skin description module (skin) supporting the media file with the type G-PCC encoded point cloud includes: defining a motion and deformation relationship between the mesh in the node description module (node) and a corresponding bone by the skin description module (skin).

Based on the improvement and extension of MPEG_media of the scene description module (scene), node description module (node), mesh description module (mesh), accessor description module (accessor), bufferView description module (bufferView), buffer description module (buffer), skin description module (skin), animation description module (animation), camera description module (camera), material description module (material), texture description module (texture), sampler description module (sampler), and texture image description module (image) in the scene description document in the above embodiments, the scene description document has been able to correctly describe the media file with the type G-PCC encoded point cloud.

Exemplarily, the following describes a scene description document supporting a media file with the type G-PCC encoded point cloud provided by an embodiment of the present disclosure by combining a specific scene description document.

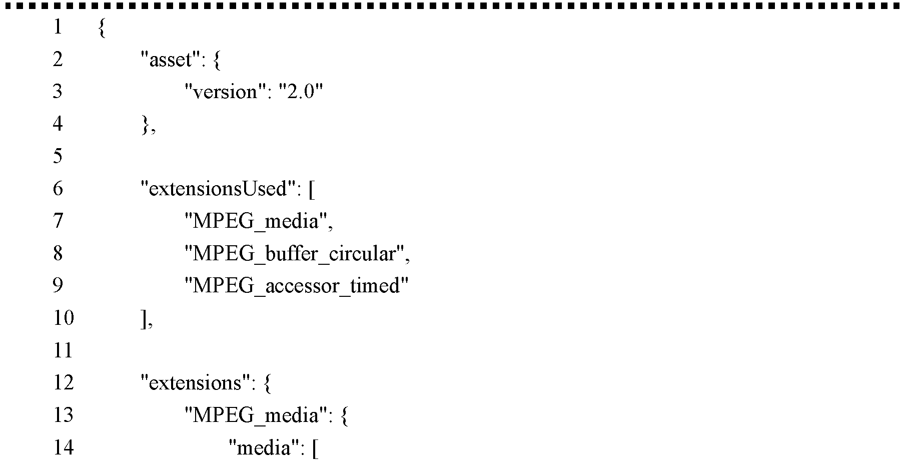

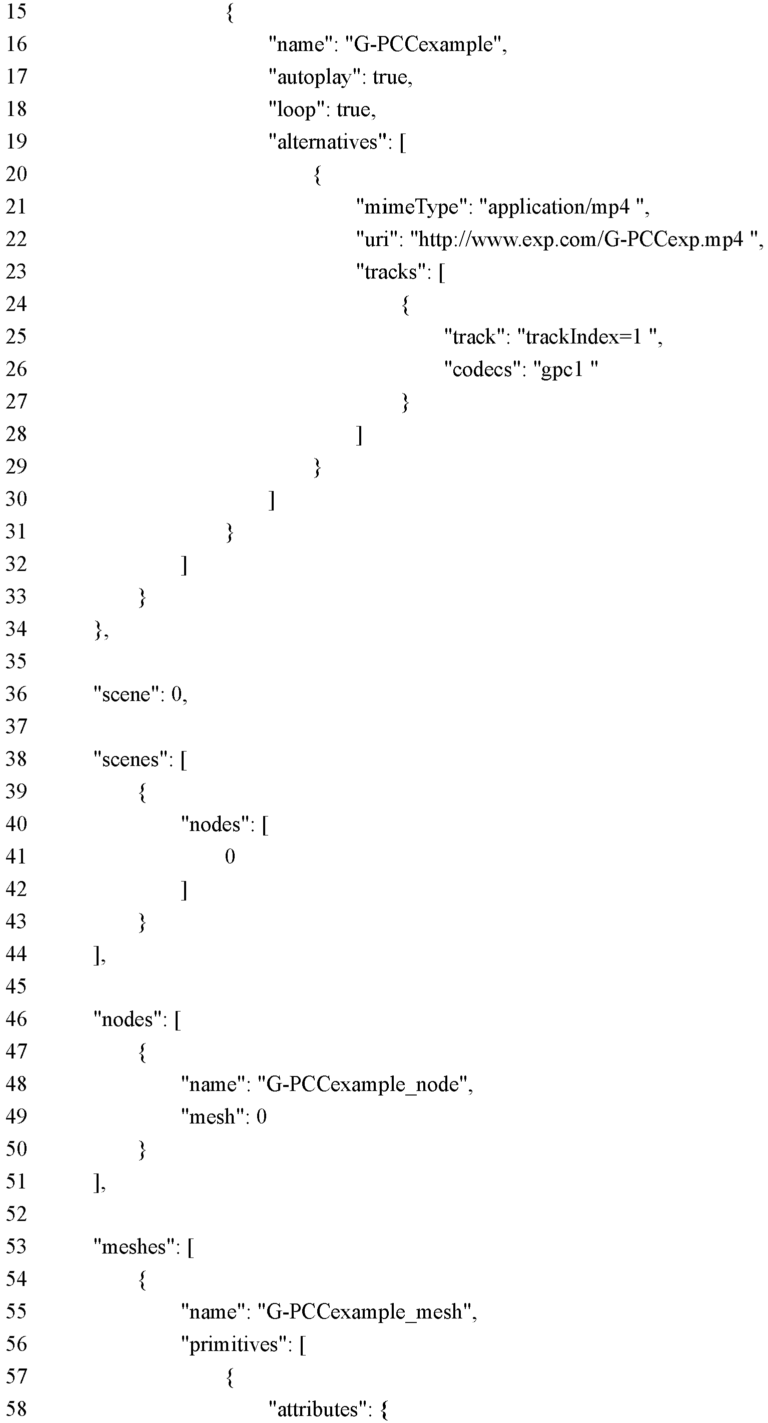

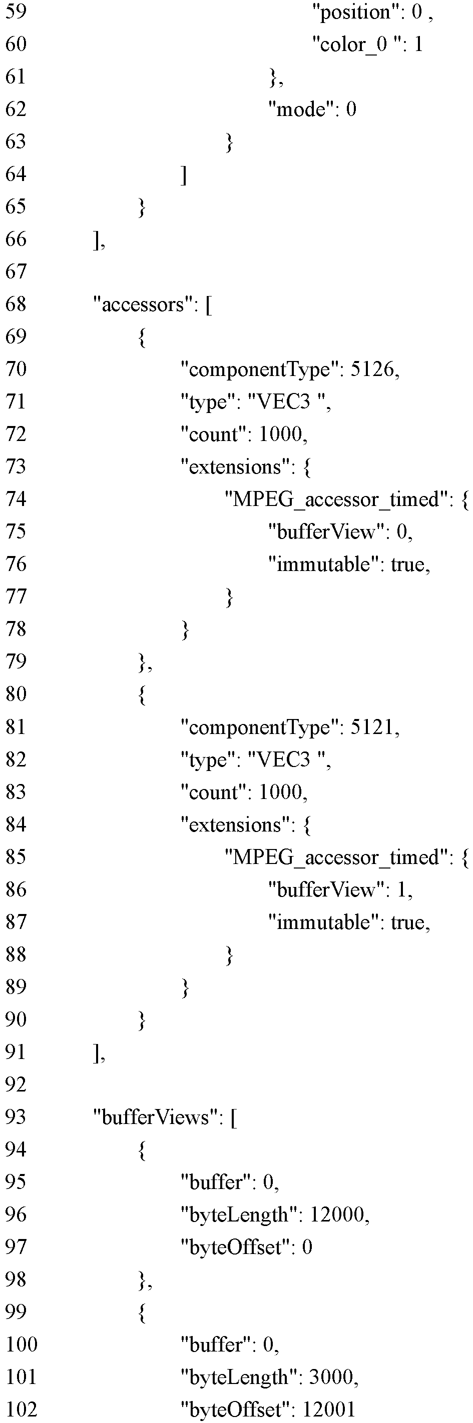

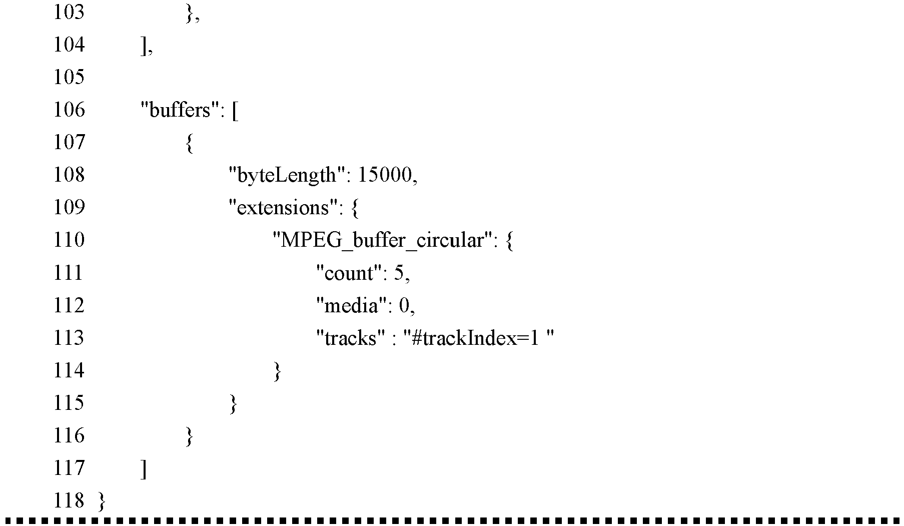

The pair of braces in line 1 and line 118 in the above example contains the main content of the scene description document supporting the media files with the type G-PCC encoded point cloud. The scene description document supporting the media files with the type G-PCC encoded point cloud includes: digital asset description module (asset), extensionUsed description module (extensionUsed), MPEG media (MPEG_media), scene statement (scene), scene list (scenes), node list (nodes), mesh list (meshes), accessor list (accessors), bufferview list (bufferViews), and buffer list (buffers). The following is the explanations of the content of each section and the information contained in each list at the parsing perspective.
1. Digital asset description module (asset): The digital asset description module is rows 2 ~ 4. From the "version": "2.0" on line 3 of the digital asset description module, it can be determined that the scene description document is written based on the glTF 2.0 version, which is also the reference version of the scene description standard. From the parsing perspective, the display engine can determine which parser should be selected to parse the scene description document based on the digital asset description module.
2. extensionUsed description module (extensionUsed): the extensionUsed description module is lines 6~10. Since the extensionUsed description module includes three syntax elements: MPEG media (MPEG_media), MPEG circular buffer (MPEG_buffer_circular), and MPEG time-varying accessor (MPEG_accessor_timed), it can be determined that the scene description document uses the MPEG media, the MPEG circular buffer, and the MPEG time-varying accessor. From the parsing perspective, the display engine can obtain in advance the extension items involved in subsequent pasring based on the contents of the extensionUsed description module: MPEG media, MPEG circular buffer, MPEG time-varying accessor.
3. MPEG media (MPEG_media): MPEG media is line 12 ~ 34. MPEG media implements the declaration of the media files with the type G-PCC encoded point cloud included in the three-dimensional scene. And it indicates the encapsulation format of the media files with the type G-PCC encoded point cloud by the media type syntax element on line 21 and its value "mimeType": "application/mp4"; it indicates the access address of the media files with the type G-PCC encoded point cloud by "uri": "http://www.exp.com/G-PCCexp.mp4" on line 22; it indicates the track information of the media files with the type G-PCC encoded point cloud by "track": "trackIndex = 1" on line 25; it indicates the codec parameters of the media files with the type G-PCC encoded point cloud by "codecs": "gpc1" on line26; it indicates the name of the media files with the type G-PCC encoded point cloud by "name": "G-PCCexample" on line 16; it indicates that the media files with the type G-PCC encoded point cloud should be played automatically by "autoplay": true on line 17; and it indicates that the media files with the type G-PCC encoded point cloud should be played loop by "loop": true on line 18. From the parsing perspective, the display engine may determine that there is a media file with the type G-PCC encoded point cloud in the three-dimensional scene to be rendered by parsing MPEG media, and obtains how to access and parse the media file with the type G-PCC encoded point cloud.
4. Scene statement (scene): The scene statement is line 36. Since the scene description document can theoretically include a plurality of three-dimensional scenes, the above scene description document firstly indicates that based on the scene description document, the subsequent processed and rendered three-dimensional scene is the first three-dimensional scene in the scene list, i.e., the three-dimensional scene encompassed by the braces in lines 39 ~ 43, through the scene statement and the value of the scene statement "scene":0 in line 36.
5. Scenes: The scene list is lines 38-44. The scene list includes only one brace, which indicates that the scene list includes only one scene description module and the scene description document includes only one three-dimensional scene. In the brace, "nodes":[0] in lines 40-42 indicates that the three-dimensional scene includes only one node, and the index value of the node description module corresponding to the node is 0. From a parsing perspective, the contents of the scene list make it clear that the entire scene description framework should select the first three-dimensional scene (three-dimensional scene with index 0) in the scene list for subsequent processing and rendering, clarify the overall structure of the three-dimensional scene, and point to the next layer of more detailed node description module (node).
6. Node list (nodes): The node list is rows 46~51. The node list includes only one brace, which indicates that the node list includes only one node description module. There is only one node in the three-dimensional scene, and the node is the same node as the node with the index value of 0 in the node description module in the scene description module. The two nodes are associated through an index mode. In the braces representing the node, "name":"G-PCCexample_node" on line 48 indicates that the name of the node is "G-PCCexample_node", and "mesh":0 on line 49 indicates that the content mounted on the node is the three-dimensional mesh corresponding to the first mesh description module in the mesh list, which corresponds to the mesh description module on the next layer. From the parsing perspective, the content of the node list indicates that the content mounted on the node is a three-dimensional mesh, and the three-dimensional mesh is the three-dimensional mesh corresponding to the first mesh description module in the mesh list.
7. Mesh list (meshes): The mesh list is in rows 53 ~ 66, and the mesh list includes only one brace, which indicates that the mesh list includes only one mesh description module. The three-dimensional scene includes only one three-dimensional mesh, and the three-dimensional mesh is the same three-dimensional mesh as the three-dimensional mesh with the index value of 0 in the node description module. In the braces (the mesh description module) describing the three-dimensional mesh, the name of the three-dimensional mesh is indicated by "name":"G-PCCexample_mesh" on line 55 as "G-PCCexample_mesh", which is used only as an identifying mark. The "primitives" on line 56 indicates that the three-dimensional mesh has primitives (primitives). The "attributes" in line 58 and "mode" in line 62 indicate that the primitives include two types of information: attribute (attribute) and mode (mode) respectively. The "position" in line 59 and "color_0" in line 60 indicate that the three-dimensional mesh has geometric coordinates and color data respectively. The "position":0 in line 59 and "color_60":1 in line 60 indicate that the accessor corresponding to the geometric coordinates is the accessor corresponding to the first accessor description module in the accessor list, and the accessor corresponding to the color data is the accessor corresponding to the second accessor description module in the accessor list respectively. In addition, the topology of the three-dimensional mesh can also be determined as a scatter structure by "mode":0 in line 62. From the parsing perspective, the mesh list clarifies the actual data types and topological types of three-dimensional meshes in the scene description document.
8. Buffer list (buffers): The buffer list is in lines 106-117. The buffer list includes only one brace, which indicates that the scene description document includes only one buffer description module, and the display of the three-dimensional scene only needs to access one media file. In the brace, the extension of MPEG circular buffer (MPEG_buffer_circular) is used, which indicates that the buffer is a circular buffer that is retrofitted using the MPEG extension. The "media:0 in line 112 indicates that the data source of the circular buffer is the media file corresponding to the first media description module declared in the MPEG media in the previous section. The "tracks":"#trackIndex=1" in line 113 indicates that the track with an index value of 1 should be referred to when accessing the media file. The track with the index of 1 is not limited, which may be the only track of the media file with the type of G-PCC encoded point cloud encapsulated in a single track, or the geometric bitstream track of the media file with the type of G-PCC encoded point cloud encapsulated in a multi-track mode. In addition, according to the syntax element "count":5 in the MPEG circular buffer, it can also be determined that the MPEG circular buffer has five storage sections, and according to the syntax element "byteLength":15000 in the MPEG circular buffer, it can also be determined that the byte length (capacity) of the MPEG circular buffer is 15000 bytes. From a parsing perspective, the buffer list realizes the correspondence of the media files with the type G-PCC encoded point clouds declared in MPEG media to the buffer, or the reference of the media files with the type G-PCC encoded point cloud previously declared but not used by the buffer. It should be noted that the media file with the type G-PCC encoded point cloud referred to here is an unprocessed G-PCC encapsulation file, and the G-PCC encapsulation file needs to be processed by the media access function to extract the position coordinates (position) and color values (color_0) mentioned in the mesh description module that can be directly used for rendering.
9. Bufferview list (bufferViews): The bufferview list is lines 93 ~ 104. The bufferview list includes two parallel braces. Combined with the buffer description module which inlcudes only one buffer, it indicates that the buffer used to store media files with the type G-PCC encoded point cloud is divided into two bufferviews. The point cloud data of the media files with the type G-PCC encoded point cloud is stored in two bufferviews. In the first brace (the first bufferview description module), firstly, the buffer:0 in line 95 points to the buffer description module with index 0, which is the only buffer description module mentioned in the buffer list; and then the byteLength parameter in line 96 and the byteOffset parameter in line 94 limit the data view range of the corresponding bufferview being as the first 12000 bytes. The content in the second brace (the second bufferview description module) is similar to the first brace, except that the data view range is defined as the last 3000 bytes. From the parsing perspective, the bufferview list groups the point cloud data in the media file with the type G-PCC encoded point cloud, which is conducive to the refined definition of the subsequent accessor description module.
10. Accessor list (accessors): The accessor list is in lines 68-91. The accessor list is similar to the structure of the bufferview list, and includes two parallel braces, which indicates that the accessor list includes two accessor description modules, and the display of the three-dimensional scene requires accessing the media data through two accessors. In addition, both the two braces (accessor description modules) inlcude the extension of MPEG time-varying accessor (MPEG_accessor_timed), which indicates that both accessors point to time-varying media defined by MPEG. In the first brace, the contents in the MPEG time-varying accessor point to a bufferview description module with an index value of 0. In the first brace (the first accessor description module), the "componentType":5126 in line 70 and the "type": "VEC3" in line 71 illustrate that the data format stored in the accessor is a three-dimensional vector consisting of 32 bits floating-point numbers. The "count":1000 illustrates that there are 1000 data, which needs to be accessed by the accessor with the format. Each 32 bits floating-point number occupies 4 bytes, so the accessor corresponding to the accessor description module includes 12000 bytes of data, which corresponds to the setting in the bufferview description module with an index value of 0. The content in the second brace (the second accessor description module) is also similar, which replaces the index value of the bufferview description module with 1 and redefines the data type. From the parsing perspective, the accessor list (accessors) completes the full definition of the data required for rendering. For example, the missing data types in the bufferview description module and the buffer description module are defined in the corresponding accessor description module.

### II. Display engine supporting the media files with the type of G-PCC encoded point cloud

In the workflow of the scene description framework of the immersive media, the main functions of the display engine of supporting the media file with the type G-PCC encoded point cloud, which are similar to the main functions of the display engine in the workflow of the scene description framework of the immersive media described above, include: 1. being capable of parsing the scene description document of the media file with the type G-PCC encoded point cloud, and obtaining a method for rendering the corresponding three-dimensional scene; 2. being capable of passing media access instructions or media data processing instructions with the media access function through the media access function API, wherein, the media access instructions or the media data processing instructions are from the parsing results of the scene description document of the media file with the type G-PCC encoded point cloud; 3. being capable of sending buffer management instructions to the buffer management module through the buffer API; and 4. being capable of retrieving the processed G-PCC encoded point cloud data from the buffer, and completing the rendering and display of the three-dimensional scene and the objects in the three-dimensional scene according to the read data. It should be noted that the details of the processing are not expanded here.

### III. Media access function API supporting the media files with the type of G-PCC encoded point cloud

In the workflow of the scene description framework of the immersive media, the display engine can obtain the method for rendering the three-dimensional scene including the media file with the type G-PCC by parsing the scene description document, it is necessary to pass the method for rendering the three-dimensional scene to the media access function or send instructions to the media access function based on the method for rendering the three-dimensional scene, and the process of passing the method for rendering the three-dimensional scene to the media access function or sending instructions to the media access function based on the method for rendering the three-dimensional scene is implemented through the media access function API.

In some embodiments, the display engine may send media access instructions or media data processing instructions to the media access function through the media access function API. Wherein, the media access instruction or media data processing instruction sent by the display engine to the media access function through the media access function API is from the parsing results of the scene description document of the media file with the type G-PCC encoded point cloud. The media access instruction or media data processing instruction may include: the index of the media file with the type G-PCC encoded point cloud, the URL of the media file with the type G-PCC encoded point cloud, the attribute information of the media file with the type G-PCC encoded point cloud, the display time window of the media file with the type G-PCC encoded point cloud, the format requirements for the processed media file with the type G-PCC encoded point cloud, etc.

In some embodiments, the media access function may also request media access instructions or media data processing instructions from the display engine through the media access function API.

### IV. Media access function supporting the media files with the type of G-PCC encoded point cloud

In the workflow of the scene description framework of the immersive media, after the media access function receives the media access instruction or media data processing instruction sent by the display engine through the media access function API, the media access function may execute the media access instruction or media data processing instruction sent by the display engine through the media access function API, for example, obtaining media files with the type G-PCC encoded point cloud, establishing appropriate pipelines for media files with the type G-PCC encoded point cloud, allocating an appropriate buffer for processed media files with the type G-PCC encoded point cloud, etc.

In some embodiments, the media access function obtains the media file with the type G-PCC encoded point cloud, which includes downloading the media file with the type G-PCC encoded point cloud from a server using a network transport service.

In some embodiments, the media access function obtains the media file with the type G-PCC encoded point cloud, which includes reading the media file with the type G-PCC encoded point cloud from the local storage space.

After the media access function obtains the media file with the type G-PCC encoded point cloud, it needs to process the media file with the type G-PCC encoded point cloud. There are large differences in the processing of media files with different types. In order to achieve a wide range of media type supporting, also taking into account the work efficiency of the media access function, a variety of pipelines are designed in the media access function, and only pipelines matching the media type can be enabled in the process of processing media files. When the media file is a media file with the type G-PCC encoded point cloud, the media access function needs to establish a corresponding pipeline for the media file with the type G-PCC encoded point cloud, decapsulate, G-PCC decode, post-process, etc. the media file with the type G-PCC encoded point cloud through the established pipeline to complete the processing of the media file with the type G-PCC encoded point cloud, and process the media file data with the type G-PCC encoded point cloud into a data format that can be renderred directly by the display engine.

Referring to FIG. 11, FIG. 11 is a schematic structural diagram of a pipeline corresponding to the G-PCC encoded point cloud in some embodiments of the present disclosure. As shown in FIG. 11, the pipeline 1100 supporting the media file with the type G-PCC encoded point cloud includes an input module 111, a decapsulation module 112, a geometric decoder 113, an attribute decoder 114, a first post-processing module 115 and a second post-processing module 116.

The input module 111 is used to receive the G-PCC encapsulation file, and input the G-PCC encapsulation file into the decapsulation module 112. Wherein the G-PCC encapsulation file is a file obtained by encapsulating the G-PCC bitstream obtained by G-PCC encoding of point cloud data. Since the G-PCC encapsulation file is presented in a track form, the input module 111 receives a track bitstream of the G-PCC encapsulation file. In addition, it can be seen from the encapsulation rules of the G-PCC bitstream that the G-PCC encapsulation file may be a single track or a multi-track. Therefore, the G-PCC encapsulation file received by the input module 111 in the embodiment of the present disclosure may be a single track or a multi-track. The embodiment of the present disclosure does not limit this.

The decapsulation module 112 is used to decapsulate the G-PCC encapsulation file input by the input module 111 to obtain the G-PCC bitstream (including the geometric information bitstream and the attribute information bitstream), input the geometric information bitstream to the geometric decoder 113 and input the attribute information bitstream to the attribute decoder 114. It should be noted that with the development of related technologies, the G-PCC bitstream may also increase the bitstream of other information. When the G-PCC bitstream also includes the bitstream of other information, the decapsulation module 112 may decapsulate the G-PCC encapsulation file to obtain the bitstream of other information, and input the bitstream of other information into the corresponding decoder.

The geometric decoder 113 is used to decode the geometric information bitstream output by the decapsulation module 112 to obtain geometric information of the point cloud. The main steps of decoding the geometric information bitstream by the geometric decoder 113 include: obtaining the geometric information of the point cloud through arithmetic decoding, octree synthesis, surface fitting, reconstructing geometry, inverse coordinate conversion, etc. The specific implementation of decoding the geometric information bitstream by the geometric decoder 113 can refer to the workflow of the geometric decoding module 81 in FIG. 8, which is not be described in detail here.

The attribute decoder 114 is used to decode the attribute information bitstream input by the decapsulation module 112 to obtain the attribute information of the point cloud. The main steps of decoding the geometric information bitstream by the attribute decoder 114 include: obtaining the attribute information bitstream through attribute prediction, promotion, inverse operation of the RAHT transformation, etc. The specific implementation of decoding the attribute information bitstream by the attribute decoder 114 may refer to the workflow of the attribute decoding module 82 in FIG. 8, which will not be described in detail here.

The first post-processing module 115 is used to process the geometric information output by the geometric decoder 113. After completing the decoding of the geometric information bitstream, the geometric information of the points in the G-PCC encoded point cloud can be obtained, and in some cases, the obtained geometric information can be used directly by the display engine. However, since the scene description framework does not limit the display engine too much or define it specifically, a wide variety of display engines may appear. These different display engines may have different requirements for the input data, so the first post-processing module 115 is added after completing the decoding of the geometric information bitstream, thus ensuring that the geometric information of the output of the pipeline is available to any display engine. In some embodiments, processing the geometric information by the first post-processing module 115 includes: coverting the format of the geometric information.

The second post-processing module 116 is used to process the attribute information output by the attribute decoder 114. After completing the decoding of the attribute information bitstream, the attribute information of the points in the G-PCC encoded point cloud can be obtained, and in some cases, the attribute information can be used directly by the display engine. However, since the scene description framework does not limit the display engine too much or define it specifically, a wide variety of display engines may appear. These different display engines may have different requirements for the input data, so the second post-processing module 116 is added after completing the decoding of the attribute information bitstream, thus ensuring that the attribute information of the output of the pipeline is available to any display engine. In some embodiments, processing the attribute information by the second post-processing module 116 includes: coverting the format of the attribute information.

Finally, the processed geometry information output by the first post-processing module 115 and the processed attribute information output by the second post-processing module 116 are written to the buffer 117 so that the display engine 118 reads the geometry information and the attribute information from the buffer as needed, and renders and displays the G-PCC encoded point cloud in the three-dimensional scene based on the read geometry information and the attribute information.

### V. Buffer API supporting the media files with the type of G-PCC encoded point cloud

After the media access function completes the processing of the G-PCC encoded point cloud data through the pipeline, the media access function also needs to deliver the processed data to the display engine in a standardized arrangement structure, which requires the processed G-PCC encoded point cloud data to be correctly stored in the buffer, and the work is completed by the buffer management module. However, the buffer management module needs to obtain buffer management instructions from the media access function or the display engine through the buffer API.

In some embodiments, the media access function may send a buffer management instruction to the buffer management module via a buffer API. The buffer management instruction is a buffer management instruction sent by the display engine to the media access function through the media access function API.

In some embodiments, the display engine may send buffer management instructions to the buffer management module through the buffer API.

That is, the buffer management module can communicate with the media access function through the buffer API, or communicate with the display engine through the buffer API, and the purpose of communicating with the media access function or the display engine is to achieve buffer management. When the buffer management module communicates with the media access function through the buffer API, the display engine needs to firstly send the buffer management instructions to the media access function through the media access function API, and then the media access function sends the buffer management instructions to the buffer management module through the buffer API. When the buffer management module communicates with the display engine through the buffer API, it is only needed that the display engine generates the buffer management instructions based on the buffer management information parsed from the scene description document, and sends the buffer management instructions to the buffer management module through the buffer API.

In some embodiments, the buffer management instructions may include one or more of an instruction to create a buffer, an instruction to update the buffer, an instruction to release the buffer.

### VI. Buffer management module supporting the media files with the type of G-PCC encoded point cloud

In the workflow of the scene description framework of the immersive media, after the media access function completes the processing of the G-PCC encoded point cloud data through the pipeline, the processed G-PCC encoded point cloud data needs to be delivered to the display engine in a standardized arrangement structure, which requires the processed G-PCC encoded point cloud data to be stored correctly in the buffer, and the work is the reponsibility of the buffer management module.

The buffer management module achieves the management operations, such as buffer creating, updating, releasing, etc., and the instructions of the operations are received through the buffer API. The rules of buffer management are recorded in the scene description document, are parsed by the display engine, and finally are transmitted to the buffer management module by the display engine or the media access function. After being processed by the media access function, the media file needs to be stored in a suitable buffer and is then accessed by the display engine. The role of the buffer management is to manage these buffers to match these buffers with the format of the processed media data without disturbing the processed media data. The specific method for designing the media management module should refer to the design of the display engine and the media access function.

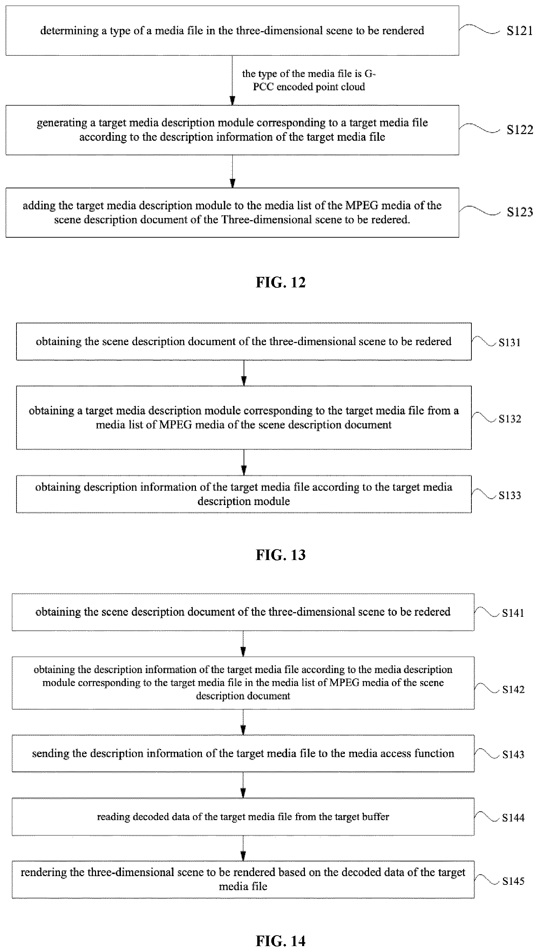

On the basis of the above contents, some embodiments of the present disclosure provide a method for generating a scene description document. Referring to FIG. 12, the method for generating the scene description document includes the following steps S121 ~ S123:
S121. Determining the type of a media file in the three-dimensional scene to be rendered.

The type of the media file in the embodiment of the present disclosure may include one or more of a G-PCC encoded point cloud, a V-PCC encoded point cloud, a haptic media file, a 6DoF video, an MIV video, etc., and there may be any number of media files with the same type. For example, the three-dimensional scene to be rendered may include only one media file with the type G-PCC encoded point cloud. For another example, the three-dimensional scene to be rendered may include a media file with the type G-PCC encoded point cloud and a media file with the type V-PCC encoded point cloud. For another example, the three-dimensional scene to be rendered may include two media files with the type G-PCC encoded point cloud and a haptic media file.

In step S121 above, if the type of the target media file in the three-dimensional scene to be rendered is a G-PCC encoded point cloud, the following step S122 is performed:
S122. generating a target media description module corresponding to the target media file according to the description information of the target media file.

In some embodiments, the description information of the target media file includes one or more of a name of the target media file, whether the target media file needs to be autoplayed, whether the target media file needs to be played on a loop, an encapsulation format of the target media file, a type of a bitstream of the target media file, encoding parameters of the target media file, and the like.

In some embodiments, the above step S122 (generating the target media description module corresponding to the target media file based on the description information of the target media file) includes at least one of the following steps 1221~1229:
Step 1221, adding a media name syntax element (name) in the target media description module, and setting a value of the media name syntax element according to the name of the target media file.

For example, the media name syntax element in the target media description module is "name", the target media file is named "G-PCCexample", so the syntax element "name" is added in the target media description module, and the value of the syntax element "name" is set to "G-PCCexample".

Step 1222, adding an autoplay syntax element (autoplay) to the target media description module, and setting a value of the autoplay syntax element according to whether the target media file needs to be autoplayed.

For example, the autoplay syntax element in the target media description module is "autoplay", the target media file needs to be autoplayed, so the syntax element "autoplay" is added in the target media description module, and the value of the syntax element "autoplay" is set as "ture".

For another example, the autoplay syntax element in the target media description module is "autoplay", the target media file does not need to be autoplayed, so the syntax element "autoplay" is added in the target media description module, and the value of the syntax element "autoplay" is set as "false".

Step 1223, adding a looping syntax element (loop) in the target media description module, and setting a value of the looping syntax element based on whether the target media file needs to be played on a loop.

For example, the loop syntax element in the target media description module is "loop", the target media file needs to be palyed on a loop, so the syntax element "loop" is added in the target media description module, and the value of the syntax element "loop" is set as "ture".

For another example, the loop syntax element in the target media description module is "loop", the target media file does not need to be palyed on a loop, so the syntax element "loop" is added in the target media description module, and the value of the syntax element "loop" is set as "false".

Step 1224, adding alternatives (alternatives) to the target media description module.

Step 1225, adding a media type syntax element (mimeType) in the alternatives, and setting the value of the media type syntax element to the encapsulation format value corresponding to the G-PCC encoded point cloud.

In some embodiments, the encapsulation format corresponding to the G-PCC encoded point cloud is MP4, and the encapsulation format value corresponding to the G-PCC encoded point cloud is application/mp4.

Exemplarily, when the media type syntax element is "mimeType" and the encapsulation format value corresponding to the G-PCC encoded point cloud is "application/mp4", the syntax element "mimeType" is added in the alternatives of the target media description module, and the value of the syntax element "mimeType" is set as "application/mp4".

Step 1226, adding a uniform resource identifier syntax element (uri) to the alternatives (alternatives), and setting the value of the uniform resource identifier syntax element as the access address of the target media file.

For example, the uniform resource identifier syntax element is "uri", the access address of the target media file is "http://www.exp.com/G-PCCexp.mp4", then the syntax element "uri" is added to the alternatives of the target media description module, and the value of the syntax element "uri" is set as http://www.exp.com/G-PCCexp.mp4.

Step 1227, adding a tracks array (tracks) in the alternatives (alternatives).

Step 1228, adding a first track index syntax element (track) to the tracks array of alternatives of the target media description module, and setting a value of the first track index syntax element (track) according to the encapsulation of the target media file.

In some embodiments, the setting the value of the first track index syntax element according to the encapsulation mode of the target media file includes:
setting the value of the first track index syntax element as an index value of a bitstream track of the target media file when the target media file is a single track encapsulation file; and
setting the value of the first track index syntax element as an index value of a geometric bitstream track of the target media file when the target media file is a multi-track encapsulation file.

That is, when the encoded G-PCC encoded point cloud is referenced as an item in MPEG_media.alternative.tracks by the scene description document and the referenced item meets the provisions of track in ISOBMFF: for G-PCC data encapsulated in a single track, the track referenced in MPEG_media is the G-PCC bitstream track. For example, if the G-PCC data is encapsulated by ISOBMFF as an MIHS track, the track referenced in MPEG_media is this bitstream track. For multi-track encapsulated G-PCC data, the track referenced in MPEG_media is the G-PCC geometric bitstream track.

In the embodiments of the present disclosure, the encapsulation mode of the G-PCC encoded point cloud includes a single-track encapsulation and a multi-track encapsulation. The single-track encapsulation refers to the encapsulation mode of encapsulating the geometric bitstream and attribute bitstream of the G-PCC encoded point cloud in the same bitstream track, while the multiple-track encapsulation refers to the encapsulation mode of encapsulating the geometric bitstream and attribute bitstream of the G-PCC encoded point cloud in a plurality of bitstream tracks respectively.

Step 1229, adding a codec parameters syntax element (codecs) to the tracks array of alternatives of the target media description module, and setting a value of the codec parameter syntax element (codecs) according to encoding parameters of the target target media file, the types of the bitstream of the target media file and the ISO/IEC 23090-18 G-PCC data transport standard.

For example, the ISO/IEC 23090-18 G-PCC data transport standard specifies that when G-PCC encoded point clouds are encapsulated in DASH, and when G-PCC preselected signaling is used in MPD files, the "codecs" attribute of the preselected signaling should be set to 'gpc1', which indicates that the preselected media is a geometry-based point cloud; and when there are a plurality of G-PCC Tile tracks in the G-PCC container, the "codecs" attribute of the Main G-PCC Adaptation Set should be set to 'gpcb' or 'gpeb', which indicates that the adaptation set contains G-PCC Tile basic track data. The "codecs" attribute of the Main G-PCC adaptivesset should be set to 'gpcb' when the Tile Component Adaptation Sets only send signals to the single piece of G-PCC component data. The "codecs" attribute of the Main G-PCC Adaptation set should be set to 'gpeb' when the Tile Component Adaptation Sets send signals to all G-PCC component data. When G-PCC Tile preselected signaling is used in an MPD file, the "codecs" attribute of the preselected signaling should be set to 'gpt1', which indicates that the preselected media is geometry-based point cloud fragments. Then the value of "codecs" in the "tracks" of the "alternatives" of the target media description module can be set to 'gpc1' when the G-PCC encoded point cloud is encapsulated in DASH and the MPD file uses the G-PCC preselected signaling.

Exemplarily, when the media file in the three-dimensional scene to be rendered only includes a target media file with the type G-PCC encoded point cloud, the encapsulation format value corresponding to the G-PCC encoded point cloud is "application/mp4", the name of the target media file is "G-PCCexample", the target media file is automatically played and played in a loop, the access address of the target media file is: http://www.exp.com/G-PCCexp.mp4, the target media file is a single track encapsulation file, the index value of the bitstream track of the target media file is 1, the target media file is encapsulated in DASH, and the G-PCC preselected signaling is used in the MPD file, the target media description module corresponding to the target media file can be as follows:

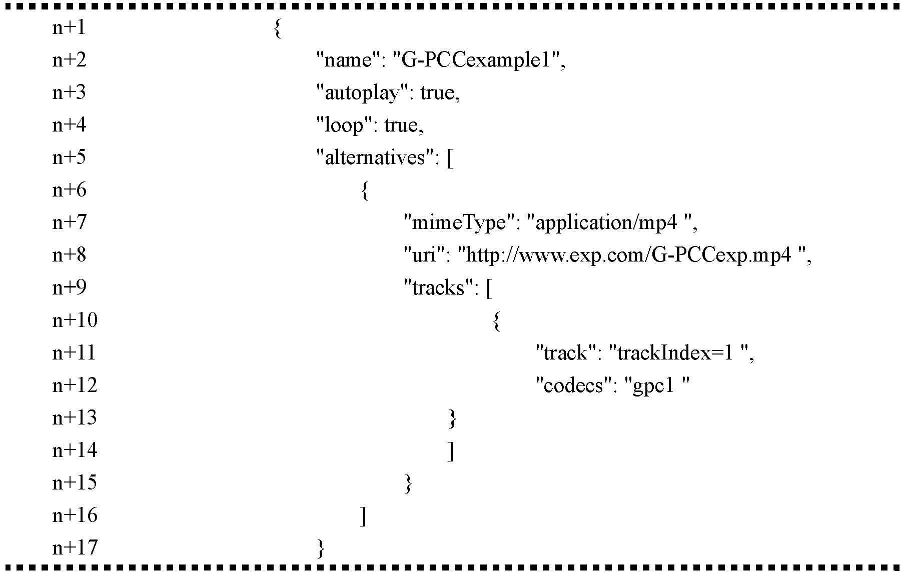

S123, adding the target media description module to the media list (media) of the MPEG media (MPEG_media) of the scene description document of the three-dimensional scene to be rendered.

Wherein the target media description module is a media description module generated based on the description information of the target media file.

Exemplarily, when the media file in the three-dimensional scene to be rendered only includes a target media file with the type G-PCC encoded point cloud, the encapsulation format value corresponding to the G-PCC encoded point cloud is application/mp4, the name of the target media file is "G-PCCexample1", the target media file is automatically played and played in a loop, the access address of the target media file is "uri": http://www.exp.com/G-PCCexp.mp4, the target media file is a single track encapsulation file, the index value of the bitstream track of the target media file is 1, the target media file is encapsulated in DASH, and the G-PCC preselected signaling is used in the MPD file, the MPEG media of the scene description document can be as follows:

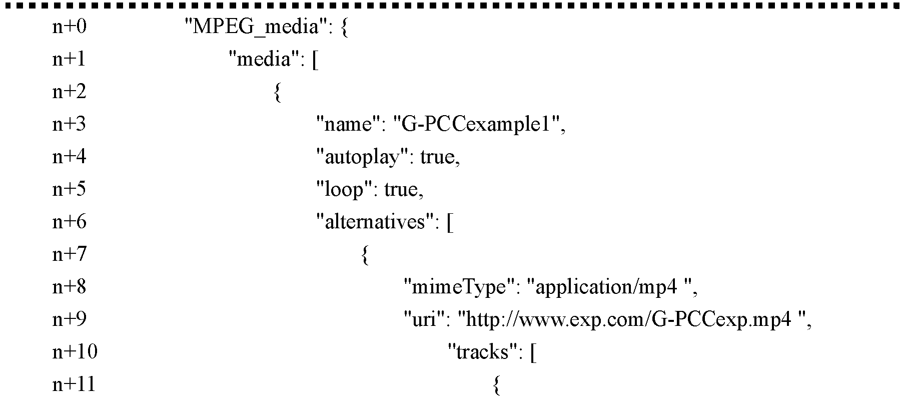

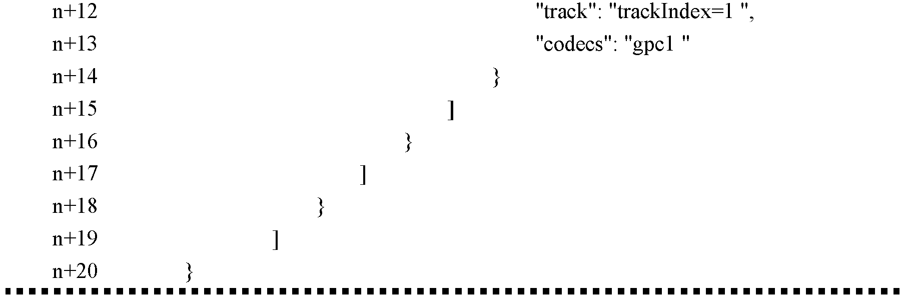

In some embodiments, the three-dimensional scene to be rendered may also include a plurality of media files, and the types of one or more media files in the plurality of media files are the G-PCC encoded point cloud. When the scene description document is generated, a media description module corresponding to the media file with the type of G-PCC encoded point cloud needs to be added according to the above embodiments, and a media description module corresponding to other types of media files are added according to the method for generating other types of media file scene description document.

Exemplarily, when the media file in the three-dimensional scene to be rendered includes a target media file with the type G-PCC encoded point cloud and a haptic media file, the encapsulation format value corresponding to the G-PCC encoded point cloud is "application/mp4", the name of the target media file is "G-PCCexample", the target media file is automatically played and played in a loop, the access address of the target media file is "uri": http://www.exp.com/G-PCCexp.mp4, the target media file is a single track encapsulation file, the index value of the bitstream track of the target media file is 1, the target media file is encapsulated in DASH, and the G-PCC preselected signaling is used in the MPD file, the MPEG media of the scene description document can be as follows:

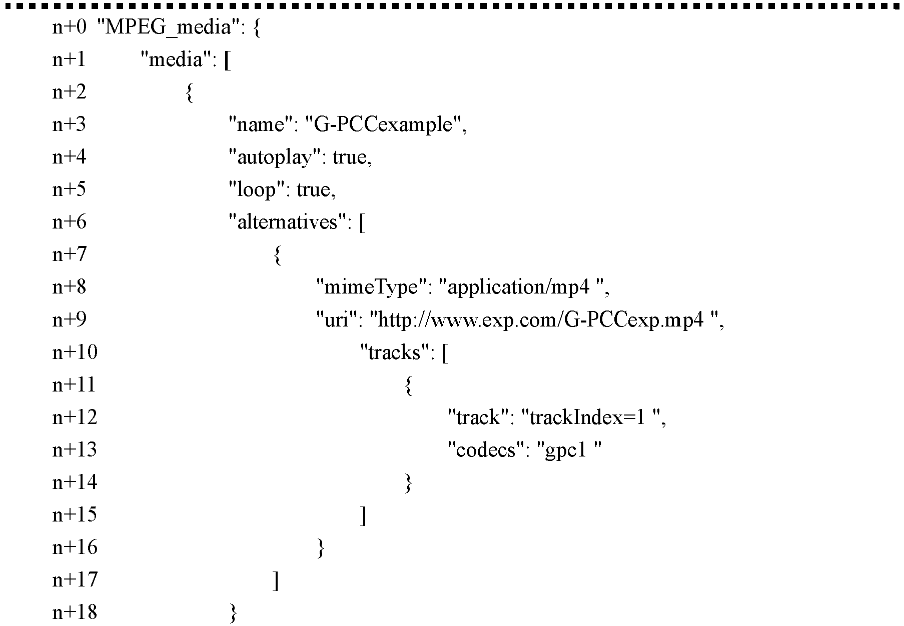

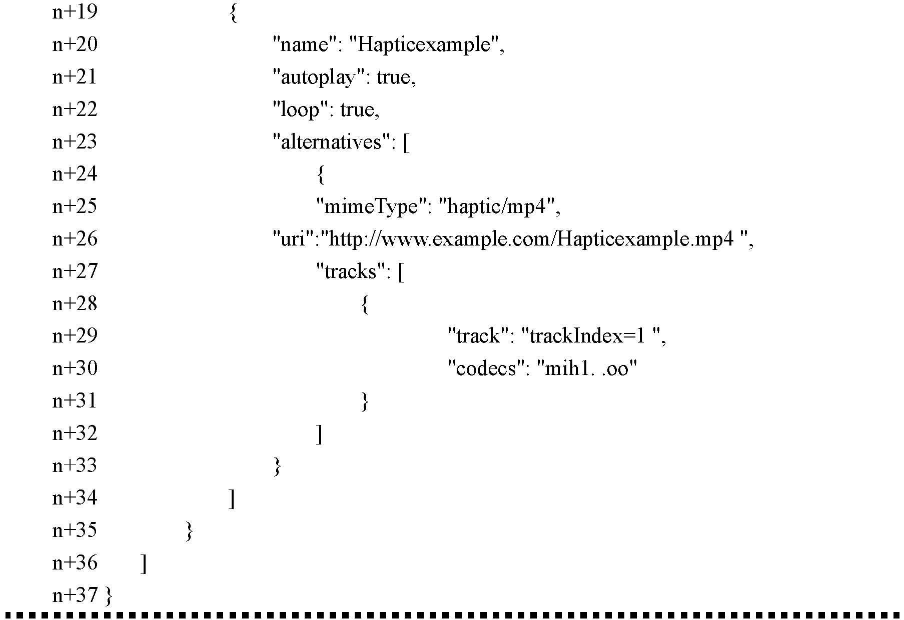

In the above example, the media list (media) of MPEG media includes two braces, the first brace (lines n +2 ~ n +18) includes the media description module corresponding to the target media file with the type G-PCC encoded point cloud, and the second brace (lines n +19 ~ n +35) includes the media description module corresponding to the haptic media file.

The method for generating the scene description document provided by the embodiment of the present disclosure firstly determines the type of the media file in the three-dimensional scene to be rendered when generating the scene description document of the three-dimensional scene to be rendered, and when the type of the target media file in the three-dimensional scene to be rendered is a G-PCC encoded point cloud, generates a target media description module corresponding to the target media file according to the description information of the target media file, and adds the target media description module to the media list of MPEG media of the scene description document of the three-dimensional scene to be rendered. Since the embodiment of the present disclosure can generate a target media description module corresponding to the target media file according to the description information of the target media file when the media file in the three-dimensional scene to be rendered includes a target media file with the type G-PCC encoded point cloud, add the target media description module to the media list of MPEG media of the scene description document of the three-dimensional scene to be rendered, and add the media description module corresponding to the target media file to the media description module list of MPEG media of the scene description document, the embodiment of the present disclosure can generate a scene description document including the three-dimensional scene with the type G-PCC encoded point cloud, and realizes the support of the scene description document to the media file with the type G-PCC encoded point cloud.

In some embodiments, the method for generating the scene description document further includes:
adding the target scene description module (scene) corresponding to the three-dimensional scene to be rendered in a scene list (scenes) of the scene description document, and adding an index value of the node description module corresponding to a node in the scene to be rendered to the node list (nodes) of the target scene description module.

For example, if the three-dimensional scene to be rendered includes two nodes, and the index value of the node description module (node) corresponding to the two nodes is 0 and 1 respectively, the the target scene description module corresponding to the three-dimensional scene to be rendered added to the scene description document can be as follows:

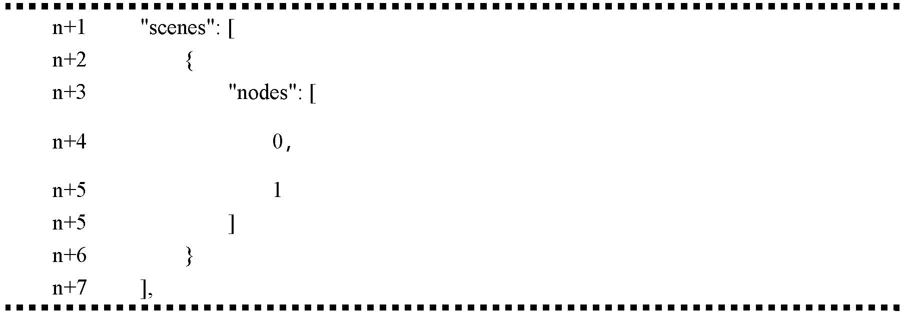

In the above example, the three-dimensional scene to be rendered includes two nodes, and the index values of the node description module corresponding to the two nodes are 0 and 1 respectively, so two index values of 0 and 1 are added to the node list (nodes) of the scene description module corresponding to the three-dimensional scene to be rendered.

In some embodiments, the method for generating the scene description document further includes:
adding the node description module corresponding to a node in the scene to be rendered to a node list (nodes) of the scene description document, and adding an index value of a mesh description module corresponding to a three-dimensional mesh mounted by the node to the mesh index list (mesh) of the node description module.

In some embodiments, the method for generating the scene description document further includes:
adding a node name syntax element (name) to the node description module, and setting the value of the node name syntax element (name) in the corresponding node description module according to the node name.

For example, the three-dimensional scene to be rendered includes two nodes, and the names of the two node are G-PCCexp_node1 and G-PCCexp_node2 respectively. The index values of the mesh description module corresponding to the three-dimensional mesh contained in the node G-PCCexp_node1 are 0 and 1 respectively, and the index value of the mesh description module corresponding to the three-dimensional mesh contained in the node G-PCCexp_node2 is 2. The node list (nodes) of the scene description document can be as follows:

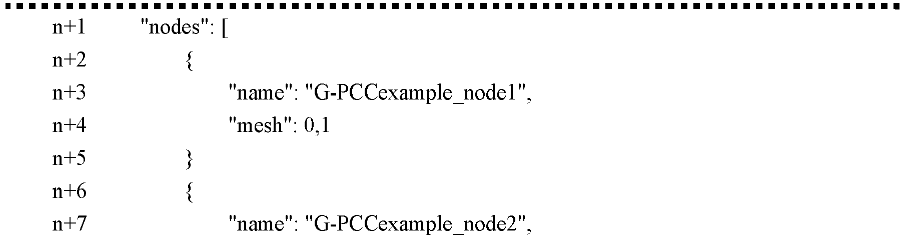

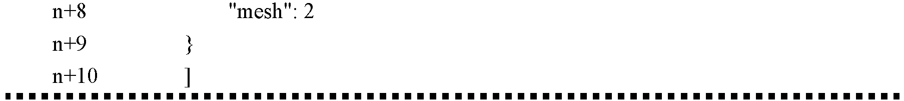

In the above example, the node list (nodes) of the scene description document corresponding to the three-dimensional scene to be rendered includes two node description modules, the first node description module is the content included in the braces of lines n +2 ~ n +5, and the second node description module is the content included in the braces of lines n +6 ~ n +9. The value of the node name syntax element (name) in the first node description module is set to the name "G-PCCexp_node1" of the corresponding node, the value of the mesh index syntax element (mesh) in the first node description module is set to the index values 0 and 1 of the mesh description module corresponding to the three-dimensional mesh mounted by the corresponding node, the value of the node name syntax element (name) in the second node description module is set to the name "G-PCCexp_node2" of the corresponding node, and the value of the mesh index syntax element (mesh) in the second node description module is set to the index value 2 of the mesh description module corresponding to the three-dimensional mesh mounted by the corresponding node.

In some embodiments, the method for generating the scene description document further includes:
adding a mesh description module (mesh) corresponding to the three-dimensional mesh in the scene to be rendered to a mesh list (meshes) of the scene description document, adding a syntax element corresponding to various types of data contained in the three-dimensional mesh corresponding to the mesh description module to the mesh description module, and setting the value of the syntax element corresponding to various types of data to an index value of the accessor description module corresponding to the accessor for accessing various types of data.

In embodiments of the present disclosure, the data contained in the three-dimensional mesh may include one or more of: geometric coordinates (position), color values (color), normal vectors (normal), tangent vectors (tangent), texture coordinates (texcoord), joints (joints), and weights (weights).

In some embodiments, the adding syntax elements corresponding to various types of data contained in the three-dimensional mesh corresponding to the mesh description module to the mesh description module includes:
adding an extension list (extensions) to primitives (primitives) of the mesh description module corresponding to the three-dimensional mesh in the target media file, adding a target extension array to the extension list (extensions), and adding the syntax elements corresponding to various types of data contained in the corresponding three-dimensional mesh to the target extension array.

In some embodiments, the target extension array may be MPEG_primitve_GPCC.

In some embodiments, the adding the syntax elements corresponding to various types of data contained in the corresponding three-dimensional mesh to the target extension array includes: adding the syntax elements corresponding to various types of data contained in the corresponding three-dimensional mesh to the target extension array based on the syntax elements in the first syntax element set. The first syntax element set is a set including syntax elements supported in the attributes of the primitives of the mesh description module of the scene description document specified in the ISO/IEC 23090-14 MPEG-I scene description standard.

Specifically, the syntax elements supported by the attributes of the primitives of the mesh description module of the scene description document specified in the ISO/IEC 23090-14 MPEG-I scene description standard include: position, color_n, normal, tangent, texcoord, joints and weights, so the first syntax element set is: {position, color_n, normal, tangent, texcoord, joints, weights}.

Exemplarily, a certain three-dimensional mesh includes geometric coordinates and color data. The index value of the accessor description module corresponding to the accessor used to access the geometric coordinates is 0, and the index value of the accessor description module corresponding to the accessor used to access the color data is 1. Based on the first syntax element set, after adding the syntax elements corresponding to various types of data contained in the corresponding three-dimensional mesh to the target extension array, the mesh description module corresponding to the three-dimensional mesh can be shown as follows:

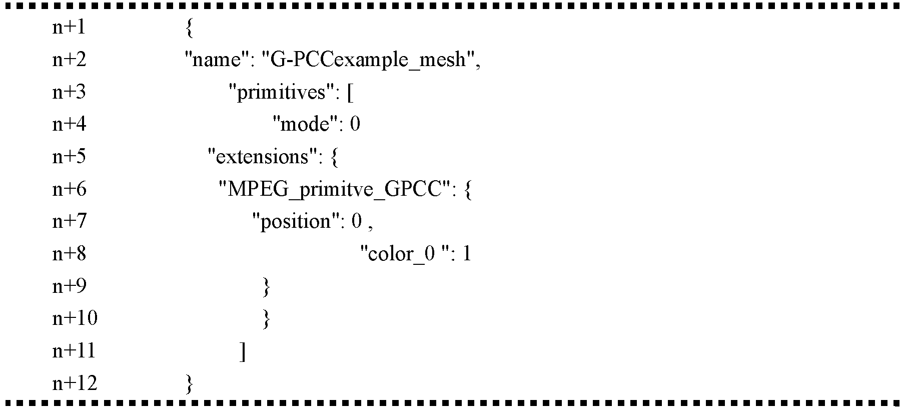

In some embodiments, the adding the syntax elements corresponding to the various types of data contained in the corresponding three-dimensional mesh to the target extension array includes: adding the syntax elements corresponding to the various types of data contained in the corresponding three-dimensional mesh to the target extension array based on a second syntax element set including syntax elements corresponding to a preset G-PCC encoded point cloud.

Exemplarily, the syntax elements corresponding to the G-PCC encoded point cloud may include: G-PCC_position, G-PCC_color_n, G-PCC_normal, G-PCC_tangent, G-PCC_texcoord, G-PCC_joints and G-PCC_weights. Correspondingly, the second syntax element set is: {G-PCC_position, G-PCC_color_n, G-PCC_normal, G-PCC_tangent, G-PCC_texcoord, G-PCC_joints, G-PCC_weights}.

Exemplarily, a certain three-dimensional mesh includes geometric coordinates and color data. The index value of the accessor description module corresponding to the accessor used to access the geometric coordinates is 0, and the index value of the accessor description module corresponding to the accessor used to access the color data is 1. Based on the second syntax element set, after adding the syntax elements corresponding to various types of data contained in the corresponding three-dimensional mesh to the target extension array, the mesh description module corresponding to the three-dimensional mesh can be shown as follows:

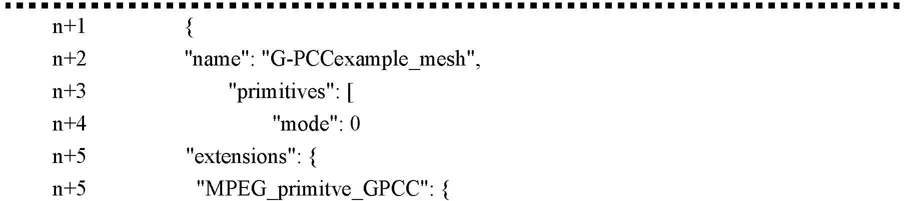

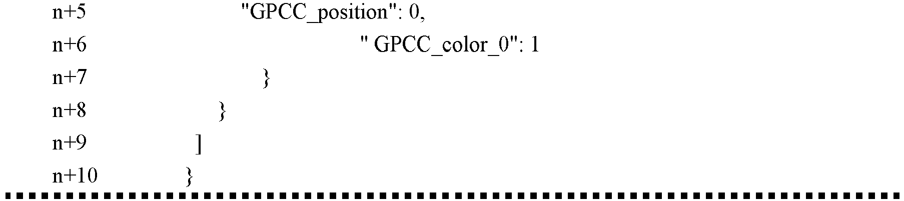

In some embodiments, the adding the syntax elements corresponding to various types of data contained in the three-dimensional mesh corresponding to the mesh description module to the mesh description module includes; adding the syntax elements corresponding to various types of data contained in the three-dimensional mesh corresponding to the mesh description module to attributes (attributes) of primitives (primitives) of the mesh description module.

In some embodiments, the adding the syntax elements corresponding to various types of data contained in the three-dimensional mesh corresponding to the mesh description module to attributes (attributes) of primitives (primitives) of the mesh description module includes: adding the syntax elements corresponding to various types of data contained in the three-dimensional mesh corresponding to the mesh description module to attributes (attributes) of primitives (primitives) of the mesh description module based on the first syntax element set. The first syntax element set is a set including syntax elements supported in the attributes of the primitives of the mesh description module of the scene description document specified in the ISO/IEC 23090-14 MPEG-I scene description standard.

That is, for all three-dimensional meshes in the scene description document (including the three-dimensional meshes in media files with the type G-PCC and the three-dimensional meshes in media files with other types), the syntax elements are added to the attributes (attributes) of the primitives (primitives) of the corresponding mesh description module based on the syntax elements in the same syntax element set.

Exemplarily, a certain three-dimensional mesh includes geometric coordinates and color data. The index value of the accessor description module corresponding to the accessor used to access the geometric coordinates is 1, and the index value of the accessor description module corresponding to the accessor used to access the color data is 2. Based on the first syntax element set, after adding the syntax elements corresponding to various types of data contained in the corresponding three-dimensional mesh to the target extension array, the mesh description module corresponding to the three-dimensional mesh can be shown as follows:

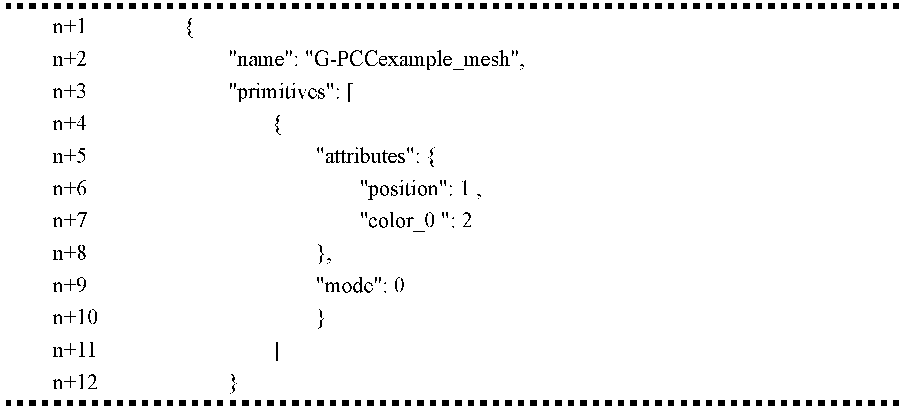

In some embodiments, the adding the syntax elements corresponding to various types of data contained in the three-dimensional mesh corresponding to the mesh description module to the attributes (attributes) of primitives (primitives) of the mesh description module includes: adding the syntax elements corresponding to various types of data contained in the corresponding three-dimensional mesh to the attributes of primitives of the first mesh description module based on the syntax elements of the first syntax element set, and adding the syntax elements corresponding to various types of data contained in the corresponding three-dimensional mesh to the attributes of primitives of the second mesh description module based on the syntax elements of the second syntax element set.

The first mesh description module is a mesh description module corresponding to the three-dimensional mesh in the media file with the type G-PCC encoded point cloud, and the second mesh description module is a mesh description module corresponding to the three-dimensional mesh in a media file without the type G-PCC encoded point cloud.

In some embodiments, the first syntax element set is a set including syntax elements supported in the attributes of the primitives of the mesh description module of the scene description document specified in the ISO/IEC 23090-14 MPEG-I scene description standard; and the second syntax element set is a preset set including syntax elements corresponding to the G-PCC encoded point cloud.

That is, when the syntax elements corresponding to various types of data contained in the three-dimensional mesh are added to the attributes of the primitives of the mesh description module, the three-dimensional mesh in the scene description document needs to be divided into two categories based on whether the three-dimensional mesh belongs to the three-dimensional mesh in the media file with the type G-PCC. For the three-dimensional mesh in the media file whose type is not G-PCC encoded point cloud, the syntax elements corresponding to various types of data are added to the attributes of the primitives of the corresponding mesh description module based on the syntax elements in the first syntax element set; and for a three-dimensional mesh in a media file whose type is G-PCC encoded point cloud, the syntax elements corresponding to various types of data are added to the attributes of the primitives of the corresponding mesh description module based on the syntax elements in the second syntax element set.

Exemplarily, the scene description document includes two three-dimensional meshes, whose names are example_mesh1 and GPCCexample_mesh2 respectively. example_mesh1 does not belong to the three-dimensional mesh in the media file with the type G-PCC, including geometric coordinates and color data. The index value of the accessor description module corresponding to the accessor used to access the geometric coordinates of example_mesh1 is 0. The index value of the accessor description module corresponding to the accessor used to access the color data of example_mesh1 is 1. GPCCexample _mesh2 belongs to the three-dimensional mesh in the media file with the type G-PCC, including geometric coordinates and color data. The index value of the accessor description module corresponding to the accessor for accessing the geometric coordinates of GPCCexample_mesh2 is 2, and the index value of the accessor description module corresponding to the accessor for accessing the color data of GPCCexample _mesh2 is 3. Based on the above embodiment, after adding the syntax elements corresponding to various types of data contained in the corresponding three-dimensional mesh to the target extension array, the mesh list in the scene description documents can be shown as follows:

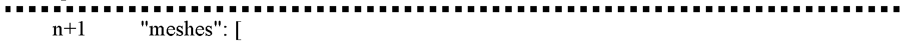

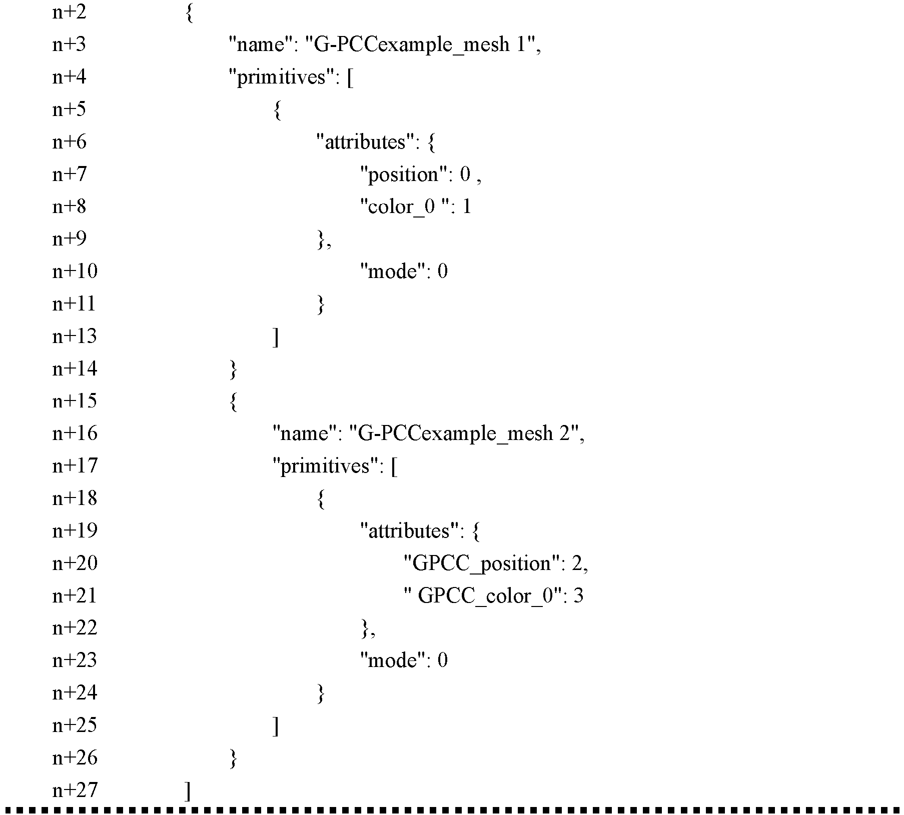

In some embodiments, the method for generating the scene description document further comprises:
setting the value of the mesh name syntax element (name) in the mesh description module corresponding to the three-dimensional mesh based on the name of the three-dimensional mesh.

In some embodiments, the method for generating the scene description document further includes:
setting the syntax elements contained in the attributes of the primitives of the mesh description module corresponding to the three-dimensional mesh based on the kind of data contained in the three-dimensional mesh.

In some embodiments, the method for generating the scene description document further includes:
setting the value of the syntax element, which is used to describe the topology type of the three-dimensional mesh, in the mesh description module corresponding to the three-dimensional mesh based on the type of topology of the three-dimensional mesh.

In some embodiments, the syntax element used to describe the topology type of the three-dimensional mesh in the mesh description module corresponding to the three-dimensional mesh is "mode".

In some embodiments, the method for generating the scene description document further includes:
adding the accessor description module corresponding to the target accessor to the accessor list of the scene description document. The target accessor is an accessor for accessing the decoded data of the target media file.

In some embodiments, the method for generating the scene description documents further includes: adding the buffer description module (buffer) corresponding to the target buffer to the buffer list (buffers) of the scene description document. The target buffer is a buffer for storing the decoded data of the target media file.

In some embodiments, the adding the buffer description module (buffer) corresponding to the target buffer to the buffer list (buffers) of the scene description document includes at least one of the following steps a1 to a5:
Step a1, adding a byte length syntax element (byteLength) to the buffer description module corresponding to the target buffer, and setting a value of the byte length syntax element as the byte length of the target media file.

Exemplarily, when the amount of data of the G-PCC encoded point cloud is 15000, the value of "byteLenth" in the buffer description module is set as "15000".

Step a2. adding an MPEG circular buffer (MPEG_buffer_circular) to the buffer description module corresponding to the target buffer.

Step a3. adding a link count syntax elements (count) to the MPEG circular buffer, and setting the value of the corresponding link count syntax elements (count) based on the number of storage links of the target buffer.

For example, if the number of storage links of the circular buffer is 8, "count" and its value in the circular buffer are set as: "count":8.

Step a4, adding a media index syntax element (media) to the MPEG circular buffer, and setting a value of the media index syntax element (media) based on the index value of the target media description module.

For example, if the index value of the target media description module is 0, "media" and its value in the description module of the circular buffer are set as "media":0.

Step a5, adding a second track index syntax element (tracks) to the MPEG circular buffer, and setting a value of the second track index syntax element (tracks) based on the track index value of the source data of the data stored in the target buffer.

For example, if the index value of the bitstream track to which the data stored in the circular buffer belongs is 1, the "tracks" in the description module of the circular buffer and its value can be set as "tracks":"#trackIndex=1".

Exemplarily, if adding the buffer description module corresponding to the target buffer to the buffer list of the scene description document includes each of steps a1 to a5 above, the byte length of the target media file is 9000, the number of storage links of a certain target buffer is 8, the index value of the media description module corresponding to the target media file is 1, and the track index value of the source data of the data stored in the MPEG circular buffer is 1, the buffer description module corresponding to the target buffer added to the buffer list of the scene description document can be shown as follows:

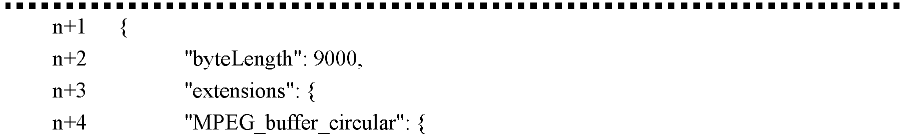

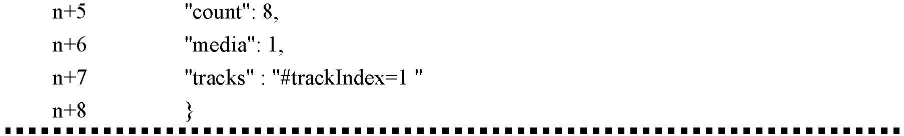

In some embodiments, the method for generating the scene description document further includes: adding a bufferview description module corresponding to a bufferview of the target buffer to a bufferview list (bufferViews) of the scene description document.

In some embodiments, adding the bufferview description module corresponding to the bufferview of the target buffer to the bufferview list of the scene description document includes at least one of the following steps b1 ~ b3:
Step b1, adding a buffer index syntax element (buffer) to a bufferview description module corresponding to the bufferview of the target buffer, and setting a value of the buffer index syntax element (buffer) based on the index value of the buffer description module corresponding to the target buffer to which the bufferview belongs.

For example, if the index value of the buffer description module corresponding to a certain buffer is 2, "buffer" and its value in the bufferview description module are set as "buffer":2.

Step b2, adding a second byte length syntax element (byteLength) to a bufferview description module corresponding to the bufferview of the target buffer, and setting a value of the second byte length syntax element (byteLength) based on a capacity of the bufferview.

Step b3, adding an offset syntax element (byte Offset) to a bufferview description module corresponding to the bufferview of the target buffer, and setting a value of the offset syntax element based on the offset of the stored data of the corresponding bufferview.

For example, when the data range of a certain bufferview of the buffer is [1,12000], the "byteLenth" and its value in the bufferview description module corresponding to the bufferview are set as "byteLenth":12000 and the "byteOffset" and its value in the bufferview description module corresponding to the bufferview are set as: "byteOffset":0 based on the steps b2 and b3 described above. When the data range of a certain bufferview of the buffer is [12001,15000], the "byteLenth" and its value in the bufferview description module corresponding to the bufferview are set as "byteLenth":3000 and the "byteOffset" and its value in the bufferview description module corresponding to the bufferview are set as "byteOffset": 12000 based on steps b2 and b3 described above.

Exemplarily, if the adding the bufferview description module corresponding to the bufferview of the target buffer to the bufferview list (bufferViews) of the scene description document includes all steps b1 to b3 described above, the index value of the bufferview description module corresponding to a certain target buffer is 1, the capacity of the target buffer is 8000, and the target buffer includes two bufferviews, the capacity of the first bufferview is 6000 and the offset is 0, the capacity of the second bufferview is 2000 and the offset is 6001, and the bufferview description module corresponding to the bufferview of the target buffer added to the bufferview list of the scene description document is shown as follows:

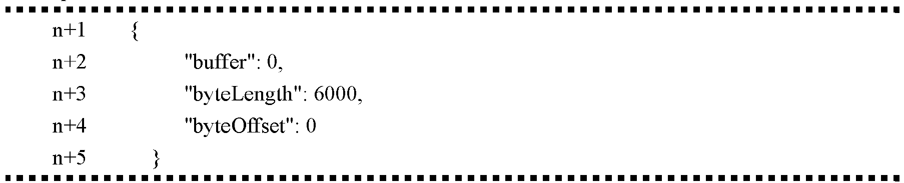

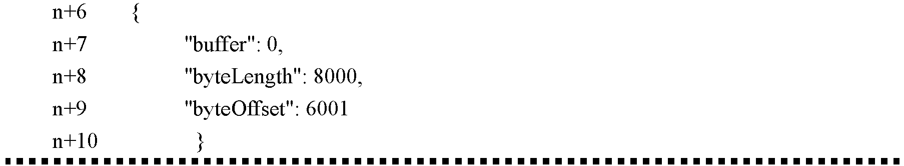

In some embodiments, the method for generating the scene description document further includes: adding an accessor description module corresponding to a target accessor to the accessor list (accessors) of the scene description document. The target accessor is an accessor for accessing the decoded data of the target media file.

In some embodiments, adding the accessor description module corresponding to the target accessor to the accessor list (accessors) of the scene description document includes at least one of the following steps c1~c6:
Step c1, adding a data type syntax element (componentType) to the accessor description module corresponding to the target accessor, and setting a value of the corresponding data type syntax element based on the type of data accessed by the target accessor. For example, when the type of data accessed by a certain accessor is 5126, the data type syntax element and its value in the accessor description module corresponding to the accessor are set as "componentType":5126.
Step c2, adding an accessor type syntax element (type) to the accessor description module corresponding to the target accessor, and setting a value of the accessor type syntax element based on the pre-configured accessor type.
   For example, when the accessor type accssed by a certain accessor is "VEC3", the accessor type syntax element (type) and its value in the accessor description module corresponding to the accessor are set as "type":"VEC3".
Step c3, adding a data count syntax element (count) in the accessor description module corresponding to the target accessor, and setting a value of the corresponding data count syntax element based on the count of the data accessed by the target accessor.
Step c4, adding an MPEG time-varying accessor (MPEG_accessor_timed) in the accessor description module corresponding to the target accessor.
Step c5, adding a bufferview index syntax element (bufferView) to the MPEG time-varying accessor, and setting a value of the corresponding bufferview index syntax element based on the index value of the bufferview description module corresponding to the bufferview storing data accessed by the target accessor.
   For example, when the index value of the bufferview description module corresponding to the bufferview to which the data accessed by a certain accessor belongs is 3, the bufferview index syntax element in the MPEG time-varying accessor of the accessor description module corresponding to the target accessor and its value are set as "bufferView":3.
Step c6, adding a time-varying syntax element (immutable) to the MPEG time-varying accessor, and setting the value of the time-varying syntax element based on whether the value of the syntax element in the corresponding target accessor changes over time.

In some embodiments, when the value of the syntax element in a certain target accessor does not change over time, the time-varying syntax element and its value in the MPEG time-varying accessor of the accessor description module corresponding to the target accessor are set as "immutable":ture. When the value of the syntax element in a certain target accessor changes over time, the time-varying syntax element and its value in the MPEG time-varying accessor of the accessor description module corresponding to the target accessor are set as "immutable":false.

Exemplarily, if adding the accessor description module corresponding to the target accessor for accessing data in a bufferview of the target accessor to the accessor list (accessors) of the scene description document includes all steps c1 to c6 described above, the type of data accessed by a certain target accessor is 5121, the accessor type of the target accessor is VEC2, the data count accessed by the target accessor is 4000, the index value of the bufferview description module corresponding to the bufferview storing the data that the target accessor needs to access is 1, and the value of the syntax element in the corresponding accessor does not change over time, the accessor description module corresponding to the target accessor added to the accessor list (accessors) of the scene description document can be shown as follows:

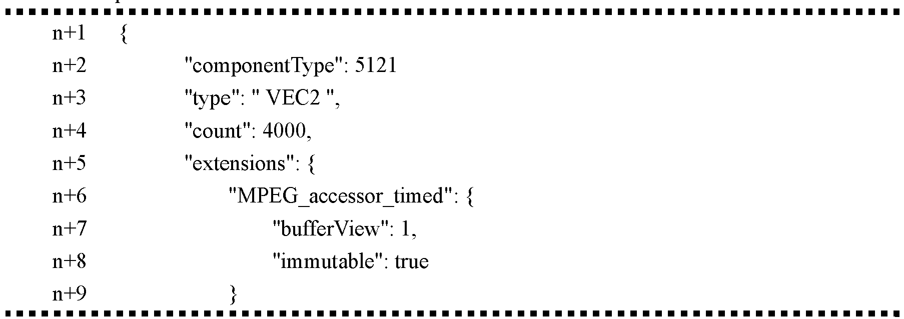

In some embodiments, the method for generating the scene description document further includes:
adding a digital asset description module (asset) to the scene description document, adding a version syntax element (version) to the digital asset description module, and setting the value of the version syntax element as 2.0 when the scene description document is written for scene description based on the glTF 2.0 version.

Exemplarily, the digital asset description module added to the scene description document can be shown as follows:

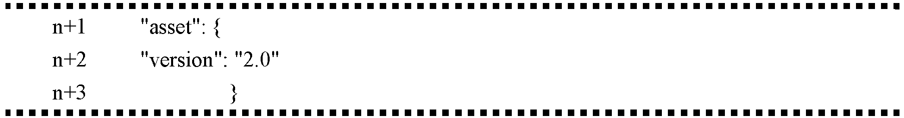

In some embodiments, the method for generating the scene description document further includes:
adding an extension usage description module (extensionsUsed) to the scene description document, and adding an extension of the scene description document to the extenson usage description document, wherein the extension of the scene description document is an extension of the MPEG used by the scene description document to the glTF2.0 version.

Exemplarily, the MPEG extensions used in the scene description document include MPEG media (MPEG_media), MPEG circular buffers (MPEG_buffer_circular), and MPEG time-varying accessors (MPEG_accessor_timed). The extension usage description module added to the scene description document can be shown as follows:

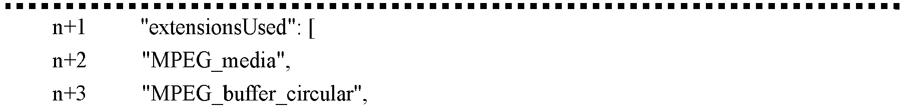

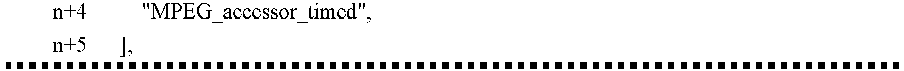

In some embodiments, the method for generating the scene description document further includes:
adding a scene statement (scene) to the scene description document, and setting the value of the scene statement as the index value of the scene description module corresponding to the scene to be rendered.

Exemplarily, if the index value of the scene description module corresponding to the scene to be rendered is 0, the adding the scene statement to the scene description document can be shown as follows:

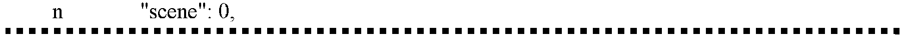

Some embodiments of the present disclosure also provide a method for parsing the scene description document. Referring to FIG. 13, the method for parsing the scene description document includes the following steps: S131 ~ S133:
S131, Obtaining the scene description document of the 3D scene to be rendered.

The three-dimensional scene to be rendered includes a target media file with the type G-PCC encoded point cloud.

In the embodiments of the present disclosure, the three-dimensional scene to be rendered includes one or more media files, and when the three-dimensional scene to be rendered includes a plurality of media files, the type of the one or more media files of the plurality of media files may be a G-PCC encoded point cloud. When the three-dimensional scene to be rendered includes a plurality of target media files with the type G-PCC encoded point cloud, the parsing method provided in the embodiment of the present disclosure can be performed on the target media files with the type G-PCC encoded point cloud respectively.

S132, Obtaining a target media description module corresponding to the target media file from a media list (media) of MPEG media (MPEG_media) of the scene description document.

Exemplary, the target media description module corresponding to the target media file can be shown as follows:

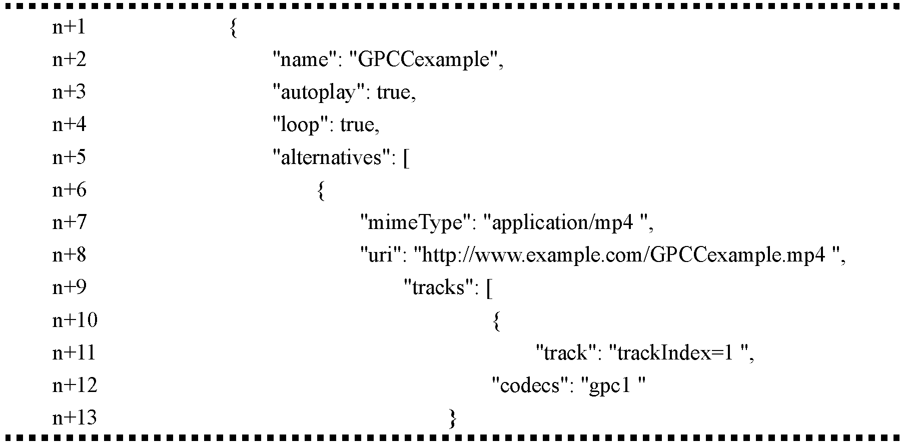

S133, Obtaining description information of the target media file according to the target media description module.

In some embodiments, step S133 descrived above (obtaining description information of the target media file according to the target media description module) includes at least one of the following steps 1331 to 1337:
Step 1331, obtaining a name of the target media file according to a value of a media name syntax element (name) in the target media description module.
   For example, if the media name syntax element in the target media description module and its value are: "name": "GPCCexample", the name of the target media file can be determined as: GPCCexample.
Step 1332, determining whether the target media file needs to be autoplayed based on a value of an autoplay syntax element (autoplay) in the target media description module.
   In some embodiments, the determining whether the target media file needs to be autoplayed based on the value of the autoplay syntax element (autoplay) in the target media description module includes: determining that the target media file needs to be autoplayed when the autoplay syntax element (autoplay) in the target media description module and its value are: "autoplay": true; and determining that the target media file does not need to be autoplayed when the autoplay syntax element (autoplay) in the target media description module and its value are: "autoplay": false.
Step 1333, determining whether the target media file needs to be played in a loop based on a value of a loop syntax element (loop) in the target media description module.
   In some embodiments, the determining whether the target media file needs to be palyed in a loop based on the value of the loop syntax element (loop) in the target media description module includes: determining that the target media file needs to be played in a loop when the loop syntax element (loop) in the target media description module and its value are: "loop": true; and determining that the target media file does not need to be palyed in a loop when the loop syntax element (loop) in the target media description module and its value are: "loop": false.
Step 1334, obtaining an encapsulation format of the target media file based on a value of a media type syntax element (mimeType) in alternatives (alternatives) of the target media description module.
   Since when the media file type is a G-PCC encoded point cloud, the value of the media type syntax element (mimeType) in the media description module corresponding to the media file is set to the encapsulation format value corresponding to the G-PCC encoded point cloud, and the encapsulation format value corresponding to the G-PCC encoded point cloud may be: "application/mp4", when the encapsulation format value corresponding to the G-PCC encoded point cloud is: "application/mp4", the encapsulation format of the target media file may be obtained as MP4.
Step 1335, obtaining an access address of the target media file based on a value of a unique address identifier syntax element (uri) in alternatives (alternatives) of the target media description module.
   For example, the unique address identifier syntax element in the alternatives (alternatives) of the target media description module and its value are: "uri": "http://www.example.com/GPCCexample.mp4", it can be determined that the access address of the target media file is http://www.example.com/GPCCexample.mp4.
Step 1336, obtaining track information of the target media file according to a value of a first track index syntax element (track) in a tracks array (tracks) of alternatives (alternatives) of the target media description module.
   In some embodiments, obtaining track information of the target media file according to the value of the first track index syntax element (track) in the track array (tracks) of the alternatives (alternatives) of the target media description module includes: determining the value of the first track index syntax element as an index value of a bitstream track of the target media file when the encapsulation file of the target media file is a single track encapsulation file; and determining the value of the first track index syntax element as an index value of a geometric bitstream track of the target media file when the target media file is a multi-track encapsulation file.
Step 1337, determining the type and decoding parameters of the bitstream of the target media file according to the values of the codecs syntax element (codecs) in the tracks array (tracks) of the alternatives (alternatives) of the target media description module and the ISO/IEC 23090-18 G-PCC data transport standard.

In some embodiments, the above step 1337 (determining the type and decoding parameters of the bitstream of the target media file according to the values of the codecs syntax element (codecs) in the tracks array (tracks) of the alternatives (alternatives) of the target media description module and the ISO/IEC 23090-18 G-PCC data transport standard) includes the following steps 13371 and 13372:
Step 13371, determining the type of bitstream and encoding parameters of the bitstream of the target media file according to the values of the codecs syntax element (codecs) in the tracks array (tracks) of the alternatives (alternatives) of the target media description module and the ISO/IEC 23090-18 G-PCC data transfport standard.
   The ISO/IEC 23090-18 G-PCC data transport standard specifies that when G-PCC coded point clouds are encapsulated in DASH, and when G-PCC preselected signaling is used in MPD files, the "codecs" attribute of the preselected signaling should be set to 'gpc1' which indicates that the preselected media is a geometry-based point cloud; and when there are a plurality of G-PCC Tile tracks in the G-PCC container, the "codecs" attribute of the Main G-PCC Adaptation Set should be set to 'gpcb' or 'gpeb', which indicates that the adaptation set contains G-PCC Tile basic track data. The "codecs" attribute of the Main G-PCC adaptivesset should be set to 'gpcb' when the Tile Component Adaptation Sets only send signals to the single piece of G-PCC component data. The "codecs" attribute of the Main G-PCC Adaptation set should be set to 'gpeb' when the Tile Component Adaptation Sets send signals to all G-PCC component data. When G-PCC Tile preselected signaling is used in an MPD file, the "codecs" attribute of the preselected signaling should be set to 'gpt1', which indicates that the preselected media is geometry-based point cloud fragments. Then the value of "codecs" in the "tracks" of the "alternatives" of the target media description module can be set to 'gpc1' when the G-PCC encoded point cloud is encapsulated in DASH and the MPD file uses the G-PCC preselected signaling. Thus, the encapsulation mode and encoding parameters of the target media file can be determined based on the values of the codecs syntax element (codecs) in the tracks array (tracks) of the alternatives (alternatives) of the target media description module and the ISO/IEC 23090-18 G-PCC data transport standard.
Step 13372, determining the decoding parameters of the target media file according to the encoding parameters of the target media file.

Since the decoding process of the target media file and the encoding process of the target media file are inverse operations, the decoding parameters of the target media file can be determined according to the encoding parameters of the target media file.

Exemplarily, when the target media description module corresponding to the target media file can be shown as follows:

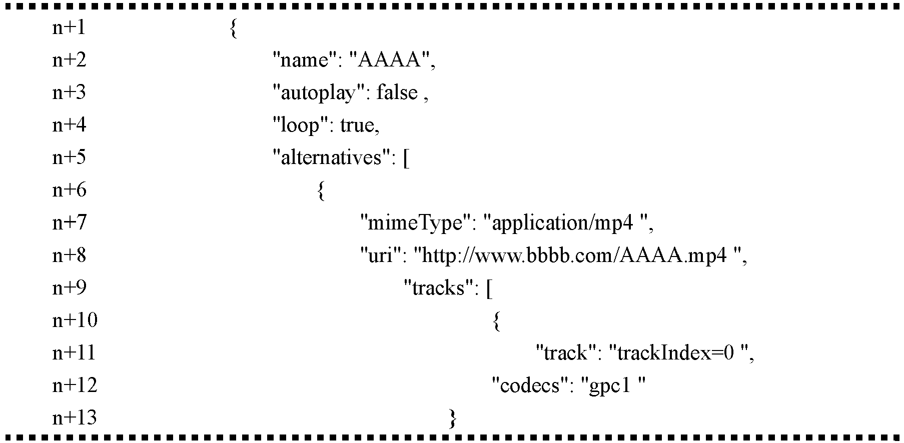

Then, the description information of the target media file obtained according to the target media description module includes: the name of the target media file: AAAA, the target media file does not need to be automatically played, but needs to be played in a loop; the encapsulation format of the target media file is MP4, the access address of the target media file is: http://www.bbbb.com/AAAA.mp4; the reference track of the target media file is the bitstream track with an index value of 0; the encapsulation/decapsulation method of the target media file is MP4; and the codec parameter of the target media file is gpc1.

The method for parsing the scene description document provided by the embodiments of the present disclosure can obtain the target media description module corresponding to the target media file from the media list of MPEG media of the scene description document after obtaining the scene description document of the three-dimensional scene to be rendered including a target media file with the type G-PCC encoded point cloud, and obtain description information of the target media file according to the target media description module. Since the method for parsing the scene description document provided by the embodiments of the present disclosure can obtain the description information of the target media file according to the target media description module, and then render and display the three-dimensional scene to be rendered including the target media file with the type G-PCC encoded point cloud based on the description information of the target media file, the embodiments of the present disclosure provides a method that can parse the scene description document of the three-dimensional scene including the media file with the type G-PCC encoded point cloud, and realizes the parsing of the scene description document of the three-dimensional scene including the G-PCC encoded point cloud.

In some embodiments, the method for parsing the scene description document provided by the above embodiments further includes:
obtaining the target scene description module corresponding to the three-dimensional scene to be rendered from the scene list (scenes) of the scene description document, and obtaining description information of the three-dimensional scene to be rendered according to the target scene description module.

In some embodiments, a scene statement (scene) and an index value of the scene statement can be obtained from the scene description document, and a target scene description module corresponding to the three-dimensional scene to be rendered is obtained from the scene list of the scene description document according to the scene statement and the index value thereof.

For example, if the scene statement and the index value of the statement are "scene": 0, the first scene description module can be obtained from the scene list of the scene description document as the target scene description module corresponding to the three-dimensional scene to be rendered according to the scene statement and the index value of the statement.

In some embodiments, obtaining description information of the three-dimensional scene to be rendered according to the target scene description module includes: determining the index value of the node description module corresponding to a node in the three-dimensional scene to be rendered according to the index value stated by a node index list (nodes) of the target scene description module.

Exemplarily, the target scene description module is shown as follows:

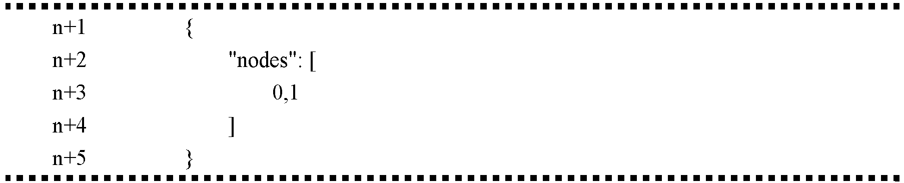

Then, according to the index value stated by the node index list (nodes) of the target scene description module, it can be determined that the three-dimensional scene to be rendered includes two nodes, the index value of the node description module corresponding to one node is 0 (the first node description module in the node list), and the index value of the node description module corresponding to the other node is 1 (the second node description module in the node list).

In some embodiments, after determining the index value of the node description module corresponding to the node in the three-dimensional scene to be rendered based on the index value stated by the node index list (nodes) of the target scene description module, the method for parsing the scene description document provided in the above embodiments further includes:
according to the index value of the node description module corresponding to the node in the three-dimensional scene to be rendered, the node description module corresponding to the node in the three-dimensional scene to be rendered is obtained from the node list (nodes) of the scene description document, and according to the node description module corresponding to the node in the three-dimensional scene to be rendered, the description information of the node in the three-dimensional scene to be rendered is obtained.

For example, when the index value stated by the node index list of the target scene description module only includes 0, the first node description module is obtained from the node list of the scene description document as the node description module corresponding to the node in the three-dimensional scene to be rendered.

For another example, when the index value stated by the node index list of the target scene description module includes 0 and 1, the first node description module and the second node description module are obtained from the node list of the scene description document as node description modules corresponding to nodes in the three-dimensional scene to be rendered.

In some embodiments, according to the node description module corresponding to the node in the three-dimensional scene to be rendered, obtaining the description information of the node in the three-dimensional scene to be rendered includes at least one of the following steps a1 and a2:
Step a1, obtaining the name of the node in the three-dimensional scene to be rendered according to the value of the node name syntax element (name) in the node description module corresponding to the node in the three-dimensional scene to be rendered.
Step a2, determining the index value of the mesh description module corresponding to the three-dimensional mesh mounted on the node of the three-dimensional scene to be rendered according to the index value stated in the mesh index list of the node description module corresponding to the node in the three-dimensional scene to be rendered.

Exemplarily, when the node description module corresponding to a certain node is shown as follows:

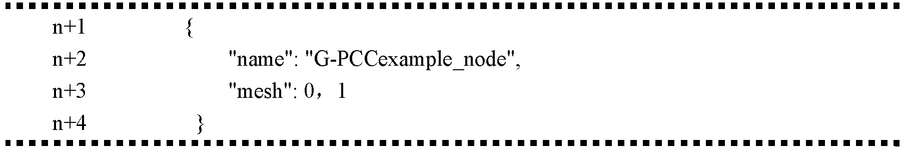

Then, based on the above step a1, it can be determined that the name of the node is: GPCCexample_node. Based on the above step a2, it can be determined that the index values of the mesh description module corresponding to the three-dimensional mesh mounted on the node are 0 and 1 respectively.

In some embodiments, after determining the index value of the mesh description module corresponding to the three-dimensional mesh mounted on the node in the three-dimensional scene to be rendered, the method for parsing the scene description document provided by the above embodiments further includes: obtaining the mesh description module corresponding to the three-dimensional mesh mounted on the node in the three-dimensional scene to be rendered from the mesh list (meshes) of the scene description document according to the index value of the mesh description module corresponding to the three-dimensional mesh mounted on the node in the three-dimensional scene to be rendered; and obtaining description information of the three-dimensional mesh mounted on the node in the three-dimensional scene to be rendered according to the mesh description module corresponding to the three-dimensional mesh mounted on the node in the three-dimensional scene to be rendered.

For example, when the index value stated by the mesh index list of a certain node description module only includes 0, the first mesh description module is obtained from the mesh list of the scene description document as the mesh description module corresponding to the three-dimensional mesh mounted on the node corresponding to the node description module.

For another example, when the index value stated by the mesh index list of a certain node description module includes 1 and 2, a second mesh description module and a third mesh description module are obtained from the mesh list of the scene description document as the mesh description module corresponding to the three-dimensional mesh mounted on the node corresponding to the node description module.

In some embodiments, obtaining the description information of the three-dimensional mesh mounted on the node in the three-dimensional scene to be rendered according to the mesh description module corresponding to the three-dimensional mesh mounted on the node in the three-dimensional scene to be rendered includes at least one of steps b1 to b4 as follows:
Step b1, Obtaining the name of the three-dimensional mesh according to the mesh name syntax element (name) in the mesh description module corresponding to the three-dimensional mesh.
Step b2, obtaining the data type included in the three-dimensional mesh according to the data type syntax element in the mesh description module corresponding to the three-dimensional mesh.

In some embodiments, the above step b2 (obtaining the data type included in the three-dimensional mesh according to the data type syntax element in the mesh description module corresponding to the three-dimensional mesh) includes: obtaining the data type included in the three-dimensional mesh according to the data type syntax element in the target extension array of the extension list (extensions) of the primitives (primitives) of the mesh description module corresponding to the three-dimensional mesh.

In some embodiments, the target extension array may be MPEG_primitve_GPCC.

For example, the extension list (extensions) of primitives (primitives) of the mesh description module corresponding to a certain three-dimensional mesh is shown as follows:

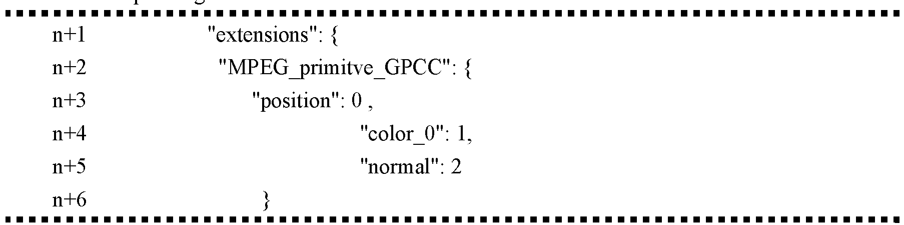

Then, it can be determined that the three-dimensional mesh includes position coordinates according to the position coordinates syntax elements (position) in the target extension array (MPEG_primitve_GPCC) of the extension list (extensions) of the primitives (primitives) of the mesh description module corresponding to the three-dimensional mesh. It can be determined that the three-dimensional mesh includes the color values according to the color value syntax elements (color_0) in the target extension array (MPEG_primitve_GPCC) of the extension list (extensions) of the primitives (primitives) of the mesh description module corresponding to the three-dimensional mesh. It can be determined that the three-dimensional mesh includes normal vectors according to the normal vector syntax element (normal) in the target extension array (MPEG_primitve_GPCC) of the extension list (extensions) of the primitives (primitives) of the mesh description module corresponding to the three-dimensional mesh.

For another example, the extension list (extensions) of the primitives (primitives) of the mesh description module corresponding to a certain three-dimensional mesh is shown as follows:

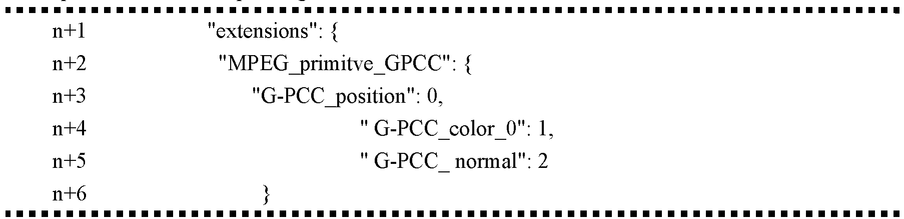

Then, it can be determined that the three-dimensional mesh includes position coordinates according to the position coordinate syntax element (G-PCC_position) in the target extension array (MPEG_primitve_GPCC) of the extension list (extensions) of the primitives (primitives) of the mesh description module corresponding to the three-dimensional mesh. It can be determined that the three-dimensional mesh includes the color values according to the color value syntax element (G-PCC_color_0) in the target extension array (MPEG_primitve_GPCC) of the extension list (extensions) of the primitives (primitives) of the mesh description module corresponding to the three-dimensional mesh. It can be determined that the three-dimensional mesh includes the normal vector according to the normal vector syntax element (G-PCC_normal) in the target extension array (MPEG_primitve_GPCC) of the extension list (extensions) of the primitives (primitives) of the mesh description module corresponding to the three-dimensional mesh.

In some embodiments, the above step b2 (obtaining the data type included in the three-dimensional mesh according to the data type syntax element in the mesh description module corresponding to the three-dimensional mesh) includes: obtaining the data type included in the three-dimensional mesh according to the data type syntax element in the attributes (attributes) of the primitives (primitives) of the mesh description module corresponding to the three-dimensional mesh.

For example, the attributes (attributes) of the primitives (primitives) of the mesh description module corresponding to a certain three-dimensional mesh are shown as follows:

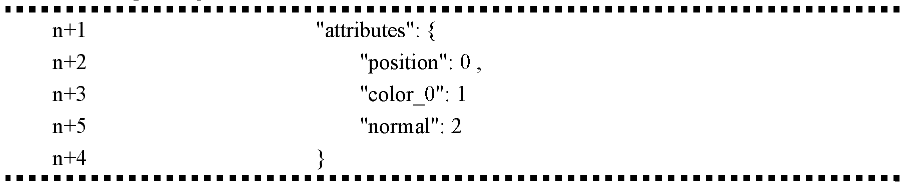

Then, it can be determined that the three-dimensional mesh includes position coordinates according to the position coordinate syntax element (position) in the attributes (attributes) of the primitives (primitives) of the mesh description module corresponding to the three-dimensional mesh. It can be determined that the three-dimensional mesh includes color values according to the color value syntax element (color_0) in the attributes (attributes) of the primitives (primitives) of the mesh description module corresponding to the three-dimensional mesh. And it can be determined that the three-dimensional mesh includes normal vectors according to the normal vector syntax element (normal) in the attributes (attributes) of the primitives (primitives) of the mesh description module corresponding to the three-dimensional mesh.

For another example: the attributes (attributes) of the primitives (primitives) of the mesh description module corresponding to a certain three-dimensional mesh are shown as follows:

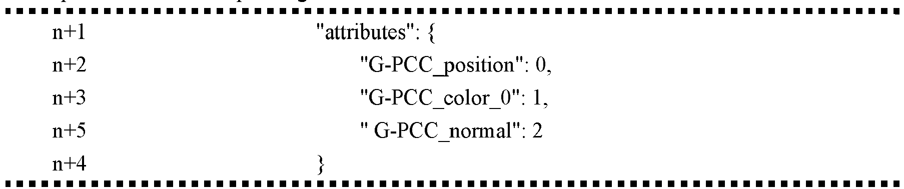

Then, it can be determined that the three-dimensional mesh include the position coordinate according to the position coordinate syntax element (G-PCC_position) in the attributes (attributes) of the primitives (primitives) of the mesh description module corresponding to the three-dimensional mesh. It can be determined that the three-dimensional mesh includes color values according to the color value syntax element (G-PCC color_0) in the attributes (attributes) of the primitives (primitives) of the mesh description module corresponding to the three-dimensional mesh. It can be determined that the three-dimensional mesh includes the normal vector according to the normal vector syntax element (G-PCC normal) in the attributes (attributes) of the primitives (primitives) of the mesh description module corresponding to the three-dimensional mesh.

Step b3, obtaining the index value of the accessor description module corresponding to the accessor for accessing the data type of the three-dimensional mesh according to the value of the data type syntax element.

As described in the above example, the value of the position coordinate syntax element (G-PCC_position) is 0, so it can be determined that the index value of the accessor description module corresponding to the accessor for accessing the position coordinates of the three-dimensional mesh is 0 (the first accessor in the accessor list). The value of the color value syntax element (G-PCC_color_0) is 1, so it can be determined that the index value of the accessor description module corresponding to the accessor for accessing the color value of the three-dimensional mesh is 1 (the second accessor in the accessor list). The value of the normal vector syntax element (G-PCC normal) is 2, so it can be determined that the index value of the accessor description module corresponding to the accessor for accessing the normal vector of the three-dimensional mesh is 2 (the third accessor in the accessor list).

Step b4, obtaining the type of the topology of the three-dimensional mesh according to the value of the mode syntax element (mode) in the mesh description module corresponding to the three-dimensional mesh.

Exemplarily, when the value of the mode syntax element is 0, it can be determined that the type of the topology of the three-dimensional mesh is a scatter point, and when the value of the mode syntax element is 1, it can be determined that the type of the topology of the three-dimensional mesh is a line. When the value of the mode syntax element is 4, it can be determined that the type of the topology of the three-dimensional mesh is a triangle.

Exemplarily, the mesh description module corresponding to a certain three-dimensional mesh is shown as follows:

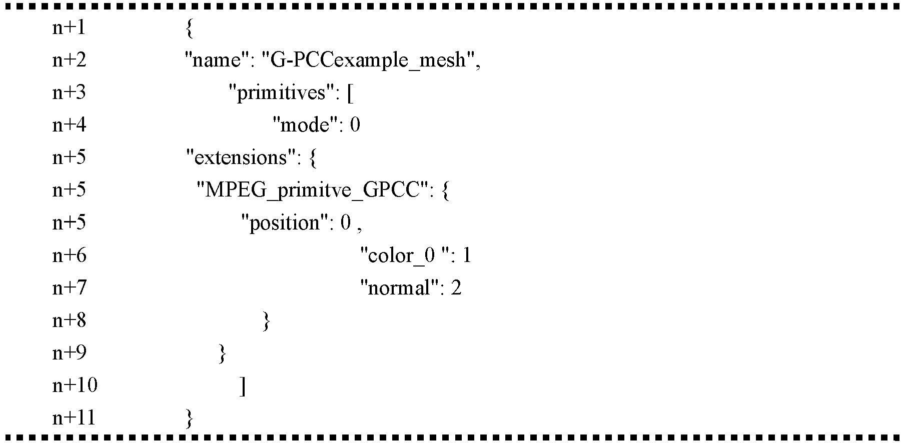

Then, the description information of the three-dimensional mesh obtained according to the mesh description module corresponding to the three-dimensional mesh includes: the name of the three-dimensional mesh is: G-PCCexample_mesh; the type of the topology of the three-dimensional mesh is a scatter point; the three-dimensional mesh includes data with three types, named as position coordinates, color values, and normal vectors respectively; the index value of the accessor description module corresponding to the accessor for accessing the position coordinates of the three-dimensional mesh is 0; the index value of the accessor description module corresponding to the accessor for accessing the color value of the three-dimensional mesh is 1; and the index value of the accessor description module corresponding to the accessor for accessing the normal vector of the three-dimensional mesh is 2.

In some embodiments, after obtaining the index value of the accessor description module corresponding to the accessor for accessing the data type of the three-dimensional mesh based on the value of the data type syntax element, the method further includes:
obtaining, from the accessor list of the scene description document, the accessor description module corresponding to the accessor for accessing the various types of data of the three-dimensional mesh according to the index of the accessor description module corresponding to the accessor for accessing the data type of the three-dimensional mesh, and obtaining, according to the accessor description module corresponding to the accessor for accessing the various types of data of the three-dimensional mesh, description information of the accessor for accessing the various types of data of the three-dimensional mesh.

For example, if the index value of the accessor description module corresponding to the accessor for accessing the color value of the three-dimensional mesh is 1, the second accessor description module is obtained from the accessor list of the scene description document as the accessor description module corresponding to the accessor for accessing the color value of the three-dimensional mesh.

In some embodiments, according to the accessor description module corresponding to the accessor for accessing the various types of data of the three-dimensional mesh, obtaining the description information of the accessor for accessing the various types of data of the three-dimensional mesh includes at least one of the following steps c1 to c6:
Step c1, determining the type of data accessed by the accessor based on the value of the data type syntax element (componentType) in the accessor description module.

For example, if the data type syntax element and its value in the accessor description module corresponding to the accessor for accessing the normal vector of a certain three-dimensional mesh are: "componentType":5126, it can be determined that the data (the normal vector of the three-dimensional mesh) accessed by the accessor corresponding to the accessor description module is a 32-bit float (float).

Step c2, determining the type of the accessor according to the value of the accessor type syntax element (type) in the accessor description module.

For example, if the accessor type syntax element in the accessor description module corresponding to the accessor used to access the position coordinates of a certain three-dimensional mesh and its value are: "type":VEC3, it can be determined that the type of the accessor corresponding to the accessor description module is a three-dimensional vector.

Step c3, determining the count of data accessed by the accessor according to the value of the data count syntax element (count) in the accessor description module.

For example, if the data count syntax element in the accessor description module corresponding to the accessor used to access the color value of a certain three-dimensional mesh and its value are "count": 1000, it can be determined that the count of data (the color value of the three-dimensional mesh) accessed by the accessor corresponding to the accessor description module is 1000.

Step c4, according to whether the accessor description module inlcudes the MPEG time-varying accessor (MPEG_accessor_timed), determining whether the accessor is the time-varying accessor extended and modified based on the MPEG extension.

In some embodiments, determining whether the accessor is the time-varying accessor modified based on the MPEG extension according to whether the accessor description module inlcudes the MPEG time-varying accessor includes: determining that the accessor is a time-varying accessor modified based on the MPEG extension when the accessor description module inlcudes the MPEG time-varying accessor, and determining that the accessor is not a time-varying accessor modified based on an MPEG extension if the accessor description module does not inlcude the MPEG time-varying accessor.

Step c5, determining the index value of the bufferview description module corresponding to the bufferview storing the data accessed by the storage accessor according to the value of the bufferview index syntax element (bufferView) in the MPEG time-varying accessor (MPEG_accessor_timed) of the accessor description module.

For example, if the bufferview index syntax element in the MPEG time-varying accessor of the accessor description module corresponding to the accessor for accessing the normal vector of a certain three-dimensional mesh and its value are "bufferView":0, it can be determined that the data (the normal vector of the three-dimensional mesh) accessed by the accessor corresponding to the accessor description module is stored in the bufferview corresponding to the first bufferview description module in the bufferview list.

Step c6, according to the value of the time-varying syntax element (immutable) in the MPEG time-varying accessor of the accessor description module, determine whether the value of the syntax element in the accessor changes over time.

In some embodiments, determining whether the value of the syntax element in the accessor changes over time according to the value of the time-varying syntax element (immutable) in the MPEG time-varying accessor of the accessor description module includes: if the time-varying syntax element in the MPEG time-varying accessor of the accessor description module and its value are: "immutable": true, determining that the value of the syntax element in the accessor does not change over time; and if the time-varying syntax element in the MPEG time-varying accessor of the accessor description module and its value are: "immutable": false, determining that the value of the syntax element in the accessor changes over time.

Exemplarily, the accessor description module corresponding to a certain accessor is shown as follows:

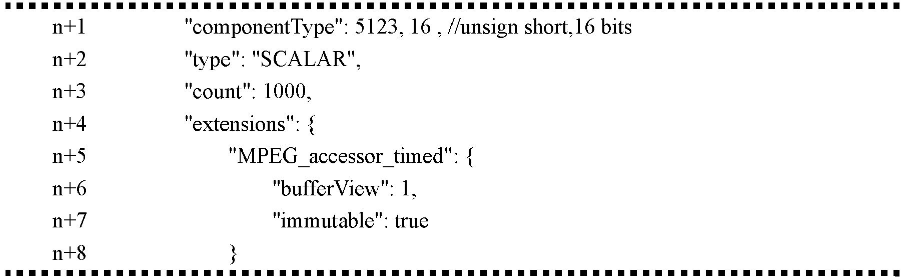

Then, the description information of the accessor obtained according to the accessor description module corresponding to the accessor includes: the type of data accessed by the accessor is 5123; the accessor type is scalar (SCALAR); the count of the data accessed by the accessor is 1000; the accessor is a time-varying accessor modified based on the MPEG extension; the data accessed by the accessor is buffered in the bufferview corresponding to the second bufferview description module in the bufferview list; and the value of the syntax element within the accessor does not change over time.

In some embodiments, the method for parsing the scene description document provided by the above embodiments further includes the following steps d to g:
Step d, obtaining the buffer description module in the buffer list (buffers) of the scene description document.
Step e, Getting the value of the media index syntax element (media) in the buffer description module.
Step f, determining a buffer description module whose value of the media index syntax element is the same as the index value of the target media description module as the target buffer description module corresponding to the target buffer for buffering decoded data of the target media file.

Exemplarily, when the index value of the target media description module is 0, the buffer description module with a value of the media index syntax element being 0 is determined as the target buffer description module corresponding to the target buffer for buffering decoded data of the target media file.

It should be noted that the number of target buffers used to buffer the decoded data of the target media file can be one or more, which is not limited by the embodiments of the present disclosure.

Step g, obtaining the description information of the target buffer according to the target buffer description module.

In some embodiments, obtaining description information of the target buffer according to the target buffer description module includes at least one of steps g1 to g4:
Step g1 obtaining a capacity of the target buffer according to the value of the first byte length syntax element (byteLength) in the target buffer description module.

For example, if the first byte length syntax element in the target buffer description module and its value are "byteLength": 15000, then it can be determined that the capacity of the target buffer is 15000 bytes.

Step g2, according to whether the target buffer description module includes an MPEG circular buffer (MPEG_buffer_circular), determining whether the target buffer is a circular buffer extended and modified based on MPEG extension.

In some embodiments, determining whether the target buffer is a circular buffer modified based on the MPEG extension according to whether the target buffer description module includes the MPEG circular buffer includes determining that the target buffer is a circular buffer modified based on the MPEG extension if the target buffer description module includes an MPEG circular buffer, and determining that the target buffer is not a circular buffer modified based on the MPEG extension if the target buffer description module does not include an MPEG circular buffer.

Step g3, obtaining the count of storage links of the MPEG circular buffer according to the value of the link count syntax elements (count) in the MPEG circular buffer of the target buffer description module.

For example, if the link count syntax element in the MPEG circular buffer of the target buffer description module and its value are: "count": 8, it can be determined that the MPEG circular buffer includes 5 storage links.

Step g4, obtaining the track index value of the source data of the data buffered by the MPEG circular buffer according to the values of the second track index syntax elements (tracks) in the MPEG circular buffer of the target buffer description module.

As an example, the buffer description module corresponding to a certain buffer is shown as follows:

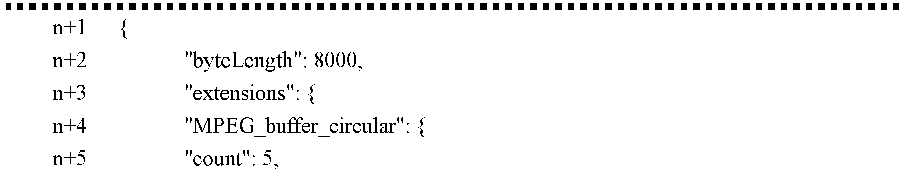

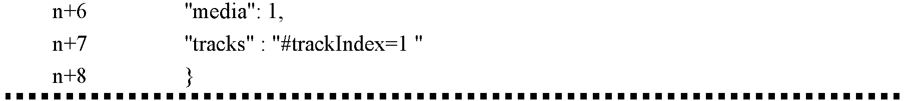

Then, the description information of the buffer obtained according to the buffer description module corresponding to the buffer includes: the capacity of the buffer is 8000 bytes; the buffer is a circular buffer modified based on an MPEG extension; the count of storage links of the circular buffer is 5; the media file stored in the circular buffer is the second media file stated in the MPEG media; and the track index value of the source data of the data buffered by the circular buffer is 1.

In some embodiments, the above-described embodiments provide a method for parsing a scene description document, which further includes the following steps h to k:
Step h, obtaining the bufferview description module in the bufferview list (bufferViews) of the scene description document.
Step i, obtaining the value of the buffer index syntax element (buffer) in the bufferview description module.
Step j, determining a bufferview description module whose value of the buffer index syntax element is the same as the index value of the target buffer description module as a bufferview description module corresponding to the bufferview of the target buffer.

Exemplarily, when the index value of the target media description module is 1, the bufferview description module with a value of the buffer index syntax element of 1 is determined as the bufferview description module corresponding to the bufferview of the target buffer.

It should be noted that the number of bufferviews of the target buffer may be one or more, which is not limited by embodiments of the present disclosure.

Step k, obtaining the description information of the bufferview of the target buffer according to the bufferview description module corresponding to the bufferview of the target buffer.

In some embodiments, obtaining the description information of the bufferview of the target buffer according to the bufferview description module corresponding to the bufferview of the target buffer includes at least one of the following steps k1 and k2:
Step k1, obtaining the capacity of the bufferview of the target buffer according to a value of the second byte length syntax element (byteLength) in the bufferview description module corresponding to the bufferview of the target buffer.

For example, if the second byte length syntax element in the bufferview description module corresponding to a certain bufferview of the target buffer and its value are: "byteLength": 12000, it can be determined that the capacity of the bufferview of the target buffer is 12000 bytes.

Step k2, obtaining an offset of the bufferview of the target buffer according to a value of the offset syntax element (byte Offset) in the bufferview description module corresponding to the bufferview of the target buffer.

For example, if the offset syntax element in the bufferview description module corresponding to a certain bufferview of the target buffer and its value are: "byteOffset": 0, it can be determined that the offset of the bufferview of the target buffer is 0 byte.

Exemplarily, a bufferview description module corresponding to a certain bufferview is shown as follows:

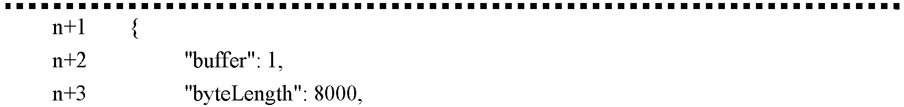

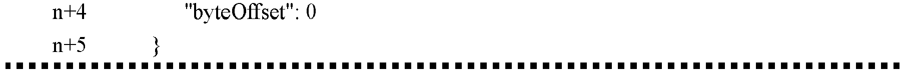

Then, description information of the bufferview obtained according to the bufferview description module corresponding to the bufferview includes that the bufferview is the bufferview of the buffer corresponding to the second buffer description module in the buffer list, the capacity of the bufferview is 8000 bytes, and the offset of the bufferview is 0, that is, the range of data buffered by the bufferview is the first 8000 bytes.

In some embodiments, the above-described embodiments provide the method for parsing a scene description document, which further includes the following steps i to o:
Step i, obtaining the accessor description module in the accessor list of the scene description document.
Step m, obtaining the value of the bufferview index syntax element (bufferView) in the accessor description module.
Step n, determining the accessor description module with the value of the bufferview index syntax element being the same as the index value of the bufferview description module corresponding to the bufferview of the target buffer as the accessor description module corresponding to the accessor for accessing the data in the bufferview of the target buffer.

For example, if an index value of a bufferview description module corresponding to a certain bufferview of the target buffer is 2, the accessor description module with the value of the bufferview index syntax element being 2 is determined as the accessor description module corresponding to the accessor for accessing the data in the bufferview of the target buffer.

Step o, obtaining description information of the accessor for accessing data in the bufferview of the target buffer according to the accessor description module corresponding to the accessor for accessing data in the bufferview of the target buffer.

In some embodiments, obtaining the description information of the accessor for accessing data in the bufferview of the target buffer according to the accessor description module corresponding to the accessor for accessing data in the bufferview of the target buffer includes at least one of steps o1 to o6:
Step o1, Determining the type of data accessed by the accessor based on the value of the data type syntax element (componentType) in the accessor description module.
Step o2, Determining the type of the accessor based on the value of the accessor type syntax element (type) in the accessor description module.
Step o3, determining the count of data accessed by the accessor according to the value of the data count syntax element (count) in the accessor description module.
Step o4, Determining whether the accessor is a time-varying accessor modified based on an MPEG extension according to whether the accessor description module includes the MPEG time-varying accessor (MPEG_accessor_timed).
Step o5, determining the index value of the bufferview description module corresponding to the bufferview of the data accessed by the target accessor according to the value of the bufferview index syntax element (bufferView) in the MPEG time-varying accessor of the accessor description module.
Step o6, according to the value of the time-varying syntax element (immutable) in the MPEG time-varying accessor of the accessor description module, determining whether the value of the syntax element in the accessor changes over time.

The implementation of steps o1 ~ o6 described above can refer to the implementation of steps c1 ~ c6 described above. In order to avoid repetition, it will not be explained in detail here.

Some embodiments of the present disclosure also provide a method for rendering a three-dimensional scene. The execution body of the method for rendering the three-dimensional scene is the display engine in the immersive media description framework. Referring to FIG. 14, the method for rendering the three-dimensional scene includes the following steps:
S141, Obtaining the scene description document of the three-dimensional scene to be rendered.

The three-dimensional scene to be rendered includes a target media file with the type G-PCC encoded point cloud.

In some embodiments, an implementation of obtaining the scene description document of the three-dimensional scene to be rendered includes sending request information for requesting the scene description document of the three-dimensional scene to be rendered to a media resource server, and receiving a request response carrying the scene description document of the three-dimensional scene to be rendered sent by the media resource server.

S142, obtaining the description information of the target media file according to the media description module corresponding to the target media file in the media list (media) of MPEG_media (MPEG_media) of the scene description document.

In some embodiments, the description information of the target media file includes one or more of a name of the target media file, whether the target media file needs to be autoplayed, whether the target media file needs to be played on a loop, an encapsulation format of the target media file, a type of a bitstream of the target media file, encoding parameters of the target media file, and the like.

The implementation method of obtaining the description information of the target media file according to the media description module corresponding to the target media file can refer to the implementation method of parsing the media description module of the target media file in the method for parsing the scene description document described above. In order to avoid repetition, it will not be described in detail here.

S143, Sending the description information of the target media file to the media access function.

After the display engine sends the description information of the target media file to the media access function, the media access function can obtain the target media file according to the description information of the target media file, obtain decoded data of the target media file by processing the target media file, and write the decoded data of the target media file into the target buffer.

In some embodiments, sending the description information of the target media file to the media access function by the display engine includes that the display engine may send description information of the target media file to the media access function via a media access function API.

In some embodiments, sending the description information of the target media file to the media access function by the display engine includes sending the media file processing instructions carrying description information of the target media file to the media access function by the display engine.

S144, Reading decoded data of the target media file from the target buffer.

That is, the data that is fully processed by the media access function and can be directly used for rendering the three-dimensional scene to be rendered is read from the target buffer.

S145, rendering three-dimensional scene to be rendered based on the decoded data of the target media file.

In the method for rendering the three-dimensional scene provided by the embodiments of the present disclosure, after obtaining the scene description document of the three-dimensional scene to be rendered including the target media file with the type G-PCC encoded point cloud, firstly the description information of the target media file is obtained according to the media description module corresponding to the target media file in the media list of the MPEG media of the scene description document, the description information of the target media file is sent to the media access function so that the media access function obtains the target media file according to the description information of the target media file, the decoded data of the target media file is obtained by processing the target media file, the decoded data of the target media file is written to the target buffer, then the decoded data of the target media file is read from the target buffer, and the three-dimensional scene to be rendered is rendered based on the decoded data of the target media file. Since in the method for rendering the three-dimensional scene provided by the embodiment of the present disclosure, the display engine can obtain the description information of the target media file according to the target media description module, send the description information of the target media file to the media access function, read the decoded data of the target media file with the type G-PCC encoded point cloud, and render the three-dimensional scene to be rendered based on the decoded data of the target media file, the embodiment of the present disclosureprovides the method for rendering the three-dimensional scene to be rendered including the media file with the type G-PCC encoded point cloud, which implements rendering the media file with the type G-PCC encoded point cloud based on the scene description document.

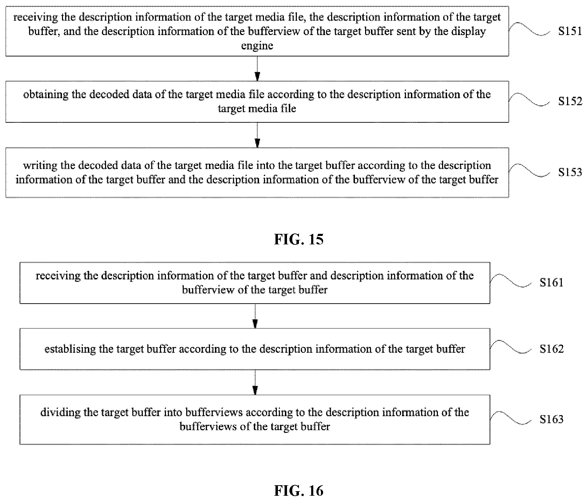

Some embodiments of the present disclosure also provide a method for processing a media file. The execution body of the method for processing the media file is the media access function in the immersive media description framework. Referring to FIG.15, the method for processing the media file includes the following steps:
S151, receiving the description information of the target media file, the description information of the target buffer, and the description information of the bufferview of the target buffer sent by the display engine.

The target media file is a media file with the type G-PCC encoded point cloud, and the target buffer is a buffer for buffering decoded data of the target media file.

In some embodiments, the description information of the target media file may include at least one of the following:
The name of the target media file, whether the target media file needs to be played automatically, whether the target media file needs to be played in a loop, the encapsulation format of the target media file, the type of the bitstream of the target media file, and the encoding parameters of the target media file.

In some embodiments, the description information of the target buffer may include at least one of the following:
The capacity of the buffer, whether the target buffer is an MPEG circular buffer, the storage link count of the circular buffer, the index value of the media description module corresponding to the target media file, and the track index value of the source data of the data buffered by the circular buffer.

In some embodiments, the description information of the bufferview of the target buffer may include at least one of the following:
The buffer to which the bufferview belongs, the capacity of the bufferview, and the offset of the bufferview.

In some embodiments, receiving the description information of the target media file, the description information of the target buffer and the description information of the bufferview of the target buffer sent by the display engine includes:
receiving, via the media access function API, the description information of the target media file, the description information of the target buffer and the description information of the bufferview of the target buffer sent by the display engine.

S152, obtaining the decoded data of the target media file according to the description information of the target media file.

In some embodiments, obtaining the decoded data of the target media file accroding to the description information of the target media file by the media access function includes:
establishing a target pipeline for processing the target media file according to description information of the target media file, obtaining the target media file via the target pipeline, and decapsulating and decoding the target media file to obtain decoded data of the target media file.

In some embodiments, the obtaining the target media file via the target pipeline, and decapsulating and decoding the target media file to obtain decoded data of the target media file includes: obtaining the target media file via an input module of the target pipeline, and inputting the target media file into a decapsulation module of the target pipeline; decoding the target media file via the decapsulation module to obtain a geometric bitstream and an attribute bitstream of the target media file; decoding the geometric bitstream via a geometric decoder of the target pipeline to obtain geometric decoded data of the target media file; and decoding the attribute bitstream via an attribute decoder of the target pipeline to obtain attribute decoded data of the target media file.

In some embodiments, the obtaining the target media file via the target pipeline, and decapsulating and decoding the target media file to obtain decoded data of the target media file further includes: after obtaining the geometric decoded data of the target media file, processing the geometric decoded data via a first post-processing module of the target pipeline; and after obtaining the attribute decoded data of the target media file, processing the attribute decoded data via a second post-processing module of the target pipeline.

Exemplarily, processing the geometric decoded data via the first post-processing module of the target pipeline may include performing format conversion on the geometric decoded data by a first post-processing module of the target pipeline, and processing the attribute decoded data by the second post-processing module of the target pipeline may include performing format conversion on the attribute decoded data by a second post-processing module of the target pipeline.

S153, Writing the decoded data of the target media file into the target buffer according to the description information of the target buffer and the description information of the bufferview of the target buffer.

After writing the decoded data of the target media file into the target buffer, the display engine may read the decoded data of the target media file from the target buffer according to the description information of the target buffer and the description information of the bufferview of the target buffer, and render the three-dimensional scene to be rendered including the target media file based on the decoded data of the target media file.

In the method for processing the media file provided by the embodiment of the present disclosure, after receiving the description information of the target media file with the type G-PCC encoded point cloud, the description information of the target buffer for buffering the decoded data of the target media file and the description information of the bufferview of the target buffer sent by the display engine, the decoded data corresponding to the target media file is obtained based on the description information of the target media file, and the decoded data of the target media file is written into the target buffer based on the description information of the target buffer and the description information of the bufferview of the target buffer. Thus, the display engine can read the decoded data of the target media file from the target buffer based on the description information of the target buffer and the description information of the bufferview of the target buffer, and render the three-dimensional scene to be rendered including the target media file based on the decoded data of the target media file. So the embodiments of the present disclosure can support rendering the media file with the type G-PCC encoded point cloud in the scene description framework.

Some embodiments of the present disclosure also provide a buffer management method. The execution body of the buffer management method is the buffer management module in the immersive media description framework. Referring to FIG. 16, the buffer management method includes the following steps:
S161, receiving the description information of the target buffer and description information of the bufferview of the target buffer.

The target buffer is a buffer for buffering the target media file, and the target media file is a media file with the type G-PCC encoded point cloud.

In some embodiments, the description information of the target buffer may include at least one of the following:
the capacity of the buffer, whether it is an MPEG circular buffer, the storage link count of the circular buffer, the index value of the media description module corresponding to the media file (the target media file) buffered by the circular buffer, and the track index value of the source data of the data buffered by the circular buffer.

In some embodiments, the description information of the bufferview of the target buffer may include at least one of the following:
the buffer to which the bufferview belongs, the capacity of the bufferview, and the offset of the bufferview.

S162, establishing the target buffer according to the description information of the target buffer.

For example, the description information of the target buffer includes: the capacity of the target buffer is 8000 bytes; the target buffer is a circular buffer modified based on an MPEG extension; the storage link count of the circular buffer is 3; the media file stored in the circular buffer is the first media file stated in MPEG media, the track index value of the source data of the data buffered by the circular buffer is 1, and thus the buffer management module establishes a circular buffer with a capacity of 8000 bytes and containing 3 storage links as the target buffer.

S163, dividing the target buffer into bufferviews according to the description information of the bufferviews of the target buffer.

As described in the above embodiments, if the circular buffer includes two bufferviews, the description information of the first bufferview includes: the capacity is 6000 bytes, and the offset is 0; and the description information of the second bufferview includes: the capacity is 2000 bytes, and the offset is 6001; the target buffer is divided into 2 bufferviews, the capacity of the first bufferview is 6000 bytes for buffering the first 6000 bytes of the decoded data of the target media file, and the capacity of the second bufferview is 2000 bytes for buffering the 6001 to 8000 bytes of the decoded data of the target media file.

After the buffer management module divides the target buffer into bufferviews based on the description information of the bufferviews of the target buffer, the media access function may write the decoded data of the target media file into the target buffer, and the display engine may read the decoded data of the target media file from the target buffer, and render the three-dimensional scene to be rendered including the target media file based on the decoded data of the target media file.

In the buffer management method provided by the embodiments of the present disclosure, after receiving the description information of the target buffer and the description information of the bufferview of the target buffer, the target buffer can be established according to the description information of the target buffer, and the target buffer is divided into bufferviews according to the description information of the bufferviews of the target buffer. Then the media access function can write the decoded data of the media file with the type G-PCC encoded point cloud to the target buffer, the display engine can read the decoded data of the target media file from the target buffer, and render the three-dimensional scene to be rendered including the target media file based on the decoded data of the target media file. Thus the embodiment of the present disclosure can support the rendering of media file with the type of the G-PCC encoded point in the scene description framework.

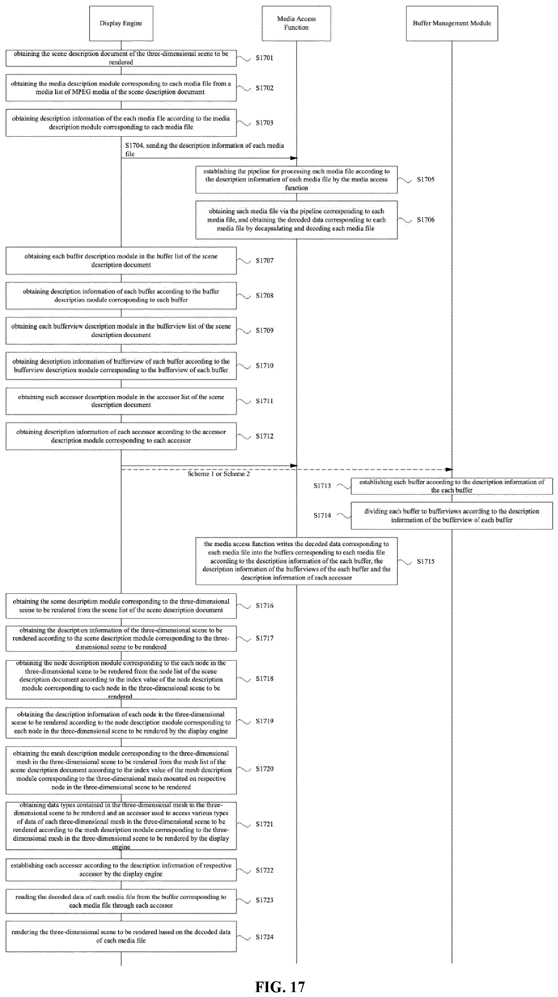

Some embodiments of the present disclosure also provide a method for rendering the three-dimensional scene, the method for rendering the three-dimensional scene includes a method for parsing the scene description document and a method for rendering the three-dimensional scene executed by the display engine, a method for processing the media file executed by the media access function and a buffer management method executed by the buffer management module. As shown in FIG. 17, the method includes the following steps:
S1701, obtaining the scene description document of the three-dimensional scene to be rendered by the display engine.

The three-dimensional scene to be rendered includes a target media file with the type G-PCC encoded point cloud.

In some embodiments, obtaining the scene description document of the scene to be rendered by the display engine includes downloading the scene description document from the server using a network transfer service by the display engine.

In some embodiments, obtaining the scene description document of the scene to be rendered by the display engine includes reading the scene description document from a local storage space.

S1702, obtaining the media description module corresponding to each media file from a media list (media) of MPEG media (MPEG_media) of the scene description document by the display engine (including: obtaining the media description module corresponding to the target media file from the media list of the MPEG media of the scene description document).

S1703, obtaining the description information of each media file according to the media description module corresponding to each media file by the display engine (including: obtaining the description information of the target media file according to the media description module corresponding to the target media file).

In some embodiments, the description information of the media file includes at least one of the following:
the name of the media file, whether the media file is played automatically, whether the media file is played in a loop, the encapsulation format of the media file, the access address of the media file, the track information of the encapsulation file of the media file, and the codec parameters of the media file.

The implementation method of obtaining the description information of the target media file according to the media description module corresponding to the target media file by the display engine can refer to the implementation method for parsing the of media description module of the target media file in the method for pasring the scene description document described above. In order to avoid repetition, it will not be described in detail here.

S1704, sending the description information of each media file to the media access function by the display engine (including: sending the description information of the target media file to the media access function).

Accordingly, the media access function receives the description information of each media file sent by the display engine (including: receiving description information of the target media file sent by the display engine).

In some embodiments, sending the description information of each media file to the media access function by the display engine includes sending the description information of each media file to the media access function via the media access function API by the display engine.

In some embodiments, receiving the description information of each media file sent by the display engine by the media access function includes receiving the description information of each media file sent by the display engine via the media access function API by the media access function.

S1705, establishing the pipeline for processing each media file according to the description information of each media file by the media access function (including establishing the target pipeline for processing the target media file according to the description information of the target media file).

In some embodiments, the target pipeline includes an input module, a decapsulation module, and a decoding module; the input module is used to obtain the target media file (encapsulation file), and the decapsulation module is used to decapsulate the target media file to obtain the bitstream of the target media file (which may be a single-track encapsulated G-PCC bitstream, or a multi-track encapsulated G-PCC geometric bitstream and G-PCC attribute bitstream). The decoding module includes a decoder, a geometric decoder, and an attribute decoder. When the bitstream of the target media file is a single-track encapsulated G-PCC bitstream, the decoding module decodes the G-PCC bitstream through the decoder to obtain the decoded data of the target media file. When the bitstream of the target media file is a multi-track encapsulated G-PCC geometric bitstream and G-PCC attribute bitstream, the geometric decoder and the attribute decoder decode he G-PCC geometry bitstream and the G-PCC attribute bitstream respectively and obtain the geometry data and attribute data of the target media file to obtain the decoded data of the target media file.

In some embodiments, the target pipeline further includes: a first post-processing module and a second post-processing module; the first post-processing module is used for format conversion and other post-processing of the geometric data obtained by decoding the G-PCC geometric bitstream, and the second post-processing module is used for format conversion and other post-processing of the attribute data obtained by decoding the G-PCC attribute bitstream.

S1706, obtaining each media file via the pipeline corresponding to each media file by the media access function, and obtaining the decoded data corresponding to each media file by decapsulating and decoding each media file (including obtaining the target media file via the target pipeline, and obtaining the decoded data corresponding to the target media file by decapsulating and decoding the target media file).

In some embodiments, the description information of the target media file includes an access address of the target media file, and obtaining the decoded data of the target media file based on the description information of the target media file by the media access function includes:
obtaining the target media file according to the access address of the target media file by the media access function .

In some embodiments, obtaining the target media file according to the access address of the target media file by the media access function includes: sending a media resource request to the media resource server based on the access address of the target media file and receiving the media resource response carrying the target media file sent by the media resource server by the media access function.

In some embodiments, obtaining the target media file according to the access address of the target media file by the media access function includes reading the target media file from a preset storage space according to the access address of the target media file by the media access function.

In some embodiments, the description information of the target media file further includes an index value of each bitstream track of the target media file; obtaining the decoded data of the target media file based on the description information of the target media file by the media access function includes:
obtaining the bitstream of each bitstream track of the target media file by decapsulating the target media file based on the target media file encapsulation format by the media access function.

In some embodiments, the description information of the target media file further includes a type of a bitstream and codec parameters of the target media file; obtaining the decoded data of the target media file based on the description information of the target media file by the media access function includes:
obtaining the decoded data of the target media file by decoding the bitstream of each bitstream track of the target media file according to the type of the bitstream and codec parameters of the target media file by the media access function.

S1707, obtaining each buffer description module in the buffer list (buffers) of the scene description document by the display engine (including obtaining the buffer description module corresponding to the target buffer used for buffering decoded data of the target media file from the buffer list of the scene description document).

S1708, obtaining the description information of each buffer according to the buffer description module corresponding to each buffer by the display engine (including: obtaining the description information of the target buffer according to the buffer description module corresponding to the target buffer).

In some embodiments, the description information of the buffer may include at least one of the following:
the capacity of the buffer (bytelength), the access address of the data buffered by the buffer, whether it is an MPEG circular buffer, the storage link count of the circular buffer, the index value of the media description module corresponding to the media file buffered by the circular buffer, and the track index value of the source data of the data buffered by the circular buffer.

S1709, obtaining each bufferview description module in a bufferview list (bufferViews) of the scene description document by the display engine (including obtaining the bufferview description module corresponding to the bufferview of the target buffer from the bufferview list of the scene description document).

S1710, obtaining the description information of the bufferview of each buffer according to the bufferview description module corresponding to the bufferviews of each buffer by the display engine (including: obtaining the description information of the bufferview of the target buffer according to the bufferview description module corresponding to the bufferviews of the target buffer).

In some embodiments, the description information of the buffer may include at least one of the following:
the buffer to which the bufferview belongs, the capacity of the bufferview, and the offset of the bufferview.

S1711, obtaining each accessor description modules in an accessor list (accessors) of the scene description document by the display engine (including: obtaining the accessor description module corresponding to the target accessor used to access the decoded data of the target media file from the accessor list of the scene description document).

S1712, obtaining the description information of each accessor according to the accessor description module corresponding to each accessor by the display engine (including: obtaining the description information of the target accessor used to access the decoded data of the target media file according to the accessor description module corresponding to the target accessor).

In some embodiments, the description information of the accessor may include at least one of the following:
the bufferview accessed by the accessor, the data type of data accessed by the accessor, the type of the accessor, the count of data accessed by the accessor, whether it is an MPEG time-varying accessor, the bufferview accessed by the time-varying accessor, and whether the accessor parameters change over time.

In some embodiments, after the above steps S1707 ~ S1712, the embodiments of the present disclosure may send the description information of each buffer, the description information of the bufferview of each buffer, and the description information of each accessor to the media access function and the buffer management module through the following scheme 1.

In some embodiments, the implementation of the scheme 1 (sending the description information of each buffer, the description information of the bufferviews of each buffer and the description information of each accessor to the media access function and the buffer management module) includes the following steps a and b:
Step a, sending the description information of each buffer, the description information of the bufferviews of each buffer and the description information of each accessor to the media access function by the display engine (including: sending the description information of the target buffer, the description information of the bufferviews of the target buffer and the description information of the target accessor to the media access function by the display engine).

Accordingly, the media access function receives the description information of each buffer, and the description information of the bufferviews of each buffer sent by the display engine (including: the media access function receives the description information of the target buffer, the description information of the bufferview of the target buffer, and the description information of the target accessor sent by the display engine).

In some embodiments, the implementation of the step a described above (sending the description information of each buffer, the description information of the bufferviews of each buffer, and the description information of each accessor to the media access function by the display engine) may be as follows: sending the description information of each buffer, the description information of the bufferviews of each buffer, and the description information of each accessor to the media access function through the media access function API by the display engine.

Accordingly, the implementation of receiving, by the media access function, the description information of each buffer sent by the display engine can be receiving the description information of each buffer sent by the display engine, the description information of the bufferviews of each buffer, and the description information of each accessor through the media access function API by the media access function.

Step b, sending the description information of each buffer, the description information of the bufferviews of each buffer, and the description information of each accessor to the buffer management module by the media access function (including: sending the description information of the target buffer, the description information of the bufferviews of the target buffer, and the description information of the target accessor to the buffer management module by the media access function).

Accordingly, the buffer management module receives the description information of each buffer, the description information of the bufferviews of each buffer, and description information of each accessor sent by the media access function (including: the buffer management module receives the description information of the target buffer, the description information of the bufferviews of the target buffer, and description information of the target accessor sent by the media access function).

In some embodiments, the implementation of the step b descrived above (sending the description information of each buffer, the description information of the bufferviews of each buffer, and the description information of each accessor to the buffer management module by the media access function) may include: sending the description information of each buffer, the description information of the bufferviews of each buffer, and the description information of each accessor to the buffer management module via the buffer API by the media access function. Accordingly, the implementation of receiving, by the buffer management module, the description information of each buffer, the description information of the bufferviews of each buffer and the description information of each accessor sent by the media access function may include: receiving, by the buffer management module, the description information of each buffer, the description information of the bufferviews of each buffer, and the description information of each accessor sent by the media access function through the buffer API.

In some embodiments, the implementation of the scheme 1 (sending the description information of each buffer, the description information of the bufferviews of each buffer, and the description information of each accessor to the media access function and the buffer management module) includes the following steps c and d:
Step c, sending the description information of each buffer, the description information of the bufferviews of each buffer, and the description information of each accessor to the media access function by the display engine (including: sending the description information of the target buffer, the description information of the bufferviews of the target buffer, and the description information of the target accessor to the media access function by the display engine).

Accordingly, the media access function receives the description information of each buffer, the description information of the bufferviews of each buffer and the description information of each accessor sent by the display engine (including: the media access function receives the description information of the target buffer, the description information of the bufferviews of the target buffer and the description information of the accessor sent by the display engine).

Step d, sending the description information of each buffer, the description information of the bufferviews of each buffer and the description information of each accessor to the buffer management module by the display engine (including: sending the description information of the target buffer, the description information of the bufferviews of the target buffer and the description information of the target accessor to the bufferview management module by the display engine).

Accordingly, the buffer management module receives the description information of each buffer, the description information of the bufferviews of each buffer, and the description information of each accessor sent by the display engine.

**In** some embodiments, the implementation of step d described above (sending the description information of each buffer, the description information of the bufferviews of each buffer and the description information of each accessor to the buffer management module by the display engine) may include: sending the description information of each buffer, the description information of the bufferviews of each buffer and the description information of each accessor to the buffer management module via the buffer API by the display engine.

Accordingly, the implementation of the buffer management module receiving the description information of each buffer, the description information of the bufferviews of each buffer and the description information of each accessor sent by the display engine may include: the buffer management module receiving the description information of each buffer, the description information of the bufferviews of each buffer and the description information of each accessor sent by the display engine via the buffer API.

In some embodiments, after the above steps S1707 ~ S1712, the embodiments of the present disclosure may send the description information of each buffer, the description information of the bufferviews of each buffer and the description information of each accessor to the media access function through the following scheme 2, and send the description information of each buffer and the description information of the bufferviews of each buffer to the buffer management module.

In some embodiments, the implementation of the scheme 2 (sending the description information of each buffer, the description information of the bufferviews of each buffer, and the description information of each accessor to the media access function, and sending the description information of each buffer and the description information of the bufferviews of each buffer to the buffer management module) includes the following steps e and f:
Step e, sending the description information of each buffer, the description information of the bufferviews of each buffer and the description information of each accessor to the media access function by the display engine (including: sending the description information of the target buffer, the description information of the bufferviews of the target buffer and the description information of the target accessor to the media access function by the display engine).

Accordingly, the media access function receives the description information of each buffer, and the description information of the bufferviews of each buffer sent by the display engine (including: receiving, by the media access function, the description information of the target buffer, the description information of the bufferview of the target buffer, and the description information of the target accessor sent by the display engine).

Step f, sending the description information of each buffer and the description information of the bufferviews of each buffer to the buffer management module by the display engine (including: sending the description information of the target buffer and the description information of the bufferviews of the target buffer to the media access function by the display engine).

Accordingly, the buffer management module receives description information of each buffer and the description information of the bufferviews of each buffer sent by the display engine (including: receiveing, by the buffer management module, the description information of the target buffer and the description information of the bufferviews of the target buffer sent by the display engine).

In some embodiments, the implementation of the scheme 2 (sending the description information of each buffer, the description information of bufferviews of each buffer and the description information of each accessor to the media access function, and sending the description information of each buffer and the description information of bufferviews of each buffer to the buffer management module) includes the following steps g and h:
Step g, sending description information of each buffer, description information of bufferviews of each buffer and description information of each accessor to the media access function by the display engine (including: sending the description information of the target buffer, the description information of the bufferviews of the target buffer, and the description information of the target accessor to the media access function by the display engine).

Accordingly, the media access function receives the description information of each buffer, and the description information of the bufferviews of each buffer sent by the display engine (including: receiving, by the media access function, the description information of the target buffer, the description information of the bufferview of the target buffer, and the description information of the target accessor sent by the display engine).

Step f, sending the description information of each buffer and the description information of the bufferviews of each buffer to the buffer management module by the media access function (including: sending the description information of the target buffer and the description information of the bufferviews of the target buffer to the buffer management module by the media access function).

Accordingly, the buffer management module receives the description information of each buffer and the description information of the bufferviews of each buffer sent by the media access function (including: receiving, by the buffer management module, the description information of the target buffer and description information of the bufferviews of the target buffer sent by the display engine).

After sending the description information of each buffer, the description information of the bufferviews of each buffer and the description information of each accessor to the media access function and the buffer management module in the above scheme 1, or sending the description information of each buffer, the description information of the bufferviews of each buffer, and the description information of each accessor to the media access function in the above scheme 2, and sending the description information of each buffer and the description information of the bufferviews of each buffer to the buffer management module, it may continue with the following steps:
S1713, establishing each buffer according to the description information of each buffer by the buffer management module (including: establishing the target buffer according to the description information of the target buffer).
S1714, dividing each buffer into the bufferviews according to the description information of the bufferviews of each buffer by the buffer management module (including: dividing the target buffer into bufferviews according to the description information of the bufferviews of the target buffer).
S1715, writing the decoded data corresponding to each media file into the buffer corresponding to each media file according to the description information of each buffer, the description information of the bufferviews of each buffer and the description information of each accessor by the media access function (including: writing the decoded data of the target media file into the target buffer according to the description information of the target buffer, the description information of the bufferviews of the target buffer and the description information of the target accessor by the media access function).

It means that the media access function can write the decoded data corresponding to the media file into the buffer in the correct arrangement according to the buffer capacity in the description information of the buffer, the bufferview capacity in the description information of the bufferviews of the buffer, the accessor type in the description information of the accessor, the data type in the description information of the accessor, and other information.

S1716, obtaining the scene description module corresponding to the three-dimensional scene to be rendered from the scene list of the scene description document by the display engine.

S1717, obtaining the description information of the three-dimensional scene to be rendered according to the scene description module corresponding to the three-dimensional scene to be rendered by the display engine.

The description information of the three-dimensional scene to be rendered includes an index value of the node description module corresponding to each node in the three-dimensional scene to be rendered.

S1718, obtaining the node description module corresponding to the each node in the three-dimensional scene to be rendered from the node list of the scene description document according to the index value of the node description module corresponding to each node in the three-dimensional scene to be rendered by the display engine.

S1719, obtaining the description information of each node in the three-dimensional scene to be rendered according to the node description module corresponding to each node in the three-dimensional scene to be rendered by the display engine.

The description information of any node includes the index value of the mesh description module corresponding to the three-dimensional mesh mounted on the node.

In some embodiments, the description information of any node further includes the name of the node.

S1720, obtaining the mesh description module corresponding to the three-dimensional mesh in the three-dimensional scene to be rendered from the mesh list of the scene description document according to the index value of the mesh description module corresponding to the three-dimensional mesh mounted on respective node in the three-dimensional scene to be rendered by the display engine.

S1721, obtaining data kinds contained in the three-dimensional mesh in the three-dimensional scene to be rendered and an accessor used to access various types of data of each three-dimensional mesh in the three-dimensional scene to be rendered according to the mesh description module corresponding to the three-dimensional mesh in the three-dimensional scene to be rendered by the display engine.

In some embodiments, the method further includes obtaining a name of the three-dimensional mesh and the topology type in the three-dimensional scene to be rendered according to the mesh description module corresponding to the three-dimensional mesh in the three-dimensional scene to be rendered.

S1722, establishing each accessor according to the description information of respective accessor by the display engine (including establishing the accessor used to access the various types of data of each three-dimensional mesh in the three-dimensional scene to be rendered according to the description information of the accessor used to access the various types of data of each three-dimensional mesh in the three-dimensional scene to be rendered).

S1723, reading the decoded data of each media file from the buffer corresponding to each media file through each accessor by the display engine (including: reading the various types of data of each three-dimensional mesh in the three-dimensional scene to be rendered from the target buffer storage through the accessor used to access the various types of data of each three-dimensional mesh in the three-dimensional scene to be rendered).

S1724, rendering the three-dimensional scene to be rendered based on the decoded data of each media file by the display engine.

In some embodiments, some embodiments of the present disclosure provide an apparatusfor generating a scene description document, including:
a memory configured to store a computer program; and
a processor, configured to enable the apparatus for generating the scene description document to implement the method for generating the scene description document according to any one of the above embodiments when a computer program is called.

In some embodiments, some embodiments of the present disclosure provide a non-volatile computer-readable storage medium storing a, when executed by a computing device, the computer program causes the computing device to implement the method for generating the scene description document according to any one of the above embodiments.

In some embodiments, some embodiments of the present disclosure provide a computer program product. When running on a computer, the computer program product causes the computer to implement the method for generating the scene description document according to any one of the above embodiments.

Finally, it should be noted that the above embodiments are only used to illustrate the technical solutions of the present disclosure, not to limit them; although the present disclosure has been described in detail with reference to the foregoing embodiments, a person of ordinary skill in the art should understand that it is still possible to make modifications to the technical solutions recorded in the foregoing embodiments, or make equivalent substitutions for some or all of the technical features therein; and these modifications or substitutions, however, do not take the essence of the corresponding technical solutions out of the scope of the technical solutions of the present disclosure. does not take the essence of the corresponding technical solutions out of the scope of the technical solutions of the embodiments of the present disclosure.

For the convenience of explanation, the above description has been made in connection with specific embodiments. However, the above exemplary discussion is not intended to be exhaustive or to limit the embodiments to the specific forms disclosed above. A variety of modifications and deformations can be obtained in accordance with the above teachings. The above embodiments have been selected and described for the purpose of better explaining the principles as well as the practical applications, thereby enabling those skilled in the art to make better use of the described embodiments as well as the various different deformations of the embodiments suitable for specific use considerations.

## Claims

1. A method for generating scene description document, **characterized by** comprising:
determining a type of a media file in a three-dimensional scene to be rendered;
when a type of a target media file in the three-dimensional scene to be rendered is a Geometry-based Point Cloud Compression (G-PCC) encoded point cloud, generating a target media description module corresponding to the target media file based on description information of the target media file; and
adding the target media description module into a media list of MPEG media of the scene description document in the three-dimensional scene to be rendered.

2. The method according to claim 1, wherein generating the target media description module corresponding to the target media file based on the description information of the target media file comprises:
adding a media type syntax element in alternatives of the target media description module and setting the value of the media type syntax element to the encapsulation format value corresponding to the G-PCC encoded point cloud.

3. The method according to claim 1, wherein generating the target media description module corresponding to the target media file based on the description information of the target media file comprises:
adding a first track index syntax element to a tracks array of alternatives of the target media description module, and setting a value of the first track index syntax element according to the encapsulation of the target media file.

4. The method according to claim 3, wherein setting the value of the first track index syntax element according to the encapsulation of the target media file comprises:When the target media file is a single track encapsulation file, setting the value of the first track index syntax element to an index value of a bitstream track of the target media file;
when the target media file is a multi-track encapsulation file, setting the value of the first track index syntax element to an index value of a geometric bitstream track of the target media file.

5. The method according to claim 1, wherein generating the target media description module corresponding to the target media file based on the description information of the target media file comprises:
adding a codec parameters syntax element to a tracks array of alternatives of the target media description module, and setting a value of the codec parameter syntax element according to encoding parameters of the target target media file, the types of the bitstream of the target media file and the ISO/IEC 23090-18 G-PCC data transport standard.

6. The method according to claim 1, wherein generating the target media description module corresponding to the target media file based on the description information of the target media file comprises:
adding an uniform resource identifier syntax element to the alternatives of the target media description module, and setting the value of the uniform resource identifier syntax element as access address of the target media file.

7. The method according to claim 1, wherein the method further comprises:
adding the target scene description module corresponding to the three-dimensional scene to be rendered in a scene list of the scene description document;
adding an index value of a node description module corresponding to a node in the three-dimensional scene to be rendered to a node list of the target scene description module.

8. The method according to claim 1, wherein the method further comprises:
adding a node description module corresponding to a node in the three-dimensional scene to be rendered to a node list of the scene description document;
adding an index value of a mesh description module corresponding to a three-dimensional mesh mounted by the node to a mesh index list of the node description module.

9. The method according to claim 1, wherein the method further comprises:
adding a mesh description module corresponding to a three-dimensional mesh in the three-dimensional scene to be rendered to a mesh list of the scene description document;
adding a syntax element corresponding to various types of data contained in the three-dimensional mesh corresponding to the mesh description module to the mesh description module;
setting the value of the syntax element corresponding to various types of data to an index value of an accessor description module corresponding to an accessor for accessing various types of data.

10. The method according to claim 9, wherein adding the syntax element corresponding to various types of data contained in the three-dimensional mesh corresponding to the mesh description module to the mesh description module comprises:
adding an extension list to primitives of the mesh description module corresponding to the three-dimensional mesh in the target media file;
adding a target extension array to the extension list;
adding the syntax elements corresponding to various types of data contained in the three-dimensional mesh to the target extension array.

11. The method according to claim 9, wherein adding the syntax element corresponding to various types of data contained in the three-dimensional mesh corresponding to the mesh description module to the mesh description module comprises:
adding the syntax elements corresponding to various types of data contained in the three-dimensional mesh corresponding to the mesh description module to the target extension array to attributes of the primitives of the mesh description module.

12. The method according to claim 11, wherein adding the syntax elements corresponding to various types of data contained in the three-dimensional mesh corresponding to the mesh description module to the target extension array to attributes of the primitives of the mesh description module comprises:
adding the syntax elements corresponding to various types of data contained in the three-dimensional mesh to a first mesh description module based on syntax elements in the first syntax element set, wherein the first mesh description module is a mesh description module corresponding to a three-dimensional mesh in a media file with a type of G-PCC encoded point cloud;
adding the syntax elements corresponding to various types of data contained in the three-dimensional mesh to a second mesh description module based on syntax elements in the second syntax element set, wherein the second mesh description module is not a mesh description module corresponding to a three-dimensional mesh in a media file with a type of G-PCC encoded point cloud.

13. The method according to claim 1, wherein the method further comprises:
adding an accessor description module corresponding to a target accessor to the accessor list of the scene description document;
wherein the target accessor is an accessor for accessing decoded data of the target media file.

14. The method according to claim 13, wherein adding the accessor description module corresponding to the target accessor to the accessor list of the scene description document comprises at least one of the following:
adding a data type syntax element to the accessor description module corresponding to the target accessor, and setting a value of the data type syntax element based on the type of data accessed by the target accessor;
adding an accessor type syntax element to the accessor description module corresponding to the target accessor, and setting a value of the accessor type syntax element based on a type of the target accessor;
adding a data count syntax element to the accessor description module corresponding to the target accessor, and setting a value of the data count syntax element based on count of the data accessed by the target accessor;
adding an MPEG time-varying accessor to the accessor description module corresponding to the target accessor;
adding a bufferview index syntax element to the MPEG time-varying accessor, and setting a value of the bufferview index syntax element based on an index value of a bufferview description module corresponding to the bufferview storing data accessed by the target accessor;
adding a time-varying syntax element to the MPEG time-varying accessor, and setting a value of the time-varying syntax element based on whether values of the syntax elements in the target accessor change over time.

15. The method according to claim 1, wherein the method further comprises:
adding a buffer description module corresponding to a target buffer to a buffer list of the scene description document;
wherein the target buffer is a buffer storing decoded data of the target media file.

16. The method according to claim 15, wherein adding a buffer description module corresponding to a target buffer to a buffer list of the scene description document comprises:
adding a byte length syntax element to the buffer description module, and setting a value of the byte length syntax element based on the capacity of the target buffer;
adding an MPEG circular buffer to the buffer description module;
adding a link count syntax elements to the MPEG circular buffer, and setting a value of the link count syntax elements based on a number of storage links of the target buffer;
adding a media index syntax element to the MPEG circular buffer, and setting a value of the media index syntax element based on an index value of the target media description module;
adding a second track index syntax element to the MPEG circular buffer, and setting a value of the second track index syntax element based on a track index value of source data of the data stored in the target buffer.

17. The method according to claim 15, wherein the method further comprises:
adding a bufferview description module corresponding to bufferview of the target buffer to the buffer list of the scene description document.

18. The method according to claim 17, wherein adding the bufferview description module corresponding to bufferview of the target buffer to the buffer list of the scene description document comprises:
adding a buffer index syntax element to the bufferview description module corresponding to the bufferview of the target buffer, and setting a value of the buffer index syntax element based on an index value of the buffer description module corresponding to the target buffer to which the bufferview belongs;
adding a second byte length syntax element to the bufferview description module corresponding to the bufferview of the target buffer, and setting a value of the second byte length syntax element based on a capacity of the bufferview;
adding an offset syntax element to the bufferview description module corresponding to the bufferview of the target buffer, and setting a value of the offset syntax element based on the offset of the stored data of the bufferview.

19. An apparatus for generating a scene description document, **characterized by** comprising:
a memory configured to store computer program;
a processor configured to enable the apparatus for generating the scene description document, when calling the computer program, to execute the method for generating the scene description document according to the claims 1-18.

20. A method for parsing a scene description document, **characterized by** comprising:
obtaining the scene description document of a three-dimensional scene to be rendered, wherein the three-dimensional scene to be rendered comprises a target media file with type of G-PCC encoded point cloud;
obtaining a target media description module corresponding to the target media file from a media list of Moving Picture Expert Group (MPEG) media of the scene description document;
obtaining description information of the target media file according to the target media description module.

21. The method according to the claim 20, wherein obtaining description information of the target media file according to the target media description module comprises at least one of the following:
obtaining a name of the target media file according to a value of a media name syntax element in the target media description module;
determining whether the target media file needs to be autoplayed based on a value of an autoplay syntax element in the target media description module;
determining whether the target media file needs to be played in a loop based on a value of a loop syntax element in the target media description module;
obtaining an encapsulation format of the target media file based on a value of a media type syntax element in alternatives of the target media description module;
obtaining an access address of the target media file based on a value of a unique address identifier syntax element in alternatives of the target media description module;
obtaining track information of the target media file according to a value of a first track index syntax element in a tracks array of alternatives of the target media description module;
determining a type and decoding parameters of a bitstream of the target media file according to the values of the codecs syntax element in the tracks array of the alternatives of the target media description module and the ISO/IEC 23090-18 G-PCC data transport standard.

22. The method according to claim 20, wherein the method further comprises:
obtaining a target scene description module corresponding to the three-dimensional scene to be rendered from a scene list of the scene description module;
obtaining description information of the three-dimensional scene to be rendered based on the target scene description module.

23. The method according to claim 22, wherein obtaining description information of the three-dimensional scene to be rendered based on the target scene description module comprises:
determining an index value of a node description module corresponding to each node in the three-dimensional scene to be rendered according to an index value stated by a node index list of the target scene description module.

24. The method according to claim 23, wherein after determining an index value of a node description module corresponding to each node in the three-dimensional scene to be rendered according to an index value stated by a node index list of the target scene description module, the method further comprises:
obtaining node description module corresponding to each node of the three-dimensional scene to be rendered from a node list of the scene description document according to an index value of the node description module corresponding to each node of the three-dimensional scene to be rendered;
obtaining description information of each node of the three-dimensional scene to be rendered according to the node description module corresponding to each node of the three-dimensional scene to be rendered.

25. The method according to claim 24, wherein obtaining description information of each node of the three-dimensional scene to be rendered according to the node description module corresponding to each node of the three-dimensional scene to be rendered comprises at least one of following:
obtaining a name of each node in the three-dimensional scene to be rendered according to a value of a node name syntax element in the node description module corresponding to each node in the three-dimensional scene to be rendered;
determining an index value of a mesh description module corresponding to a three-dimensional mesh mounted on each node of the three-dimensional scene to be rendered according to an index value stated in a mesh index list of the node description module corresponding to each node in the three-dimensional scene to be rendered.

26. The method according to claim 25, wherein after determining an index value of a mesh description module corresponding to a three-dimensional mesh mounted on each node of the three-dimensional scene to be rendered, the method further comprises:
obtaining the mesh description module corresponding to the three-dimensional mesh mounted on each node in the three-dimensional scene to be rendered from a mesh list of the scene description document according to the index value of the mesh description module corresponding to the three-dimensional mesh mounted on each node in the three-dimensional scene to be rendered;
obtaining description information of the three-dimensional mesh mounted on each node in the three-dimensional scene to be rendered according to the mesh description module corresponding to the three-dimensional mesh mounted on each node in the three-dimensional scene to be rendered.

27. The method according to claim 26, wherein obtaining description information of the three-dimensional mesh mounted on each node in the three-dimensional scene to be rendered according to the mesh description module corresponding to the three-dimensional mesh mounted on each node in the three-dimensional scene to be rendered comprises at least one of following:
obtaining a name of the three-dimensional mesh according to a mesh name syntax element in the mesh description module corresponding to the three-dimensional mesh;
obtaining data types included in the three-dimensional mesh according to a data type syntax element in the mesh description module corresponding to the three-dimensional mesh;
obtaining an index value of an accessor description module corresponding to an accessor for accessing the data types of data of the three-dimensional mesh according to the value of the data type syntax element;
obtaining a type of a topology of the three-dimensional mesh according to a value of a mode syntax element in the mesh description module corresponding to the three-dimensional mesh.

28. The method according to claim 27, wherein after obtaining the index value of the accessor description module corresponding to the accessor for accessing data with the data type of the three-dimensional mesh according to the value of the data type syntax element, the method further comprises:
obtaining, from an accessor list of the scene description document, the accessor description module corresponding to the accessor for accessing the data types of data of the three-dimensional mesh according to the index of the accessor description module corresponding to the accessor for accessing the data type of the three-dimensional mesh;
obtaining, according to the accessor description module corresponding to the accessor for accessing the data types of data of the three-dimensional mesh, description information of the accessor for accessing the data types of data of the three-dimensional mesh.

29. The method according to claim 20, wherein the method further comprises:
obtaining each buffer description module in a buffer list of the scene description document;
obtaining a value of a media index syntax element of each buffer description module;
determining a buffer description module whose value of the media index syntax element is the same as the index value of the target media description module as the target buffer description module corresponding to the target buffer for buffering decoded data of the target media file;
obtaining description information of the target buffer according to the target buffer description module.

30. The method according to claim 29, wherein obtaining description information of the target buffer according to the target buffer description module comprises at least one of following:
obtaining a capacity of the target buffer according to a value of the first byte length syntax element in the target buffer description module;
determining whether the target buffer is a circular buffer extended and modified based on MPEG extension according to whether the target buffer description module includes an MPEG circular buffer;
obtaining a count of storage links of the MPEG circular buffer according to a value of a link count syntax elements in the MPEG circular buffer of the target buffer description module;
obtaining a track index value of source data of the data buffered by the MPEG circular buffer according to a value of a second track index syntax elements in the MPEG circular buffer of the target buffer description module.

31. The method according to claim 29, wherein the method further comprises:
obtaining each bufferview description module in a bufferview list of the scene description document;
obtaining each value of a buffer index syntax element in each bufferview description module;
determining a bufferview description module whose value of the buffer index syntax element is the same as the index value of the target buffer description module as a bufferview description module corresponding to the bufferview of the target buffer;
obtaining description information of the bufferview of the target buffer according to the bufferview description module corresponding to the bufferview of the target buffer.

32. The method according to claim 31, wherein obtaining description information of the bufferview of the target buffer according to the bufferview description module corresponding to the bufferview of the target buffer comprises:
obtaining a capacity of the bufferview of the target buffer according to a value of a second byte length syntax element in the bufferview description module corresponding to the bufferview of the target buffer;
obtaining an offset of the bufferview of the target buffer according to a value of an offset syntax element in the bufferview description module corresponding to the bufferview of the target buffer.

33. The method according to claim 31, wherein the method further comprises:
obtaining each accessor description module in an accessor list of the scene description document;
obtaining each value of a bufferview index syntax element in each accessor description module;
determining the accessor description module with a value of the bufferview index syntax element being the same as an index value of the bufferview description module corresponding to the bufferview of the target buffer as the accessor description module corresponding to an accessor for accessing the data in the bufferview of the target buffer;
obtaining description information of the accessor for accessing data in the bufferview of the target buffer according to the accessor description module corresponding to the accessor for accessing data in the bufferview of the target buffer.

34. The method according to 28 or 33, wherein the method further comprises:
determining a type of data accessed by the accessor according to the value of the data type syntax element in the accessor description module;
determining a type of the accessor based on a value of an accessor type syntax element in the accessor description module;
determining a count of data accessed by the accessor according to a value of a data count syntax element in the accessor description module;
determining whether the accessor is a time-varying accessor modified based on an MPEG extension according to whether the accessor description module includes the MPEG time-varying accessor;
determining an index value of the bufferview description module corresponding to the bufferview of the data accessed by the target accessor according to a value of a bufferview index syntax element in the MPEG time-varying accessor of the accessor description module;
determining whether a value of the syntax element in the accessor changes over time according to a value of the time-varying syntax element in the MPEG time-varying accessor of the accessor description module.

35. An apparatus for parsing a scene description document, **characterized by** comprising:
a memory configured to store computer program;
a processor configured to enable the apparatus for parsing the scene description document, when calling the computer program, to execute the method for parsing the scene description document according to the claims 20-34.

36. A method for rending a three-dimensional scene, **characterized by** comprising:
obtaining a scene description document of the three-dimensional scene to be rendered, wherein the three-dimensional scene to be rendered comprises a target media file with a type of Geometry-based Point Cloud Compression G-PCC encoded point cloud;
obtaining description information of the target media file according to a media description module corresponding to the target media file in a media list of Moving Picture Expert Group (MPEG) media of the scene description document;
sending the description information of the target media file to a media access function for enabling the media access function obtaining the target media file according to the description information of the target media file, obtaining decoded data of the target media file by processing the target media file, and writing the decoded data of the target media file into a target buffer;
reading the decoded data of the target media file from the target buffer;
rendering the three-dimensional scene to be rendered based on the decoded data of the target media file.

37. The method according to claim 36, wherein sending the description information of the target media file to the media access function comprising:
sending the description information of the target media file to the media access function through a media access function application program interface (API).

38. The method according to claim 36, wherein prior to reading the decoded data of the target media file from the target buffer, the method further comprises:
obtaining a buffer description module corresponding to the target buffer from a buffer list of the scene description document;
obtaining description information of the target buffer according to the buffer description module corresponding to the target buffer;
obtaining a bufferview description module corresponding to a bufferview of the target buffer from a bufferview list of the scene description module;
obtaining description information of the bufferview of the target buffer according to the bufferview description module corresponding to the bufferview of the target buffer;
sending the description information of the target buffer and the description information of the bufferview of the target buffer to a buffer management module for enabling the buffer management module diving the target buffer to bufferviews according to the description information of the bufferview of the target buffer.

39. The method according to claim 38, wherein sending the description information of the target buffer and the description information of the bufferview of the target buffer to the buffer management module comprises:
sending the description information of the target buffer and the description information of the bufferview of the target buffer to the buffer management module through buffer API.

40. The method according to claim 39, wherein before prior to reading the decoded data of the target media file from the target buffer, the method further comprises:
sending the description information of the target buffer and the description information of the bufferview of the target buffer to the media access function for enabling the media access function writing the decoded data of the target media file to the target buffer according to the description information of the target buffer and the description information of the bufferview of the target buffer.

41. The method according to claim 40, wherein sending the description information of the target buffer and the description information of the bufferview of the target buffer to the media access function comprises:
sending the description information of the target buffer and the description information of the bufferview of the target buffer to the media access function through media access function API.

42. The method according to claim 38, wherein sending the description information of the target buffer and the description information of the bufferview of the target buffer to the buffer management module comprises:
sending the description information of the target buffer and the description information of the bufferview of the target buffer to the media access function through media access function API for enabling the media access function forwarding the description information of the target buffer and the description information of the bufferview of the target buffer to the buffer management module.

43. The method according to claim 38, wherein before prior to reading the decoded data of the target media file from the target buffer, the method further comprises:
obtaining an accessor description module corresponding to a target accessor from an accessor list of the scene description document, wherein the target accessor is an accessor used for accessing the decoded data of the target media file;
obtaining description information of the target accessor according to the accessor description module corresponding to the target accessor;
sending the description information of the target accessor to the media access function for enabling the media access function writing the decoded data of the target media file into the target buffer according to the description information of the target accessor.

44. The method according to any one of claims 36-43, wherein reading the decoded data of the target media file from the target buffer comprises:
reading various types of data of each three-dimensional mesh of the three-dimensional scene to be rendered from the decoded data of the target media file stored in the target buffer via the accessor used for access the various types of data of each three-dimensional mesh of the three-dimensional scene to be rendered.

45. The method according to claim 44, wherein prior to reading various types of data of each three-dimensional mesh of the three-dimensional scene to be rendered from the decoded data of the target media file stored in the target buffer via the accessor used for access the various types of data of each three-dimensional mesh of the three-dimensional scene to be rendered, the method further comprises:
obtaining a mesh description module corresponding to each three-dimensional mesh of the three-dimensional scene to be rendered from a mesh list of the scene description document according to an index value of the mesh description module corresponding to three-dimensional mesh mounted on each node of the three-dimensional scene to be rendered;
obtaining types of data contained in each three-dimensional mesh of the three-dimensional scene to be rendered and accessors for accessing various types of data of each three-dimensional mesh of the three-dimensional scene to be rendered according to the mesh description module corresponding to each three-dimensional mesh of the three-dimensional scene to be rendered.

46. The method according to claim 45, wherein prior to obtaining a mesh description module corresponding to each three-dimensional mesh of the three-dimensional scene to be rendered from a mesh list of the scene description document according to an index value of the mesh description module corresponding to three-dimensional mesh mounted on each node of the three-dimensional scene to be rendered, the method further comprises:
obtaining a node description module corresponding to each node of the three-dimensional scene to be rendered from a node list of the scene description document according to an index value of the node description corresponding to each node of the three-dimensional scene to be rendered;
obtaining description information of each node of the three-dimensional scene to be rendered according to the node description module corresponding to each node of the three-dimensional scene to be rendered, wherein the description information of each node comprises an index value of a mesh description module corresponding to a three-dimensional mesh mounted on the node.

47. The method according to claim 46, wherein prior to obtaining a node description module corresponding to each node of the three-dimensional scene to be rendered from a node list of the scene description document according to an index value of the node description corresponding to each node of the three-dimensional scene to be rendered, the method further comprises:
obtaining a scene description module corresponding to the three-dimensional scene to be rendered from a scene list of the scene description document;
obtaining description information of the three-dimensional scene to be rendered according to the scene description module corresponding to the three-dimensional scene to be rendered, wherein the description information of the three-dimensional scene to be rendered comprises an index value of the node description module corresponding to each node of the three-dimensional scene to be rendered.

48. The method according to claim 47, wherein the description information of any one three-dimensional mesh further comprises an index value of the accessor description module corresponding to the accessor used for accessing various types of data of the three-dimensional mesh, obtaining accessors for accessing various types of data of each three-dimensional mesh of the three-dimensional scene to be rendered according to the mesh description module corresponding to each three-dimensional mesh of the three-dimensional scene to be rendered comprises:
obtaining an accessor description module corresponding to the accessors for accessing various types of data of each three-dimensional mesh of the three-dimensional scene to be rendered from an accessor list of the scene description document according an index value of the accessor description module corresponding to the accessors for accessing various types of data of each three-dimensional mesh of the three-dimensional scene to be rendered;
obtaining description information of the accessors for accessing various types of data of each three-dimensional mesh of the three-dimensional scene to be rendered according to the accessor description module corresponding to the accessors for accessing various types of data of each three-dimensional mesh of the three-dimensional scene to be rendered;
establishing asscessors for accessing various types of data of each three-dimensional mesh of the three-dimensional scene to be rendered according to the description information of the accessors for accessing various types of data of each three-dimensional mesh of the three-dimensional scene to be rendered.

49. An apparatus for rendering the three-dimensional scene, **characterized by** comprising:
a memory configured to store computer program;
a processor configured to enable the apparatus for rendering the three-dimensional scene, when calling the computer program, to execute the method for rendering the three-dimensional scene according to the claims 36-48.
